# EUROPEAN PATENT APPLICATION

(11) **EP 3 028 573 A1**
(43) Date of publication of application: **08.06.2016**
(21) Application number: 15197557.0
(22) Date of filing: 02.12.2015
(51) Int. Cl.: A01N 43/653, A01P 3/00

(54) **USE OF A TRIAZOLE FUNGICIDE ON TRANSGENIC PLANTS**

(30) Priority: 05.12.2014 EP 14196603; 09.12.2014 EP 14197002
(71) Applicant: BASF SE, 67056 Ludwigshafen am Rhein (DE)
(72) Inventor: Menges, Frederik, 69198 Schriesheim (DE); Brahm, Lutz, 67551 Worms (DE); Semar, Martin, Gleiszellen-Gleishorbach (DE); Daeschner, Klaus, 67487 Maikammer (DE)
(74) Representative: BASF IP Association

(57) **Abstract**

The present invention relates to a method for controlling pests and/or increasing the plant health in cultivated plants comprising the application of a triazole fungicide to the plant with at least one modification, parts of such plants, plant propagation materials, or at their locus of growth, wherein the triazole fungicide is selected from the group consisting of I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, 1-27, 1-28, 1-29, 1-30 and 1-31.

## Description

The present invention relates to a method for controlling pests and/or increasing the plant health in cultivated plants comprising the application of a triazole fungicide to the plant with at least one modification, parts of such plants, plant propagation materials, or at their locus of growth, wherein the triazole fungicide is selected from the group consisting of I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 and I-31.

One typical problem arising in the field of pest control lies in the need to reduce the dosage rates of the active ingredient in order to reduce or avoid unfavorable environmental or toxicological effects whilst still allowing effective pest control.

Another problem underlying the present invention is the desire for compositions that improve plants, a process which is commonly and hereinafter referred to as "plant health".

It was therefore an object of the present invention to provide a method, which solves the problems of reducing the dosage rate and/or promoting the health of plants.

Surprisingly, it has now been found that the use of the triazole fungicides as defined above in cultivated plants has a synergistic effect.

Especially, it has been found that application of the triazole fungicide as defined above on cultivated plants leads to synergistically enhanced action against harmful fungi compared to the control rates that are possible with the triazole fungicide as defined above in non-cultivated plants and/or leads to an synergistic increase in the health of plants when applied to cultivated plants, parts of such plants, plant propagation materials, or at their locus of growth.

Thus, the present invention relates to a method of controlling harmful fungi and/or increasing the health of cultivated plants by treating cultivated plants, parts of such plants, plant propagation materials, or at their locus of growth with a triazole fungicide selected from I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 and I-31.

The triazole fungicides are known as fungicides. The components I can be obtained by various routes in analogy to prior art processes known (cf. J.Agric. Food Chem. (2009) 57, 4854-4860; EP 0 275 955 A1; DE 40 03 180 A1; EP 0 113 640 A2; EP 0 126 430 A2). Furthermore, the components I, their preparation and use in crop protection are described in WO 2013/007767 (PCT/EP2012/063626), WO 2013/024076 (PCT/EP2012/065835), WO 2013/024075 (PCT/EP2012/065834), ), WO 2013/024077 (PCT/EP2012/065836), WO 2013/024081 (PCT/EP2012/065848), WO 2013/024080 (PCT/EP2012/065847), WO 2013/024083 (PCT/EP2012/065852) WO 2013/010862 (PCT/EP2012/063526), WO 2013/010894 (PCT/EP2012/063635), WO 2013/010885 (PCT/EP2012/063620), WO 2013/024082 (PCT/EP2012/065850), which also disclose certain compositions with other active compounds. Owing to the basic character of their nitrogen atoms, compounds I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 and I-31, are capable of forming salts or adducts with inorganic or organic acids or with metal ions, in particular salts with inorganic acids or N-oxides.

Compounds I-1 to I-31 used as the triazole in the inventive compositions are the following fungicidal compounds:

| | |
|---|---|
| compound I-1 | 2-[2-chloro-4-(4-chlorophenoxy)phenyl]-1-(1,2,4-triazol-1-yl)pent-3-yn-2-ol; |
| compound I-2 | 1-[2-chloro-4-(4-chlorophenoxy)phenyl]-1-cyclopropyl-2-(1,2,4-triazol-1-yl)ethanol; |
| compound I-3 | 2-[4-(4-chlorophenoxy)-2-(trifluoromethyl)phenyl]-1-(1,2,4-triazol-1-yl)propan-2-ol; |
| compound I-4 | 1-[4-(4-chlorophenoxy)-2-(trifluoromethyl)phenyl]-1-cyclopropyl-2-(1,2,4-triazol-1-yl)ethanol; |
| compound I-5 | 2-[4-(4-chlorophenoxy)-2-(trifluoromethyl)phenyl]-3-methyl-1-(1,2,4-triazol-1-yl)butan-2-ol; |
| compound I-6 | 1-[2-[2-chloro-4-(4-chlorophenoxy)phenyl]-2-methoxy-pent-3-ynyl]-1,2,4-triazole; |
| compound I-7 | 2-[4-(4-chlorophenoxy)-2-(trifluoromethyl)phenyl]-1-(1,2,4-triazol-1-yl)butan-2-ol; |
| compound I-8 | 1-[2-[2-chloro-4-(4-chlorophenoxy)phenyl]-2-cyclopropyl-2-methoxy-ethyl]-1,2,4-triazole; |
| compound I-9 | 1-[2-[4-(4-chlorophenoxy)-2-(trifluoromethyl)phenyl]-2-methoxy-propyl]-1,2,4-triazole; |
| compound I-10 | 2-[2-chloro-4-(4-chlorophenoxy)phenyl]-3,3-dimethyl-1-(1,2,4-triazol-1-yl)butan-2-ol, |
| compound I-11 | 1-[2-[4-(4-chlorophenoxy)-2-(trifluoromethyl)phenyl]-2-cyclopropyl-2-methoxy-ethyl]-1,2,4-triazole; |
| compound I-12 | 2-[2-trifluoromethyl-4-(4-chlorophenoxy)phenyl]-1-methoxy-3-(1,2,4-triazol-1-yl)propan-2-ol; |
| compound I-13 | 1-[2-[4-(4-chlorophenoxy)-2-(trifluoromethyl)phenyl]-2-methoxy-butyl]1,2,4-triazole; |
| compound I-14 | 2-[4-(4-chlorophenoxy)-2-(trifluoromethyl)phenyl]-1-(1,2,4-triazol-1-yl)pent-3-yn-2-ol; |
| compound I-15 | 1-[2-[4-(4-chlorophenoxy)-2-(trifluoromethyl)phenyl]-2-methoxy-pent-3-ynyl]-1,2,4-triazole; |
| compound I-16 | 2-[4-(4-chlorophenoxy)-2-(trifluoromethyl)phenyl]-1-(1,2,4-triazol-1-yl)but-3-yn-2-ol; |
| compound I-17 | 2-[2-chloro-4-(4-chlorophenoxy)phenyl]-1-(1,2,4-triazol-1-yl)propan-2-ol; |
| compound I-18 | 2-[2-chloro-4-(4-fluorophenoxy)phenyl]-1-(1,2,4-triazol-1-yl)propan-2-ol; |
| compound I-19 | 2-[2-chloro-4-(4-chlorophenoxy)phenyl]-3-methyl-1-(1,2,4-triazol-1-yl)butan-2-ol; |
| compound I-20 | 1-[2-[2-chloro-4-(4-chlorophenoxy)phenyl]-2-methoxy-propyl]-1,2,4-triazole; |
| compound I-21 | 1-[2-[2-chloro-4-(4-chlorophenoxy)phenyl]-2-methoxy-butyl]-1,2,4-triazole; |
| compound I-22 | 1-[2-[2-chloro-4-(4-chlorophenoxy)phenyl]-2-methoxy-pentyl]-1,2,4-triazole; |
| compound I-23 | 2-[2-chloro-4-(4-chlorophenoxy)phenyl]-1,1,1-trifluoro-3-(1,2,4-triazol-1 yl)propan-2-ol; |
| compound I-24 | 2-[2-chloro-4-(4-chlorophenoxy)phenyl]-3-fluoro-1-(1,2,4-triazol-1-yl)butan-2-ol hydrochloride; |
| compound I-25 | 2-[2-chloro-4-(4-chlorophenoxy)phenyl]-1-(1,2,4-triazol-1-yl)pent-4-yn-2-ol; |
| compound I-26 | 2-[2-chloro-4-(4-chlorophenoxy)phenyl]-1-methoxy-3-(1,2,4-triazol-1-yl)propan-2-ol; |
| compound I-27 | 2-[2-chloro-4-(4-fluorophenoxy)phenyl]-1-methoxy-3-(1,2,4-triazol-1-yl)propan-2-ol; |
| compound I-28 | 2-[4-(4-chlorophenoxy)-2-(trifluoromethyl)phenyl]-1-(1,2,4-triazol-1-yl)pentan-2-ol; |
| compound I-29 | 2-[4-(4-fluorophenoxy)-2-(trifluoromethyl)phenyl]-1-(1,2,4-triazol-1-yl)propan-2-ol; |
| compound I-30 | 2-[2-chloro-4-(4-chlorophenoxy)phenyl]-1-(1,2,4-triazol-1-yl)butan-2-ol; and |
| compound I-31 | 2-[2-chloro-4-(4-chlorophenoxy)phenyl]-1-(1,2,4-triazol-1-yl)pentan-2-ol. |

In each case, the respective N-oxide and the agriculturally acceptable salts of the compounds as further defined below are encompassed. Compounds I-1 to I-31 comprise chiral centers and they are generally obtained in the form of racemates. The R- and S-enantiomers of the compounds used as the triazole according to the invention can be separated and isolated in pure form with methods known by the skilled person, e.g. by using chiral HPLC. Suitable for use are both the enantiomers and compositions thereof. Furthermore, said compounds I-1 to I-31 can be present in different crystal modifications, which may differ in biological activity.

In particular, in each case, a racemic composition of the respective components I, namely of compound I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 or I-31, respectively, is present. Furthermore, any other proportions of the (R)-enantiomer and the (S)-enantiomer of the respective compound I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 or I-31, respectively, may be present according to the present invention. For example, the (R)-enantiomer of compound I-3 is (R)-2-[4-(4-chlorophenoxy)-2-(trifluoromethyl)phenyl]-1-(1,2,4-triazol-1-yl)propan-2-ol; the S-enantiomer of I-3 is (S)-2-[4-(4-chlorophenoxy)-2-(trifluoromethyl)phenyl]-1-(1,2,4-triazol-1-yl)propan-2-ol. This applies to the other compounds accordingly.

According to one specific embodiment, the respective compound I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 or I-31, respectively, is provided and used as (R)-enantiomer with an enantiomeric excess (e.e.) of at least 40%, for example, at least 50%, 60%, 70% or 80%, preferably at least 90%, more preferably at least 95%, yet more preferably at least 98% and most preferably at least 99%. According to a further specific embodiment, the respective compound I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 or I-31, respectively, is provided and used as (S)-enantiomer with an enantiomeric excess (e.e.) of at least 40%, for example, at least 50%, 60%, 70% or 80%, preferably at least 90%, more preferably at least 95%, yet more preferably at least 98% and most preferably at least 99%.

This applies to every composition detailled herein.
According to one embodiment of the invention, the triazole is compound I-1.
According to a further embodiment of the invention, the triazole is compound I-2.
According to a further embodiment of the invention, the triazole is compound I-3.
According to still a further embodiment of the invention, the triazole is compound I-4.
According to still a further embodiment of the invention, the triazole is compound I-5.
According to still a further embodiment of the invention, the triazole is compound I-6.
According to still a further embodiment of the invention, the triazole is compound I-7.
According to still a further embodiment of the invention, the triazole is compound I-8.
According to still a further embodiment of the invention, the triazole is compound I-9.
According to still a further embodiment of the invention, the triazole is compound I-10.
According to still a further embodiment of the invention, the triazole is compound I-11.
According to still a further embodiment of the invention, the triazole is compound I-12.
According to still a further embodiment of the invention, the triazole is compound I-13.
According to still a further embodiment of the invention, the triazole is compound I-14.
According to still a further embodiment of the invention, the triazole is compound I-15.
According to still a further embodiment of the invention, the triazole is compound I-16.
According to one further embodiment of the invention, the triazole is compound I-17.
According to still a further embodiment of the invention, the triazole is compound I-18.
According to still a further embodiment of the invention, the triazole is compound I-19.
According to still a further embodiment of the invention, the triazole is compound I-20.
According to still a further embodiment of the invention, the triazole is compound I-21.
According to still a further embodiment of the invention, the triazole is compound I-22.
According to still a further embodiment of the invention, the triazole is compound I-23.
According to still a further embodiment of the invention, the triazole is compound I-24.
According to still a further embodiment of the invention, the triazole is compound I-25.
According to still a further embodiment of the invention, the triazole is compound I-26.
According to still a further embodiment of the invention, the triazole is compound I-27.
According to still a further embodiment of the invention, the triazole is compound I-28.
According to still a further embodiment of the invention, the triazole is compound I-29.
According to still a further embodiment of the invention, the triazole is compound I-30.
According to still a further embodiment of the invention, the triazole is compound I-31.

According to one further embodiment of the present invention, the triazole is selected from compounds I-1, I-2, I-3, I-4, I-5, I-6, I-7, I-8, I-9, I-11, I-13, I-14, I-15 and I-16. According to a more particular embodiment of the present invention, the triazole is selected from compounds I-1, I-2, I-6 and I-8. According to another more particular embodiment of the present invention, the triazole is selected from compounds I-3, I-4, I-5, I-7, I-9, I-11, I-13, I-14, I-15 and I-16. According to still a further embodiment of the present invention, the triazole is selected from compounds I-1, I-2, I-3, I-4, I-5 and I-13. According to still a further embodiment of the present invention, the triazole is selected from compounds I-1, I-4 and I-13. According to still a further embodiment of the present invention, the triazole is selected from compounds I-3 and I-5.

According to a further embodiment of the present invention, the triazole is selected from compounds I-17, I-18, I-19, I-20, I-21, I-22, I-23, I-24, I-25, I-26, I-27, I-28, I-29, I-30 and I-31.

In regard to the instant invention the term pests embraces harmful fungi. The term harmful fungi includes, but is not limited to the following genera and species:
*Albugo* spp. (white rust) on ornamentals, vegetables (e. g. *A*. *candida*) and sunflowers (e. g. *A. tragopogonis*)*; Alternaria* spp. (Alternaria leaf spot) on vegetables, rape (*A*. *brassicola* or *brassicae),* sugar beets (*A*. *tenuis*)*,* fruits, rice, soybeans, potatoes (e. g. *A*. *solani* or *A*. *alternata*), tomatoes (e. g. A. *solani* or *A*. *alternata*) and wheat; *Aphanomyces* spp. on sugar beets and vegetables; *Ascochyta* spp. on cereals and vegetables, e. g. *A*. *tritici* (anthracnose) on wheat and A. *hordei* on barley; *Bipolaris* and *Drechslera* spp. (teleomorph: *Cochliobolus* spp.), e. g. Southern leaf blight (*D. maydis*) or Northern leaf blight (*B. zeicola*) on corn, e. g. spot blotch (*B*. *sorokiniana*) on cereals and e. g. *B. oryzae* on rice and turfs; *Blumeria* (formerly *Erysiphe*) *graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broadleaved trees and evergreens, e. g. *C. ulmi* (Dutch elm disease) on elms; *Cercospora* spp. (Cercospora leaf spots) on corn (e. g. Gray leaf spot: *C. zeae-maydis*)*,* rice, sugar beets (e. g. *C*. *beticola*)*,* sugar cane, vegetables, coffee, soybeans (e. g. *C. sojina* or *C*. *kikuchii*) and rice; *Cladosporium* spp. on tomatoes (e. g. *C. fulvum:* leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus,* anamorph: *B. sorokiniana*) and rice (e. g. *C. miyabeanus,* anamorph: *H. oryzae*); *Colletotrichum* (teleomorph: *Glomerella*) spp. (anthracnose) on cotton (e. g. *C. gossypii*), corn (e. g. *C. graminicola:* Anthracnose stalk rot), soft fruits, potatoes (e. g. *C. coccodes:* black dot), beans (e. g. *C*. *lindemuthianum*) and soybeans (e. g. *C. truncatum* or C. *gloeosporioides*)*; Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri:* Black Foot Disease) and ornamentals; *Dematophora* (teleomorph: *Rosellinia*) *necatrix* (root and stem rot) on soybeans; *Diaporthe* spp., e. g. *D. phaseolorum* (damping off) on soybeans; *Drechslera* (syn. *Helminthosporium,* teleomorph: *Pyrenophora*) spp. on corn, cereals, such as barley (e. g. *D. teres,* net blotch) and wheat (e. g. *D. tritici-repentis:* tan spot), rice and turf; Esca (dieback, apoplexy) on vines, caused by *Formitiporia* (syn. *Phellinus*) *punctata, F. mediterranea, Phaeomoniella chlamydospora* (earlier *Phaeoacremonium chlamydosporum), Phaeoacremonium aleophilum* and/or *Botryosphaeria obtusa*; *Elsinoe* spp. on pome fruits (*E. pyri*), soft fruits (*E*. *veneta*: anthracnose) and vines (*E. ampelina:* anthracnose); *Entyloma oryzae* (leaf smut) on rice; *Epicoccum* spp. (black mold) on wheat; *Erysiphe* spp. (powdery mildew) on sugar beets (*E. betae*), vegetables (e. g. *E. pisi*), such as cucurbits (e. g. *E. cichoracearum*), cabbages, rape (e. g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* (f. sp. *glycines* now syn. *F. virguliforme*) and *F. tucumaniae* and *F. brasiliense* each causing sudden death syndrome on soybeans, and *F. verticillioides* on corn; *Gaeumannomyces graminis* (take-all) on cereals (e. g. wheat or barley) and corn; *Gibberella* spp. on cereals (e. g. *G. zeae)* and rice (e. g. *G. fujikuroi:* Bakanae disease); *Glomerella cingulata* on vines, pome fruits and other plants and *G. gossypii on* cotton; Grainstaining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus)* on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium) nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on wheat or *M*. *fijiensis* (black Sigatoka disease) on bananas; *Peronospora* spp. (downy mildew) on cabbage (e. g. *P. brassicae*), rape (e. g. *P. parasitica*)*,* onions (e. g. *P. destructor*), tobacco (*P*. *tabacina)* and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata:* stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola:* can and leaf spot) and soybeans (e. g. stem rot: *P. phaseoli,* teleomorph: *Diaporthe phaseolorum*)*; Physoderma maydis* (brown spots) on corn; *Phytophthora* spp. (wilt, root, leaf, fruit and stem root) on various plants, such as paprika and cucurbits (e. g. *P. capsici*)*,* soybeans (e. g. *P*. *megasperma,* syn. *P. sojae*)*,* potatoes and tomatoes (e. g. *P. infestans:* late blight) and broadleaved trees (e. g. *P. ramorum*: sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P*. *cubensis* on cucurbits or *P*. *humili* on hop; *Pseudopezicula tracheiphila* (red fire disease or ,rotbrenner', anamorph: *Phialophora*) on vines; *Puccinia* spp. (rusts) on various plants, e. g. *P*. *triticina* (brown or leaf rust), *P*. *striiformis* (stripe or yellow rust), *P*. *hordei* (dwarf rust), *P*. *graminis* (stem or black rust) or *P*. *recondita* (brown or leaf rust) on cereals, such as e. g. wheat, barley or rye, *P*. *kuehnii* (orange rust) on sugar cane and *P*. *asparagi* on asparagus; *Pyrenophora* (anamorph: *Drechslera*) *tritici-repentis* (tan spot) on wheat or *P*. *teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P*. *aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R*. *cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S*. *attenuatum* (sheath rot) on rice; *Sclerotinia* spp. (stem rot or white mold) on vegetables and field crops, such as rape, sunflowers (e. g. *S*. *sclerotiorum*) and soybeans (e. g. *S*. *rolfsii* or *S*. *sclerotiorum*); *Septoria* spp. on various plants, e. g. *S*. *glycines* (brown spot) on soybeans, *S*. *tritici* (Septoria blotch) on wheat and *S*. (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S*. *turcicum,* syn. *Helminthosporium turcicum)* and turf; *Sphacelotheca* spp. (smut) on corn, (e. g. *S*. *reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S*. *nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli*) and sugar beets (e. g. *U. betae*); *Ustilago* spp. (loose smut) on cereals (e. g. *U. nuda* and *U. avaenae*), corn (e. g. *U. maydis:* corn smut) and sugar cane; *Venturia* spp. (scab) on apples (e. g. *V*. *inaequalis*) and pears; and *Verticillium* spp. (wilt) on various plants, such as fruits and ornamentals, vines, soft fruits, vegetables and field crops, e. g. *V*. *dahliae* on strawberries, rape, potatoes and tomatoes.

The term plant health comprises various sorts of improvements of plants that are not connected to the control of pests. The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect"), quality (e. g. improved content or composition of certain ingredients) and tolerance to abiotic and/or biotic stress.The above identified indicators for the health condition of a plant may be interdependent or may result from each other.

Each listed plant health indicator selected from the groups consisting of yield, plant vigor, quality and tolerance to abiotic and/or biotic stress, is to be understood as a preferred embodiment of the present invention either each on its own or preferably in combination with each other.

According to the present invention, "increased yield" of a cultivated plant means that the yield of a product of the respective cultivated plant is increased via the application of the triazole as defined above by a measurable amount over the yield of the same product of the respective control plant produced under the same conditions and also under application of the respective triazole.

Increased yield can be characterized, among others, by the following improved properties of the cultivated plant: increased plant weight, increased plant height, increased biomass such as higher overall fresh weight (FW), increased number of flowers per plant, higher grain *and*/*or fruit* yield, more tillers or side shoots (branches), larger leaves, increased shoot growth, increased protein content, increased oil content, increased starch content, increased pigment content, increased chlorophyll content (chlorophyll content has a positive correlation with the plant's photosynthesis rate and accordingly, the higher the chlorophyll content the higher the yield of a plant).

"Grain" and "fruit" are to be understood as any cultivated plant product which is further utilized after harvesting, e.g. fruits in the proper sense, vegetables, nuts, grains, seeds, wood (e.g. in the case of silviculture plants), flowers (e.g. in the case of gardening plants, ornamentals) etc., that is anything of economic value that is produced by the plant.

According to the present invention, the yield is increased by at least 4 %, preferable by 5 to 10 %, more preferable by 10 to 20 %, or even 20 to 30 %. In general, the yield increase may even be higher.

Another indicator for the condition of the cultivated plant is the plant vigor. The plant vigor becomes manifest in several aspects such as the general visual appearance.

Improved plant vigor can be characterized, among others, by the following improved properties of the cultivated plant: improved vitality of the cultivated plant, improved plant growth, improved plant development, improved visual appearance, improved plant stand (less plant verse/lodging), improved emergence, enhanced root growth and/or more developed root system, enhanced nodulation, in particular rhizobial nodulation, bigger leaf blade, bigger size, increased plant height, increased tiller number, increased number of side shoots, increased number of flowers per plant, increased shoot growth, enhanced photosynthetic activity (e.g. based on increased stomatal conductance and/or increased CO₂ assimilation rate), enhanced pigment content-, earlier flowering, earlier fruiting, earlier and improved germination, earlier grain maturity, less non-productive tillers, less dead basal leaves, less input needed (such as fertilizers or water), greener leaves, complete maturation under shortened vegetation periods, less seeds needed, easier harvesting, faster and more uniform ripening, longer shelf-life, longer panicles, delay of senescence , stronger and/or more productive tillers, better extractability of ingredients, improved quality of seeds (for being seeded in the following seasons for seed production) and/or reduced production of ethylene and/or the inhibition of its reception by the cultivated plant.

Another indicator for the condition of the cultivated plant is the "quality" of a cultivated plant and/or its products. According to the present invention, enhanced quality means that certain plant characteristics such as the content or composition of certain ingredients are increased or improved by a measurable or noticeable amount over the same factor of the control plant produced under the same conditions. Enhanced quality can be characterized, among others, by following improved properties of the cultivated plant or its product: increased nutrient content, increased protein content, increased content of fatty acids, increased metabolite content, increased carotenoid content, increased sugar content, increased amount of essential amino acids, improved nutrient composition, improved protein composition, improved composition of fatty acids, improved metabolite composition, improved carotenoid composition, improved sugar composition, improved amino acids composition , improved or optimal fruit color, improved leaf color, higher storage capacity, higher processability of the harvested products.

Synergistic in the present context means that
a) the use of a triazole fungicide as defined above in combination with a cultivated plant exceeds the additive effect, to be expected on the harmful fungi to be controlled and thus extends the range of action of the triazole fungicide and of the active principle expressed by the cultivated plant, and/or
b) results in an increased plant health effect in such cultivated plants compared to the plant health effects that are possible with the triazole fungicide, if applied on the non-cultivated plant.

Thus, the term "synergistic", however, is to be understood in this connection as synergistic fungicidal activity and/or synergistic plant health effects.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring. Preferably, the term plant propagation material denotes seeds.

In a preferred embodiment, the present invention relates to a method of controlling harmful fungi and/or increasing the health of cultivated plants by treating plant propagation materials, preferably seeds with a triazole fungicide selected from I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 and I-31.

The present invention also comprises plant propagation material, preferably seed, of a cultivated plant treated with a triazole fungicide selected from I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 and I-31.

In another preferred embodiment, the present invention relates to a method of controlling harmful fungi and/or increasing the health of cultivated plants by treating cultivated plants, parts of such plants or at their locus of growth with a triazole fungicide selected from I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 and I-31.

The term "cultivated plants" refers to "modified plants" and "transgenic plants". "Modified plants" are those which have been modified by conventional breeding techniques. "Transgenic plants are those, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.

Preferred plants, from which "modified plants" and/or "transgenic plants" can be derived can be selected from the group consisting of cereals such as wheat, barley, rye and oat, alfalfa, apples, banana, beet, broccoli, broccoli, Brussels sprouts, cabbage, canola (rapeseed), carrot, cauliflower, cherries, chickpea, Chinese cabbage, Chinese mustard, collard, cotton, cranberries, creeping bentgrass, cucumber, eggplant, flax, grape, grapefruit, kale, kiwi, kohlrabi, maize (corn), melon, mizuna, mustard, papaya, peanut, pears, pepper, persimmons, pigeonpea, pineapple, plum, plum, potato, raspberry, rice, rutabaga, sorghum, soybean, squash, strawberries, sugar beet, sugarcane, sunflower, sweet corn, tobacco, tomato, turnip, walnut, watermelon and winter squash, more preferably from the group consisting of alfalfa, barley, canola (rapeseed), cotton, maize (corn), papaya, potato, rice, sorghum, vine, soybean, squash, sugar beet, pome fruits, tomato and wheat, most preferably from cereals (wheat, barley, rye, oat), soybean, rice, vine and fruit and vegetables such as tomato, potato and pome fruits utmost preferably from soybean and cereals such as wheat, barley, rye and oat.

The cultivated plants are plants, which comprise at least one trait. The term "trait" refers to a property, which is present in the plant either by genetic enginieering or by conventional breeding techniques. Examples of traits are
herbicide tolerance,
insecticide resistance by expression of bacterial toxins,
fungicidal resistance or viral resistance or bacterial resistance,
antibiotic resistance,
stress tolerance,
maturation alteration,
content modification of chemicals present in the cultivated plant compared to the corresponding wild-type plant,
modified nutrient uptake,
male sterility,
fungal resistance,
insect resistance,
pollination control,
yield, in particular yield increase,
stress,
quality.

Specific examples for herbicide tolerance are glyphosate tolerance, glufosinate tolerance, sulfonylurea tolerance, imidazolinone tolerance, resistance against 2,4-D Choline, dicamba tolerance, glyphosate & dicamba tolerance, HPPD inhibitor resistance, oxynil herbicide tolerance (e.g. bromoxynil), cyclohexanone herbicide tolerance (e.g. sethoxydim).

Specific examples for insect resistance (including Nematodes) are broad spectrum resistance against lepidopterans (above ground worms), resistance against Coleopterans (beetles), soybean Cyst Nematode resistance, corn borer resistance, broad range resistance which is not further specified, resistance against root worm.

Specific examples for Pollination control and male sterility systems are fertility restoration, male sterility.

A specific example for fungal resistance is stalk rot resistance.

Specific examples for viral resistance are resistance to Bean Golden Mosaic Virus, resistance to papaya ringspot virus, resistance to plum pox virus, resistance to potato virus Y, resistance to potato leafroll virus, resistance to cucumber mosaic cucumovirus, resistance to zucchini yellow mosaic potyvirus, resistance to watermelon mosaic potyvirus 2.

Specific examples for yield and stress are drought tolerance, yield increase, nitrogen use efficiency.

Specific examples for Specialty Trait (includes Feed, Food, Quality) are altered lignin production altered oil content, altered starch content, corn amylase, phytase production, modified color delayed/altered ripening, altered amino-acid content, anti-allergy, altered nicotin content, reduced black spot bruise formation.

Principally, cultivated plants may also comprise combinations of the aforementioned traits, e.g. they may be tolerant to the action of herbicides and express bacterial toxins.

In the detailed description below, the term "plant" refers to a cultivated plant.

Tolerance to herbicides can be obtained by creating insensitivity at the site of action of the herbicide by expression of a target enzyme which is resistant to herbicide; rapid metabolism (conjugation or degradation) of the herbicide by expression of enzymes which inactivate herbicide; or poor uptake and translocation of the herbicide. Examples are the expression of enzymes which are tolerant to the herbicide in comparison to wild type enzymes, such as the expression of 5-enolpyruvylshikimate-3-phosphate synthase (EPSPS), which is tolerant to glyphosate (see e.g. Heck et.al, Crop Sci. 45, 2005, 329-339; Funke et.al, PNAS 103, 2006, 13010-13015; US5188642, US4940835, US5633435, US5804425, US5627061), the expression of glutamine synthase which is tolerant to glufosinate and bialaphos (see e.g. US5646024, US5561236) and DNA constructs coding for dicamba-degrading enzymes (see e.g. US7105724). Gene constructs can be obtained, for example, from micro-organism or plants, which are tolerant to said herbicides, such as the Agrobacterium strain CP4 EPSPS which is resistant to glyphosate; Streptomyces bacteria which are resistance to glufosinate; Arabidopsis, Daucus carotte, Pseudomonoas sp. or Zea mais with chimeric gene sequences coging for HDDP (see e.g. WO1996/38567, WO 2004/55191); Arabidopsis thaliana which is resistant to protox inhibitors (see e.g. US2002/0073443).

Preferaby, the herbicide tolerant plant can be selected from cereals such as wheat, barley, rye, oat; canola, sorghum, soybean, rice, oil seed rape, sugar beet, sugarcane, grapes, lentils, sunflowers, alfalfa, pome fruits; stone fruits; peanuts; coffee; tea; strawberries; turf; vegetables, such as tomatoes, potatoes, cucurbits and lettuce, most preferably from cereals (wheat, barley, rye, oat), soybean, rice, vine and fruit and vegetables such as tomato, potato and pome fruits, utmost preferably from soybean and cereals such as wheat, barley, rye and oat.

Examples of commercial available transgenic plants with tolerance to herbicides, are the corn varieties "Roundup Ready Corn", "Roundup Ready 2" (Monsanto), "Agrisure GT", "Agrisure GT/CB/LL", "Agrisure GT/RW", "Agrisure 3000GT" (Syngenta), "YieldGard VT Rootworm/RR2" and "YieldGard VT Triple" (Monsanto) with tolerance to glyphosate; the corn varieties "Liberty Link" (Bayer), "Herculex I", "Herculex RW", "Herculex Xtra"(Dow, Pioneer), "Agrisure GT/CB/LL" and "Agrisure CB/LL/RW" (Syngenta) with tolerance to glufosinate; the soybean varieties "Roundup Ready Soybean" (Monsanto) and "Optimum GAT" (DuPont, Pioneer) with tolerance to glyphosate; the cotton varieties "Roundup Ready Cotton" and "Roundup Ready Flex" (Monsanto) with tolerance to glyphosate; the cotton variety "FiberMax Liberty Link" (Bayer) with tolerance to glufosinate; the cotton variety "BXN" (Calgene) with tolerance to bromoxynil; the canola varieties "Navigator" und "Compass" (Rhone-Poulenc) with bromoxynil tolerance; the canola varierty"Roundup Ready Canola" (Monsanto) with glyphosate tolerance; the canola variety "InVigor" (Bayer) with glufosinate tolerance; the rice variety "Liberty Link Rice" (Bayer) with glulfosinate tolerance and the alfalfa variety "Roundup Ready Alfalfa" with glyphosate tolerance. Further transgenic plants with herbicide are commonly known, for instance alfalfa, apple, eucalyptus, flax, grape, lentils, oil seed rape, peas, potato, rice, sugar beet, sunflower, tobacco, tomatom turf grass and wheat with tolerance to glyphosate (see e.g. US5188642, US4940835, US5633435, US5804425, US5627061); beans, soybean, cotton, peas, potato, sunflower, tomato, tobacco, corn, sorghum and sugarcane with tolerance to dicamba (see e.g. US7105724 and US5670454); pepper, apple, tomato, hirse, sunflower, tobacco, potato, corn, cucumber, wheat and sorghum with tolerance to 2,4-D (see e.g. US6153401, US6100446, WO2005107437, US5608147 and US5670454); sugarbeet, potato, tomato and tobacco with tolerance to gluphosinate (see e.g. US5646024, US5561236); canola, barley, cotton, lettuce, melon, millet, oats, potato, rice, rye, sorghum, soybean, sugarbeet, sunflower, tobacco, tomato and wheat with tolerance to acetolactate synthase (ALS) inhibiting herbicides, such as triazolopyrimidine sulfonamides, sulfonylureas and imidazolinones (see e.g. US5013659, WO2006060634, US4761373, US5304732, US6211438, US6211439 and US6222100); cereal, sugar cane, rice, corn, tobacco, soybean, cotton, rapeseed, sugar beet and potato with tolerance to HPPD inhibitor herbicides (see e.g. WO2004/055191, WO199638567, WO1997049816 and US6791014); wheat, soybean, cotton, sugar beet, rape, rice, sorghum and sugar cane with tolerance to protoporphyrinogen oxidase (PPO) inhibitor herbicides (see e.g. US2002/0073443, US20080052798, Pest Management Science, 61, 2005, 277-285). The methods of producing such transgenic plants are generally known to the person skilled in the art and are described, for example, in the publications mentioned above.

Plants, which are capable of synthesising one or more selectively acting bacerial toxins, comprise for example at least one toxin from toxin-producing bacteria, especially those of the genus Bacillus, in particular plants capable of synthesising one or more insecticidal proteins from Bacillus cereus or Bacillus popliae; or insecticidal proteins from Bacillus thuringiensis, such as delta.-endotoxins, e.g. CrylA(b), CrylA(c), CrylF, CrylF(a2), CrylIA(b), CrylIIA, CrylIIB(b1) or Cry9c, or vegetative insecticidal proteins (VIP), e.g. VIP1, VIP2, VIP3 or VIP3A; or insecticidal proteins of bacteria colonising nematodes, for example Photorhabdus spp. or Xenorhabdus spp., such as Photorhabdus luminescens, Xenorhabdus nematophilus; toxins produced by animals, such as scorpion toxins, arachnid toxins, wasp toxins and other insect-specific neurotoxins; toxins produced by fungi, such as Streptomycetes toxins, plant lectins, such as pea lectins, barley lectins or snowdrop lectins; agglutinins; proteinase inhibitors, such as trypsine inhibitors, serine protease inhibitors, patatin, cystatin, papain inhibitors; ribosome-inactivating proteins (RIP), such as ricin, maize-RIP, abrin, luffin, saporin or bryodin; steroid metabolism enzymes, such as 3-hydroxysteroidoxidase, ecdysteroid-UDP-glycosyl-transferase, cholesterol oxidases, ecdysone inhibitors, HMG-COA-reductase, ion channel blockers, such as blockers of sodium or calcium channels, juvenile hormone esterase, diuretic hormone receptors, stilbene synthase, bibenzyl synthase, chitinases and glucanases.

In the context of the present invention there are to be understood by.delta.-endotoxins, for example CrylA(b), CrylA(c), CrylF, CrylF(a2), CrylIA(b), CrylIIA, CrylIIB(b1) or Cry9c, or vegetative insecticidal proteins (VIP), for example VIP1, VIP2, VIP3 or VIP3A, expressly also hybrid toxins, truncated toxins and modified toxins. Hybrid toxins are produced recombinantly by a new combination of different domains of those proteins (see, for example, WO 02/15701). An example for a truncated toxin is a truncated CrylA(b), which is expressed in the Bt11 maize from Syngenta Seed SAS, as described below. In the case of modified toxins, one or more amino acids of the naturally occurring toxin are replaced. In such amino acid replacements, preferably non-naturally present protease recognition sequences are inserted into the toxin, such as, for example, in the case of CrylIIA055, a cathepsin-D-recognition sequence is inserted into a Cry-IIIA toxin (see WO 03/018810).

Examples of such toxins or transgenic plants capable of synthesising such toxins are disclosed, for example, in EP-A-0 374 753, WO 93/07278, WO 95/34656, EP-A-0 427 529, EP-A-451 878 and WO 03/052073.

The processes for the preparation of such transgenic plants are generally known to the person skilled in the art and are described, for example, in the publications mentioned above. Cryl-type deoxyribonucleic acids and their preparation are known, for example, from WO 95/34656, EP-A-0 367 474, EP-A-0 401 979 and WO 90/13651.

The toxin contained in the transgenic plants imparts to the plants tolerance to harmful insects. Such insects can occur in any taxonomic group of insects, but are especially commonly found in the beetles (Coleoptera), two-winged insects (Diptera) and butterflies (Lepidoptera).

Preferably, the plant capable of expression of bacterial toxins is selected from cereals such as wheat, barley, rye, oat; canola, sorghum, soybean, rice, oil seed rape, sugar beet, sugarcane, grapes, lentils, sunflowers, alfalfa, pome fruits; stone fruits; peanuts; coffee; tea; strawberries; turf; vegetables, such as tomatoes, potatoes, cucurbits and lettuce, most preferably from cereals (wheat, barley, rye, oat), soybean, rice, vine and fruit and vegetables such as tomato, potato and pome fruits, utmost preferably from soybean and cereals such as wheat, barley, rye and oat.

Examples of commercial available transgenic plants capable of expression of bacterial toxins are the corn varieties "YieldGard corn rootworm" (Monsanto), "YieldGard VT" (Monsanto), "Herculex RW" (Dow, Pioneer), "Herculex Rootworm" (Dow, Pioneer) and "Agrisure CRW" (Syngenta) with resistance against corn rootworm; the corn varieties "YieldGard corn borer" (Monsanto), "YieldGard VT Pro" (Monsanto), "Agrisure CB/LL" (Syngenta), "Agrisure 3000GT" (Syngenta), "Hercules I", "Hercules II" (Dow, Pioneer), "KnockOut" (Novartis), "NatureGard" (Mycogen) and "StarLink" (Aventis) with resistance against corn borer, the corn varieties "Herculex I" (Dow, Pioneer) and "Herculex Xtra" (Dow, Pioneer) with resistance against western bean cutworm, corn borer, black cutworm and fall armyworm; the corn variety "YieldGard Plus" (Monsanto) with resistance against corn borer and corn rootworm; the cotton variety "Bollgard I"" (Monsanto) with resistance against tobacco budworm; the cotton varieties "Bollgard II" (Monsanto), "WideStrike" (Dow) and"VipCot" (Syngenta) with resistance against tobacco budworm, cotton bollworm, fall armyworm, beet armyworm, cabbage looper, soybean lopper and pink bollworm; the potato varieties "NewLeaf", "NewLeaf Y" and "NewLeaf Plus" (Monsanto) with tobacco hornworm resistance and the eggplant varieties "Bt brinjal", "Dumaguete Long Purple", "Mara" with resistance against brinjal fruit and shoot borer, bruit borer and cotton bollworm (see e.g. US5128130). Further transgenic plants with insecticide resistance are commonly known, such as yellow stemborer resistant rice (see e.g. Molecular Breeding, Volume 18, 2006, Number 1), lepidopteran resistant lettuce (see e.g. US5349124 ), resistant soybean (see e.g. US7432421) and rice with resistance against Lepidopterans, such as rice stemborer, rice skipper, rice cutworm, rice caseworm, rice leaffolder and rice armyworm (see e.g. WO2001021821). The methods of producing such transgenic plants are generally known to the person skilled in the art and are described, for example, in the publications mentioned above.

Preferably, plants, which are capable of synthesising antipathogenic substances are most preferably from cereals (wheat, barley, rye, oat), soybean, rice, vine and fruit and vegetables such as tomato, potato and pome fruits, utmost preferably from soybean and cereals such as wheat, barley, rye and oat.

Plants, which are capable of synthesising antipathogenic substances having a selective action are for example plants expressing the so-called "pathogenesis-related proteins" (PRPs, see e.g. EP-A-0 392 225) or so-called "antifungal proteins" (AFPs, see e.g. US6864068). A wide range of antifungal proteins with activity against plant pathogenic fungi have been isolated from certain plant species and are common knowledge. Examples of such antipathogenic substances and transgenic plants capable of synthesising such antipathogenic substances are known, for example, from EP-A-0 392 225, WO93/05153, WO 95/33818, and EP-A-0 353 191. Transgenic plants which are resistant against fungicidal, viral and bacterial pathogens are produced by introducing plant resistance genes. Numerous resistant genes have been identified, isolated and were used to improve plant resistant, such as the N gene which was introduced into tobacco lines that are susceptible to Tobacco Mosaic Virus (TMV) in order to produce TMV-resistant tobacco plants (see e.g. US 5571706), the Prf gene, which was introduced into plants to obtain enhanced pathogen resistance (see e.g. WO 199802545) and the Rps2 gene from Arabidopsis thaliana, which was used to create resistance to bacterial pathogens including Pseudomonas syringae (see e.g. WO 199528423). Plants exhibiting systemic acquired resistance response were obtained by introducing a nucleic acid molecule encoding the TIR domain of the N gene (see e.g. US 6630618). Further examples of known resistance genes are the Xa21 gene, which has been intoruduced into a number of rice cultivars (see e.g. US5952485, US5977434, WO1999/09151, WO1996/22375), the Rcg1 gene for colletotrichum resistance (see e.g. US2006/225152), the prp1 gene (see e.g. US5859332, WO 2008017706), the ppv-cp gene to introduce resistance against plum pox virus (see e.g. US PP15,154Ps), the P1 gene (see e.g. US5968828), genes such as Blb1, Blb2, Blb3 and RB2 to introduce resistance against phytophthora infestans in potato (see e.g. US7148397), the LRPKml gene (see e.g. WO1999064600), the P1 gene for potato virus Y resistance (see e.g. US5968828), the HA5-1 gene (see e.g. US5877403 and US6046384), the PIP gene to indroduce a broad resistant to viruses, such as potato virus X (PVX), potato virus Y (PVY), potato leafroll virus (PLRV) (see e.g. EP0707069) and genes such as Arabidopsis NI16, ScaM4 and ScaM5 genes to obtain fungicidal resistance (see e.g. US6706952 and EP1018553). The methods of producing such transgenic plants are generally known to the person skilled in the art and are described, for example, in the publications mentioned above.

Antipathogenic substances which can be expressed by such transgenic plants include, for example, ion channel blockers, such as blockers for sodium and calcium channels, for example the viral KP1, KP4 or KP6 toxins; stilbene synthases; bibenzyl synthases; chitinases; glucanases; the so-called "pathogenesis-related proteins"" (PRPs; see e.g. EP-A-0 392 225); antipathogenic substances produced by microorganisms, for example peptide antibiotics or heterocyclic antibiotics (see e.g. WO 95/33818) or protein or polypeptide factors involved in plant pathogen defense (so-called ""plant disease resistance genes"", as described in WO 03/000906).

Antipatogenic substances produced by the plants are able to protect the plants against a variety of pathogens, such as fungi, viruses and bacteria. Useful plants of elevated interest in connection with present invention are cereals, such as wheat, barley, rye and oat; soybean; maize; rice; oil seed rape; pome fruits; stone fruits; peanuts; coffee; tea; strawberries; turf; vines and vegetables, such as tomatoes, potatoes, cucurbits, papaya, melon, lenses and lettuce, most preferably from cereals (wheat, barley, rye, oat), soybean, rice, vine and fruit and vegetables such as tomato, potato and pome fruits, utmost preferably from soybean and cereals such as wheat, barley, rye and oat.

Transgenic plants with resistance against fungal pathogens, are, for examples, soybeans with resistance against asian soybean rust (see e.g. WO 2008017706); plants such as alfalfa, corn, cotton, sugar beet, oileed, rape, tomato, soybean, wheat, potato and tobacco with resistance against phytophtora infestants (see e.g. US5859332, US7148397, EP1334979); corn with resistance against leaf blights, ear rots and stalk rots (such as anthracnose leaf bligh, anthracnose stalk rot, diplodia ear rot, fusarium verticilioides, gibberella zeae and top dieback, see e.g. US2006/225152); apples with resistance against apple scab (venturia inaequalis, see e.g. WO1999064600); plants such as rice, wheat, barley, rye, corn, oats, potato, melon, soybean and sorghum with resistance against fursarium diseases, such as fusarium graminearum, fusarium sporotrichioides, fusarium lateritium, fusarium pseudograminearum fusarium sambucinum, fusarium culmorum, fusarium poae, fusarium acuminatum, fusarium equiseti (see e.g. US6646184, EP1477557); plants, such as corn, soybean, cereals (in particular wheat, rye, balrey, oats, rye, rice), tobacco, sorghum, sugarcane and potatoes with broad fungicidal resistance (see e.g. US5689046, US6706952, EP1018553 and US6020129).

Transgenic plants with resistance against bacterial pathogens and which are covered by the present invention, are, for examples, rice with resistance against xylella fastidiosa (see e.g. US6232528); plants, such as rice, cotton, soybean, potato, sorghum, corn, wheat, balrey, sugarcane, tomato and pepper, with resistance against bacterial blight (see e.g. WO2006/42145, US5952485, US5977434, WO1999/09151, WO1996/22375); tomato with resistance against pseudomonas syringae (see e.g. Can. J. Plant Path., 1983, 5: 251-255).

Transgenic plants with resistance against viral pathogens, are, for examples, stone fruits, such as plum, almond, apricot, cherry, peach, nectarine, with resistance against plum pox virus (PPV, see e.g. US PP15,154Ps, EP0626449); potatoes with resistance against potato virus Y (see e.g. US5968828); plants such as potato, tomato, cucumber and leguminosaes which are resistant against tomato spotted wilt virus (TSWV, see e.g. EP0626449, US5973135); corn with resistance against maize streak virus (see e.g. US6040496); papaya with resistance against papaya ring spot virus (PRSV, see e.g. US5877403, US6046384); cucurbitaceae, such as cucumber, melon, watermelon and pumkin, and solanaceae, such as potato, tobacco, tomato, eggplant, paprika and pepper, with resistance against cucumber mosaic virus (CMV, see e.g. US6849780); cucurbitaceae, such as cucumber, melon, watermelon and pumkin, with resistance against watermelon mosaic virus and zucchini yellow mosaic virus (see e.g. US6015942); potatoes with resistance against potato leafroll virus (PLRV, see e.g. US5576202); potatoes with a broad resistance to viruses, such as potato virus X (PVX), potato virus Y (PVY), potato leafroll virus (PLRV) (see e.g. EP0707069).

Plants wich are resistant to antibiotics, such as kanamycin, neomycin and ampicillin. The naturally occurring bacterial nptll gene expresses the enzyme that blocks the effects of the antibiotics kanamycin and neomycin. The ampicillin resistance gene ampR (also known as blaTEM1) is derived from the bacterium Salmonella paratyphi and is used as a marker gene in the transformation of micro-organisms and plants. It is responsible for the synthesis of the enzyme betalactamase, which neutralises antibiotics in the penicillin group, including ampicillin. Transgenic plants with resistance against antibiotics, are, for examples potatoe, tomato, flax, canola, oilseed rape, rape seed and corn (see e.g. Plant Cell Reports, 20, 2001, 610-615. Trends in Plant Science, 11,2006,317-319. Plant Molecular Biology, 37, 1998, 287-296. Mol Gen Genet., 257, 1998, 606-13.). Plant Cell Reports, 6, 1987, 333-336. Federal Register (USA), Vol.60, No.113, 1995, page 31139. Federal Register (USA), Vol.67, No.226, 2002, page 70392. Federal Register (USA), Vol.63, No.88, 1998, page 25194. Federal Register (USA), Vol.60, No.141, 1995, page 37870. Canadian Food Inspection Agency, FD/OFB-095-264-A, October 1999, FD/OFB-099-127-A, October 1999. most preferably from cereals (wheat, barley, rye, oat), soybean, rice, vine and fruit and vegetables such as tomato, potato and pome fruits, utmost preferably from soybean and cereals such as wheat, barley, rye and oat.

Plants which are tolerant to stress conditions (see e.g. WO 200004173, WO2007131699, CA2521729 and US20080229448) are plants, which show increased tolerance to abiotic stress conditions such as drought, high salinity, high light intensities, high UV irradiation, chemical pollution (such as high heavy metal concentration), low or high temperatures, limitied supply of nutrients (i.e. nitrogen, phosphorous) and population stress. Preferably, transgenic plants with resistance to stress conditions, are selected from rice, corn, soybean, sugarcane, alfalfa, wheat, tomato, potato, barley, rapeseed, beans, oats, sorghum and cotton with tolerance to drought (see e.g. WO2005048693, WO2008002480 and WO 2007030001); corn, soybean, wheat, cotton, rice, rapeseed and alfalfa with tolerance to low temperatures (see e.g. US4731499 and WO2007112122); rice, cotton, potato, soybean, wheat, barley, rye, sorghum, alfalfa, grape, tomato, sunflower and tobacco with tolerance to high salinity (see e.g. US7256326, US7034139, WO/2001/030990). The methods of producing such transgenic plants are generally known to the person skilled in the art and are described, for example, in the publications mentioned above. Preferably, the plant is selected from cereals (wheat, barley, rye, oat), soybean, rice, vine and fruit and vegetables such as tomato, potato and pome fruits, most preferably from soybean and cereals such as wheat, barley, rye and oat.

Altered maturation properties, are for example delayed ripening, delayed softening and early maturity. Preferably, transgenic plants with modified maturation properties, are, selected from tomato, melon, raspberry, strawberry, muskmelon, pepper and papaya with delayed ripening (see e.g. US 5767376, US7084321, US6107548, US5981831, WO1995035387, US 5952546, US 5512466, WO1997001952, WO1992/008798, Plant Cell. 1989, 53-63. Plant Molecular Biology, 50, 2002). The methods of producing such transgenic plants are generally known to the person skilled in the art and are described, for example, in the publications mentioned above. Preferably, the plant is selected from fruits, such as tomato, vine, melon, papaya, banana, pepper, raspberry and strawberry; stone fruits, such as cherry, apricot and peach; pome fruits, such as apple and pear; and citrus fruits, such as citron, lime, orange, pomelo, grapefruit, and mandarin more preferably from tomato, vine, apple, banana, organge and strawberry, most preferably tomatoes and pomme fruit.

Content modification is synthesis of modified chemical compounds (if compared to the corresponding wildtype plant) or synthesis of enhanced amounts of chemical (if compounds compared to the corresponding wildtype plant) and corresponds to an increased or reduced amount of vitamins, amino acids, proteins and starch, different oils and a reduced amount of nicotine.

Commercial examples are the soybean varieties "Vistive II" and "Visitive III" with low-linolenic/medium oleic content; the corn variety "Mavera high-value corn" with increased lysine content; and the soybean variety "Mavera high value soybean" with yielding 5% more protein compared to conventional varieties when processed into soybean meal. Further transgenic plants with altered content are, for example, potato and corn with modified amylopectin content (see e.g. US6784338, US20070261136); canola, corn, cotton, grape, catalpa, cattail, rice, soybean, wheat, sunflower, balsam pear and vernonia with a modified oil content (see e.g. US7294759, US7,157,621, US5850026, us6441278, US 6380462, 6365802, US 6974898, WO2001079499, US 20060075515 and US7294759); sunflower with increased fatty acid content (see e.g. US6084164); soybeans with modified allergens content (so called "hypoallergenic soybean, see e.g. US 6864362); tobacco with reduced nicotine content (see e.g. US20060185684, WO2005000352 and WO2007064636); canola and soybean with increased lysine content (see e.g. Bio/Technology 13, 1995, 577 - 582); corn and soybean with altered composition of methionine, leucine, isoleucine and valine (see e.g. US6946589, US6905877); soybean with enhanced sulfur amino acid content (see e.g. EP0929685, WO1997041239); tomato with increased free amino acid contents, such as asparagine, aspartic acid, serine, threonine, alanine, histidine and glutamic acid (see e.g. US6727411); corn with enhanced amino acid content (see e.g. WO05077117); potato, corn and rice with modified starch content (see e.g. WO1997044471 and US7317146); tomato,corn, grape, alfalfa, apple, beans and peas with modified flavonoid content (see e.g. WO0004175); corn, rice, sorghum, cotton, soybeans with altered content of phenolic compounds (see e.g. US20080235829). The methods of producing such transgenic plants are generally known to the person skilled in the art and are described, for example, in the publications mentioned above. Preferably, the plant is selected from cereals (wheat, barley, rye, oat), soybean, rice, vine and fruit and vegetables such as tomato, potato and pome fruits, most preferably from soybean and cereals such as wheat, barley, rye and oat.

Enhanced nutrient utilization is e.g. assimilation or metabolism of nitrogen or phosphorous. Preferably, transgenic plants with enhanced nitrogen assimilatory and utilization capacities are selected from for example, canola, corn, wheat, sunflower, rice, tobacco, soybean, cotton, alfalfa, tomato, wheat, potato, sugar beet, sugar cane and rapeseed (see e.g. WO1995009911, WO1997030163, US6084153, US5955651 and US6864405). Plants with improved phosphorous uptake are, for example, tomato and potatoe (see e.g. US7417181). The methods of producing such transgenic plants are generally known to the person skilled in the art and are described, for example, in the publications mentioned above. Preferably, the plant is selected from cereals (wheat, barley, rye, oat), soybean, rice, vine and fruit and vegetables such as tomato, potato and pome fruits, most preferably from soybean and cereals such as wheat, barley, rye and oat.

Transgenic plants with male steriliy are preferably selected from canola, corn, tomato, rice, Indian mustard, wheat, soybean and sunflower (see e.g. US6720481, US6281348, US5659124, US6399856, US7345222, US7230168, US6072102, EP1135982, WO2001092544 and WO1996040949). The methods of producing such transgenic plants are generally known to the person skilled in the art and are described, for example, in the publications mentioned above. Preferably, the plant is selected from cereals (wheat, barley, rye, oat), soybean, rice, vine and fruit and vegetables such as tomato, potato and pome fruits, most preferably from soybean and cereals such as wheat, barley, rye and oat.

Plants, which produce higher quality fiber are e.g. transgenic cotton plants. The such improved quality of the fiber is related to improved micronaire of the fiber, increased strength, improved staple length, improved length unifomity and color of the fibers (see e.g. WO 1996/26639, US7329802, US6472588 and WO 2001/17333). The methods of producing such transgenic plants are generally known to the person skilled in the art and are described, for example, in the publications mentioned above.

As set forth above, cultivated plants may comprise one or more traits, e.g. selected from the group consisting of herbicide tolerance, insecticide resistance, fungicidal resistance, viral resistance, bacterial resistance, stress tolerance, maturation alteration, content modification, modified nutrient uptake, male sterility and yield (see e.g. WO2005033319 and US6376754).

Examples of commercial available transgenic plants with two combined properties are the corn varieties "YieldGard Roundup Ready" and YieldGard Roundup Ready 2" (Monsanto) with glyphosate tolerance and resistance to corn borer; the corn variety "Agrisure CB/LL" (Syntenta) with glufosinate tolerance and corn borer resistance; the corn variety "Yield Gard VT Root-worm/RR2" with glyphosate tolerance and corn rootworm resistance; the corn variety "Yield Gard VT Triple" with glyphosate tolerance and resistance against corn rootworm and corn borer; the corn variety "Herculex I" with glufosinate tolerance and lepidopteran resistance (Cry1 F), i.e. against western bean cutworm, corn borer, black cutworm and fall armyworm; the corn variety "YieldGard Corn Rootworm/Roundup Ready 2" (Monsanto) with glyphosate tolerance and corn rootworm resistance; the corn variety "Agrisure GT/RW" (Syngenta) with gluphosinate tolerance and lepidopteran resistance (Cry3A), i.e. against western corn rootworm, northern corn rootworm and Mexican corn rootworm; the corn variety "Herculex RW" (Dow, Pioneer) with glufosinate tolerance and lepidopteran resistance (Cry34/35Ab1), i.e. against western corn rootworm, northern corn rootworm and Mexican corn rootworm; the corn variety "Yield Gard VT Rootworm/RR2" with glyphosate tolerance and corn rootworm resistance; the soybean variety "Optimum GAT" (DuPont, Pioneer) with glyphosate tolerance and ALS herbicide tolerance; the corn variety "Mavera high-value corn" with glyphosate tolerance, resistance to corn rootworm and European corn borer and high lysine trait.

Examples of commercial available transgenic plants with three traits are the corn variety "Herculex I / Roundup Ready 2" with glyphosate tolerance, gluphosinate tolerance and lepidopteran resistance (Cry1 F), i.e. against western bean cutworm, corn borer, black cutworm and fall armyworm; the corn variety "YieldGard Plus / Roundup Ready 2" (Monsanto) with glyphosate tolerance, corn rootworm resistance and corn borer resistance; the corn variety "Agrisure GT/CB/LL" (Syngenta) with tolerance to glyphosate tolerance, tolerance to gluphosinate and corn borer resistance; the corn variety "Herculex Xtra" (Dow, Pioneer) with glufosinate tolerance and lepidopteran resistance (Cry1 F + Cry34/35Ab1), i.e. against western corn rootworm, northern corn rootworm, Mecxican corn rootworm, western bean cutworm, corn borer, black cutworm and fall armyworm; the corn varieties "Agrisure CB/LL/RW" (Syngenta) with glufosinate tolerance, corn borer resistance (Cry1Ab) and lepidopteran resistance (Cry3A), i.e. against western corn rootworm, northern corn rootworm and Mexican corn rootworm; the corn variety "Agrisure 3000GT" (Syngenta) with glyphosate tolerance + corn borer resistance (Cry1Ab) and lepidopteran resistance (Cry3A), i.e. against western corn rootworm, northern corn rootworm and Mexican corn rootworm. The methods of producing such transgenic plants are generally known to the person skilled in the art.

An example of a commercial available transgenic plant with four traits is "Hercules Quad-Stack" with glyphosate tolerance, glufosinate tolerance, corn borer resistance and corn rootworm resistance.

Preferably, the cultivated plants are plants, which comprise at least one trait selected from herbicide tolerance, insecticide resistance by expression of bacterial toxins, fungicidal resistance or viral resistance or bacterial resistance by expression of antipathogenic substances, stress tolerance, content modification of chemicals present in the cultivated plant compared to the corresponding wild-type plant.

More preferably, the cultivated plants are plants, which comprise at least one trait selected from herbicide tolerance, insecticide resistance by expression of bacertial toxins, fungicidal resistance or viral resistance or bacterial resistance by expression of antipathogenic substances, content modification of chemicals present in the cultivated plant compared to the corresponding wild-type plant.

Most preferably, the cultivated plants are plants, which are tolerant to the action of herbicides and plants, which express bacterial toxins, which provides resistance against animal pests (such as insects or arachnids or nematodes), wherein the bacterial toxin is preferably a toxin from Bacillus thuriginensis. Herein, the plant is preferably selected from cereals (wheat, barley, rye, oat), soybean, rice, vine and fruit and vegetables such as tomato, potato and pome fruits, most preferably from soybean and cereals such as wheat, barley, rye and oat.

Utmost preference is given to cultivated plants, which are tolerant to the action of herbicides.

Thus, in one embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which is rendered tolerant to herbicides, more preferably to herbicides such as glutamine synthetase inhibitors, 5-enol-pyrovyl-shikimate-3-phosphate-synthase inhibitors, acetolactate synthase (ALS) inhibitors, protoporphyrinogen oxidase (PPO) inhibitors, auxine type herbicides, most preferably to herbicides such as glyphosate, glufosinate, imazapyr, imazapic, imazamox, imazethapyr, imazaquin, imazamethabenz methyl, dicamba and 2,4-D.

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant corresponds to a row of table T1.

In a further embodiment, the present invention relates to a method of controlling harmful fungi and/or increasing the health of cultivated plants by treating plant propagation materials, preferably seeds with a triazole fungicide as defined above, wherein the plant corresponds to a row of table T1.

In another embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T1.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T1 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T1 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T1 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T1 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T1 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T1 and the triazole is I-1.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T1 and the triazole is I-2.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T1 and the triazole is I-3.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T1 and the triazole is I-4.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T1 and the triazole is I-5.

**Table T1**

| No | detailed description | plant | Literature / commercial plants |
|---|---|---|---|
| T1-1 | imidazolinone tolerance | canola | B* |
| T1-2 | imidazolinone tolerance | maize | A*, B* |
| T1-3 | imidazolinone tolerance | rice | A*, C* |
| T1-4 | imidazolinone tolerance | millet | A* |
| T1-5 | imidazolinone tolerance | barley | A* |
| T1-6 | imidazolinone tolerance | wheat | A* |
| T1-7 | imidazolinone tolerance | sorghum | A* |
| T1-8 | imidazolinone tolerance | oats | A* |
| T1-9 | imidazolinone tolerance | rye | A* |
| T1-10 | imidazolinone tolerance | sugar beet | WO9802526 / WO9802527 |
| T1-11 | imidazolinone tolerance | lentils | US2004/0187178 |
| T1-12 | imidazolinone tolerance | sunflowers | B* |
| T1-13 | imidazolinone tolerance | wheat | D* |
| T1-14 | glyphosate tolerance | alfalfa | E*; "Roundup Ready Alfalfa" |
| T1-15 | glyphosate tolerance | apple | E* |
| T1-16 | glyphosate tolerance | barley | E* |
| T1-17 | glyphosate tolerance | canola | E*; V* |
| T1-18 | glyphosate tolerance | maize | E*; W* |
| T1-19 | glyphosate tolerance | cotton | E*; X* |
| T1-20 | glyphosate tolerance | flax | E* |
| T1-21 | glyphosate tolerance | grape | E* |
| T1-22 | glyphosate tolerance | lentil | E* |
| T1-23 | glyphosate tolerance | oil seed rape | E* |
| T1-24 | glyphosate tolerance | pea | E* |
| T1-25 | glyphosate tolerance | potato | E* |
| T1-26 | glyphosate tolerance | rice | "Roundup Ready Rice" (Mon1x) |
| T1-27 | glyphosate tolerance | soybean | E*; Y* |
| T1-28 | glyphosate tolerance | sugar beet | E* |
| T1-29 | glyphosate tolerance | sunflower | E* |
| T1-30 | glyphosate tolerance | tobacco | E* |
| T1-31 | glyphosate tolerance | tomato | E* |
| T1-32 | glyphosate tolerance | turf grass | E* |
| T1-33 | glyphosate tolerance | wheat | E* |
| T1-34 | gluphosinate tolerance | canola | F*; U* |
| T1-35 | gluphosinate tolerance | maize | F*; Z* |
| T1-36 | gluphosinate tolerance | cotton | F*; "FiberMax Liberty Link" (Bayer), |
| T1-37 | gluphosinate tolerance | potato | F* |
| T1-38 | gluphosinate tolerance | rice | F*, G*; "Liberty Link Rice" (Bayer), |
| T1-39 | gluphosinate tolerance | sugar beet | F* |
| T1-40 | gluphosinate tolerance | soybean | US6376754 |
| T1-41 | gluphosinate tolerance | tobacco | F* |
| T1-42 | gluphosinate tolerance | tomato | F* |
| T1-43 | dicamba tolerance | bean | US7105724 |
| T1-44 | dicamba tolerance | maize | US7105724, WO2008051633 |
| T1-45 | dicamba tolerance | cotton | US7105724, US5670454 |
| T1-46 | dicamba tolerance | pea | US7105724 |
| T1-47 | dicamba tolerance | potato | US7105724 |
| T1-48 | dicamba tolerance | sorghum | US7105724 |
| T1-49 | dicamba tolerance | soybean | US7105724, US5670454 |
| T1-50 | dicamba tolerance | sunflower | US7105724 |
| T1-51 | dicamba tolerance | tobacco | US7105724 |
| T1-52 | dicamba tolerance | tomato | US7105724, US5670454 |
| T1-53 | bromoxynil tolerance | canola | "Navigator", "Compass" (Rhone-Poulenc) |
| T1-54 | bromoxynil tolerance | cotton | "BXN" (calgene) |
| T1-55 | 2,4-D tolerance | apple | H* |
| T1-56 | 2,4-D tolerance | maize | H* |
| T1-57 | 2,4-D tolerance | cotton | US5670454 |
| T1-58 | 2,4-D tolerance | cucumber | H* |
| T1-59 | 2,4-D tolerance | pepper | H* |
| T1-60 | 2,4-D tolerance | potato | H* |
| T1-61 | 2,4-D tolerance | sorghum | H* |
| T1-62 | 2,4-D tolerance | soybean | H* |
| T1-63 | 2,4-D tolerance | sunflower | H* |
| T1-64 | 2,4-D tolerance | tobacco | H* |
| T1-65 | 2,4-D tolerance | tomato | H* |
| T1-66 | 2,4-D tolerance | wheat | H* |
| T1-67 | HPPD inhibitor tolerance (K*) | barley | I* |
| T1-68 | HPPD inhibitor tolerance (K*) | maizef | I* |
| T1-69 | HPPD inhibitor tolerance (K*) | cotton | I* |
| T1-70 | HPPD inhibitor tolerance (K*) | potato | I* |
| T1-71 | HPPD inhibitor tolerance (K*) | rapeseed | I* |
| T1-72 | HPPD inhibitor tolerance (K*) | rice | I* |
| T1-73 | HPPD inhibitor tolerance (K*) | soybean | I* |
| T1-74 | HPPD inhibitor tolerance (K*) | sutarbeet | I* |
| T1-75 | HPPD inhibitor tolerance (K*) | sugarcane | I* |
| T1-76 | HPPD inhibitor tolerance (K*) | tobacco | I* |
| T1-77 | HPPD inhibitor tolerance (K*) | wheat | I* |
| T1-78 | Protox inhibitor tolerance (L*) | cotton | M* |
| T1-79 | Protox inhibitor tolerance (L*) | rape | M* |
| T1-80 | Protox inhibitor tolerance (L*) | rice | M* |
| T1-81 | Protox inhibitor tolerance (L*) | sorghum | M* |
| T1-82 | Protox inhibitor tolerance (L*) | soybean | M* |
| T1-83 | Protox inhibitor tolerance (L*) | sugarbeet | M* |
| T1-84 | Protox inhibitor tolerance (L*) | sugar cane | M* |
| T1-85 | Protox inhibitor tolerance (L*) | wheat | M* |

| | | | |
|---|---|---|---|
| A* refers to US 4761373, US 5304732, US 5331107, US 5718079, US 6211438, US 6211439 and US 6222100. B* refers to Tan et. al, Pest Manag. Sci 61, 246-257 (2005). C* refers to imidazolinone-herbicide resistant rice plants with specific mutation of the acetohydroxyacid synthase gene: S653N (see e.g. US 2003/0217381), S654K ( see e.g. US 2003/0217381), A122T (see e.g. WO 04/106529) S653(At)N, S654(At)K, A122(At)T and other resistant rice plants as described in WO0027182, WO 05/20673 and WO0185970 or US patents US 5545822, US 5736629, US 5773703, US 5773704, US- 5952553, US 6274796, wherein plants with mutation S653A and A122T are most preferred. D* refers to WO 04/106529, WO 04/16073, WO 03/14357, WO 03/13225 and WO 03/14356. E* refers to US5188642, US4940835, US5633435, US5804425 and US5627061. F* refers to US5646024 and US5561236. G* refers to US6333449, US6933111 and US 6468747. H* refers to US6153401, US6100446, WO2005107437, US5670454 and US5608147. I* refers to WO2004/055191, WO199638567 and US6791014. K* refers to HPPD inhibitor herbicides, such as isoxazoles (e.g. isoxaflutole), diketonitriles, trikeones (e.g. sulcotrione and mesotrione), pyrazolinates. L* refers to protoporphyrinogen oxidase (PPO) inhibiting herbicides. M* refers to US2002/0073443, US20080052798, Pest Management Science, 61, 2005, 277-285. U* "InVigor" (Bayer) V* "Roundup Ready Canola" (Mon1x) W*"Roundup Ready Corn", "Roundup Ready 2" (Mon1x), "Agrisure GT", "Agrisure GT/CB/LL", "Agrisure GT/RW", "Agrisure 3000GT" (Syngenta), "YieldGard VT Rootworm/RR2", "YieldGard VT Triple" (Mon1x) X* "Roundup Ready Cotton", "Roundup Ready Flex" (Mon1x) Y* "Roundup Ready Soybean" (Mon1x), "Optimum GAT" (DuPont, Pioneer) Z* "Liberty Link" (Bayer), "Herculex I", "Herculex RW", "Herculex Xtra"(Dow, Pioneer), "Agrisure GT/CB/LL", "Agrisure CB/LL/RW" (Syngenta), | | | |

A subset of especially preferred herbicide tolerant plants is given in table T2. In the subset, there are further preferred embodiments:

In a further embodiment, the present invention relates to a method of controlling harmful fungi and/or increasing the health of cultivated plants by treating plant propagation materials, preferably seeds with a triazole fungicide as defined above.

In a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T2 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T2 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T2 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T2 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T2 and the triazole is I-5.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T2 and the triazole is I-1.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T2 and the triazole is I-2.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T2 and the triazole is I-3.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T2 and the triazole is I-4.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T2 and the triazole is I-5.

In a very specific embodiment, the present invention relates to a method of controlling harmful fungi and/or increasing the health of plants by treating cultivated plants, parts of such plants or at their locus of growth with a triazole fungicide, wherein the plant is selected from T2-3, T2-5, T2-10, T2-11, T2-16 and T2-17 and the triazole is I-1.

In a very specific embodiment, the present invention relates to a method of controlling harmful fungi and/or increasing the health of plants by treating cultivated plants, parts of such plants or at their locus of growth with a triazole fungicide, wherein the plant is selected from T2-3, T2-5, T2-10, T2-11, T2-16 and T2-17 and the triazole is I-2.

In a very specific embodiment, the present invention relates to a method of controlling harmful fungi and/or increasing the health of plants by treating cultivated plants, parts of such plants or at their locus of growth with a triazole fungicide, wherein the plant is selected from T2-3, T2-5, T2-10, T2-11, T2-16 and T2-17 and the triazole is I-3.

In a very specific embodiment, the present invention relates to a method of controlling harmful fungi and/or increasing the health of plants by treating cultivated plants, parts of such plants or at their locus of growth with a triazole fungicide, wherein the plant is selected from T2-3, T2-5, T2-10, T2-11, T2-16 and T2-17 and the triazole is I-4.

In a very specific embodiment, the present invention relates to a method of controlling harmful fungi and/or increasing the health of plants by treating cultivated plants, parts of such plants or at their locus of growth with a triazole fungicide, wherein the plant is selected from T2-3, T2-5, T2-10, T2-11, T2-16 and T2-17 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T2-3, T2-5, T2-10, T2-11, T2-16 and T2-17 and the triazole is I-1.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T2-3, T2-5, T2-10, T2-11, T2-16 and T2-17 and the triazole is I-2.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T2-3, T2-5, T2-10, T2-11, T2-16 and T2-17 and the triazole is I-3.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T2-3, T2-5, T2-10, T2-11, T2-16 and T2-17 and the triazole is I-4.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T2-3, T2-5, T2-10, T2-11, T2-16 and T2-17 and the triazole is I-5.

**Table T2**

| No | detailed description | plant | Literature / commercial plants |
|---|---|---|---|
| T2-1 | imidazolinone tolerance | canola | B* |
| T2-2 | imidazolinone tolerance | maize | A*, B* |
| T2-3 | imidazolinone tolerance | rice | C* |
| T2-4 | imidazolinone tolerance | sunflowers | B* |
| T2-5 | imidazolinone tolerance | wheat | D* |
| T2-6 | glyphosate tolerance | alfalfa | E*; "Roundup Ready Alfalfa" |
| T2-7 | glyphosate tolerance | canola | E*; U* |
| T2-8 | glyphosate tolerance | maize | E*; V* |
| T2-9 | glyphosate tolerance | cotton | E*; W* |
| T2-10 | glyphosate tolerance | rice | E*; "Roundup Ready Rice" (Mon1x) |
| T2-11 | glyphosate tolerance | soybean | E*; X* |
| T2-12 | glyphosate tolerance | sugar beet | E* |
| T2-13 | gluphosinate tolerance | canola | F*; "InVigor" (Bayer) |
| T2-14 | gluphosinate tolerance | maize | F*; Y* |
| T2-15 | gluphosinate tolerance | cotton | F*; "FiberMax Liberty Link" (Bayer), |
| T2-16 | gluphosinate tolerance | rice | F*, G*; "Liberty Link Rice" (Bayer), |
| T2-17 | gluphosinate tolerance | soybean | I* |
| T2-18 | dicamba tolerance | cotton | US7105724 |
| T2-19 | dicamba tolerance | soybean | US7105724 |
| T2-20 | bromoxynil tolerance | canola | Z* |
| T2-21 | bromoxynil tolerance | cotton | "BXN" (Calgene) |
| T2-22 | 2,4-D tolerance | maize | H* |

| | | | |
|---|---|---|---|
| A* refers to US 4761373, US 5304732, US 5331107, US 5718079, US 6211438, US 6211439 and US 6222100. B* refers to Tan et. al, Pest Manag. Sci 61, 246-257 (2005). C* refers to imidazolinone-herbicide resistant rice plants with specific mutation of the acetohy-droxyacid synthase gene: S653N ( see e.g. US 2003/0217381), S654K (see e.g. US 2003/0217381), A122T (see e.g. WO 04/106529) S653(At)N, S654(At)K, A122(At)T and other resistant rice plants as described in WO0027182, WO 05/20673 and WO0185970 or US patents US 5545822, US 5736629, US 5773703, US 5773704, US- 5952553, US 6274796, wherein plants with mutation S653A and A122T are most preferred. D* refers to WO 04/106529, WO 04/16073, WO 03/14357, WO 03/13225 and WO 03/14356. E* refers to US5188642, US4940835, US5633435, US5804425 and US5627061. F* refers to US5646024 and US5561236. G* refers to US6333449, US6933111 and US 6468747. H* refers to US6153401, US6100446, WO2005107437 and US5608147. I* refers to Federal Register (USA), Vol. 61, No. 160, 1996, page 42581. Federal Register (USA), Vol. 63, No.204, 1998, page 56603. U* "Roundup Ready Canola" (Mon1x) V* "Roundup Ready Corn", "Roundup Ready 2" (Mon1x), "Agrisure GT", "Agrisure GT/CB/LL", "Agrisure GT/RW", "Agrisure 3000GT" (Syngenta), "YieldGard VT Rootworm/RR2", "YieldGard VT Triple" (Mon1x) W* "Roundup Ready Cotton", "Roundup Ready Flex" (Mon1x) x* "Roundup Ready Soybean" (Mon1x), "Optimum GAT" (DuPont, Pioneer) Y*"Liberty Link" (Bayer), "Herculex I", "Herculex RW", "Herculex Xtra"(Dow, Pioneer), "Agrisure GT/CB/LL", "Agrisure CB/LL/RW" (Syngenta) Z*"Navigator", "Compass" (Rhone-Poulenc) | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which express at least one insecticidal toxin, preferably a toxin from Bacillus species, more preferably from Bacillus thuringiensis.

In still a further embodiment, the present invention relates to a method of controlling harmful fungi and/or increasing the health of cultivated plants by treating plant propagation materials, preferably seeds with a triazole fungicide as defined above, wherein the plant corresponds to a row of table T3.

In another embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T3.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T3 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T3 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T3 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T3 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T3 and the triazole is I-5.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T3 and the triazole is I-1.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T3 and the triazole is I-2.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T3 and the triazole is I-3.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T3 and the triazole is I-4.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T3 and the triazole is I-5.

In a more specific embodiment, the present invention relates to a method of controlling harmful fungi and/or increasing the health of plants by treating cultivated plants, parts of such plants or at their locus of growth with a triazole fungicide, wherein the plant is selected from T3-13, T3-14, T3-15, T3-16, T3-17, T3-18, T3-19, T3-20, T3-24 and T3-26 and the triazole is I-1.

In still a further more specific embodiment, the present invention relates to a method of controlling harmful fungi and/or increasing the health of plants by treating cultivated plants, parts of such plants or at their locus of growth with a triazole fungicide, wherein the plant is selected from T3-13, T3-14, T3-15, T3-16, T3-17, T3-18, T3-19, T3-20, T3-24 and T3-26 and the triazole is I-2.

In still a further more specific embodiment, the present invention relates to a method of controlling harmful fungi and/or increasing the health of plants by treating cultivated plants, parts of such plants or at their locus of growth with a triazole fungicide, wherein the plant is selected from T3-13, T3-14, T3-15, T3-16, T3-17, T3-18, T3-19, T3-20, T3-24 and T3-26 and the triazole is I-3.

In still a further more specific embodiment, the present invention relates to a method of controlling harmful fungi and/or increasing the health of plants by treating cultivated plants, parts of such plants or at their locus of growth with a triazole fungicide, wherein the plant is selected from T3-13, T3-14, T3-15, T3-16, T3-17, T3-18, T3-19, T3-20, T3-24 and T3-26 and the triazole is I-4.

In still a further more specific embodiment, the present invention relates to a method of controlling harmful fungi and/or increasing the health of plants by treating cultivated plants, parts of such plants or at their locus of growth with a triazole fungicide, wherein the plant is selected from T3-13, T3-14, T3-15, T3-16, T3-17, T3-18, T3-19, T3-20, T3-24 and T3-26 and the triazole is I-5.

In a further more specific embodiment, the present invention relates to a method of controlling harmful fungi and/or increasing the health of plants by treating plant propagation materials, preferably seeds of cultivated plants of cultivated crops with a triazole fungicide, wherein the plant is selected from T3-13, T3-14, T3-15, T3-16, T3-17, T3-18, T3-19, T3-20, T3-24 and T3-26 and the triazole is I-1.

In still a further more specific embodiment, the present invention relates to a method of controlling harmful fungi and/or increasing the health of plants by treating plant propagation materials, preferably seeds of cultivated plants of cultivated crops with a triazole fungicide, wherein the plant is selected from T3-13, T3-14, T3-15, T3-16, T3-17, T3-18, T3-19, T3-20, T3-24 and T3-26 and the triazole is I-2.

In still a further more specific embodiment, the present invention relates to a method of controlling harmful fungi and/or increasing the health of plants by treating plant propagation materials, preferably seeds of cultivated plants of cultivated crops with a triazole fungicide, wherein the plant is selected from T3-13, T3-14, T3-15, T3-16, T3-17, T3-18, T3-19, T3-20, T3-24 and T3-26 and the triazole is I-3.

In still a further more specific embodiment, the present invention relates to a method of controlling harmful fungi and/or increasing the health of plants by treating plant propagation materials, preferably seeds of cultivated plants of cultivated crops with a triazole fungicide, wherein the plant is selected from T3-13, T3-14, T3-15, T3-16, T3-17, T3-18, T3-19, T3-20, T3-24 and T3-26 and the triazole is I-4.

In still a further more specific embodiment, the present invention relates to a method of controlling harmful fungi and/or increasing the health of plants by treating plant propagation materials, preferably seeds of cultivated plants of cultivated crops with a triazole fungicide, wherein the plant is selected from T3-13, T3-14, T3-15, T3-16, T3-17, T3-18, T3-19, T3-20, T3-24 and T3-26 and the triazole is I-5.

**Table T3**

| No | detailed description | plant | Literature / commercial plants |
|---|---|---|---|
| T3-1 | corn rootworm resistance | maize | B* |
| T3-2 | corn borer resistance | maize | C* |
| T3-3 | western bean cutworm resistance | maize | D* |
| T3-4 | black cutworm resistance | maize | E* |
| T3-5 | fall armyworm resistance | maize | "Herculex I" (Dow, Pioneer), "Herculex Xtra" (Dow, Pioneer) |
| T3-6 | tobacco budworm resistance | cotton | "Bollgard I" (Mon1x), "Bollgard II" (Mon1x), "WideStrike" (Dow), "Vip-Cot" (Syngenta) |
| T3-7 | cotton bollworm resistance | cotton | "Bollgard II" (Mon1x), "WideStrike" (Dow), "VipCot" (Syngenta) |
| T3-8 | fall armyworm resistance | cotton | "Bollgard II" (Mon1x), "WideStrike" (Dow), "VipCot" (Syngenta) |
| T3-9 | beet armyworm resistance | cotton | "Bollgard II" (Mon1x), "WideStrike" (Dow), "VipCot" (Syngenta) |
| T3-10 | cabbage looper resistance | cotton | "Bollgard II" (Mon1x), "WideStrike" (Dow), "VipCot" (Syngenta) |
| T3-11 | soybean lopper resistance | cotton | "Bollgard II" (Mon1x), "WideStrike" (Dow), "VipCot" (Syngenta) |
| T3-12 | pink bollworm resistance | cotton | "Bollgard II" (Mon1x), "WideStrike" (Dow), "VipCot" (Syngenta) |
| T3-13 | rice stemborer resistance | rice | A* |
| T3-14 | striped rice borer resistance | rice | A* |
| T3-15 | rice leaf roller resistance | rice | A* |
| T3-16 | yellow stemborer resistance | rice | A* |
| T3-17 | rice skipper resistance | rice | A* |
| T3-18 | rice caseworm resistance | rice | A* |
| T3-19 | rice cutworm resistance | rice | A* |
| T3-20 | rice armyworm resistance | rice | A* |
| T3-21 | brinjal fruit and shoot borer resistance | eggplant | US5128130, "Bt brinjal", "Dumaguete Long Purple", "Mara" |
| T3-22 | bruit borer resistance | eggplant | US5128130, "Bt brinjal", "Dumaguete Long Purple", "Mara" |
| T3-23 | cotton bollworm resistance | eggplant | US5128130, "Bt brinjal", "Dumaguete Long Purple", "Mara" |
| T3-24 | tobacco hornworm resistance | potato | D* |
| T3-25 | lepidopteran resistance | lettuce | US5349124 |
| T3-26 | lepidopteran resistance | soybean | US7432421 |

| | | | |
|---|---|---|---|
| A* refers to "Zhuxian B", WO2001021821, Molecular Breeding, Volume 18, Number 1 / August 2006. B* "YieldGard corn rootworm" (Mon1x), "YieldGard Plus" (Mon1x), "YieldGard VT" (Mon1x), "Herculex RW" (Dow, Pioneer), "Herculex Rootworm" (Dow, Pioneer), "Agrisure 0CRW" (Syngenta) C* "YieldGard corn borer" (Mon1x), "YilIdGard Plus" (Mon1x), "YieldGard VT Pro" (Mon1x), "Agrisure CB/LL" (Syngenta), "Agrisure 3000GT" (Syngenta), "Hercules I", "Hercules II" (Dow, Pioneer), "KnockOut" (Novartis), "NatureGard" (Mycogen), "StarLink" (Aventis) D*"NewLeaf" (Mon1x), "NewLeaf Y" (Mon1x), "NewLeaf Plus" (Mon1x), US6100456 | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which shows increased resistance against fungal, viral and bacterial diseases, more preferably a plant, which expresses antipathogenic substances, such as antifungal proteins, or which has systemic acquired resistance properties.

In a further embodiment, the present invention relates to a method of controlling harmful fungi and/or increasing the health of cultivated plants by treating plant propagation materials, preferably seeds with a triazole fungicide as defined above, wherein the plant corresponds to a row of table T4.

In still a further embodiment, the present invention relates to a method of controlling harmful fungi and/or increasing the health of cultivated plants by treating cultivated plants, parts of such plants or at their locus of growth with a triazole fungicide aas defined above, wherein the plant corresponds to a row of table T4.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T4 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T4 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T4 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T4 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T4 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T4 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T4 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T4 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T4 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T4 and the triazole is I-5.

**Table T4**

| No | detailed description | plant | Literature |
|---|---|---|---|
| T4-1 | fungal resistance | apple | A*, B*, C* |
| T4-2 | fungal resistance | barley | A*, B*, C* |
| T4-3 | fungal resistance | banana | A*, B*, C* |
| T4-4 | fungal resistance | bean | B*, C* |
| T4-5 | fungal resistance | maize | A*, B*, C* |
| T4-6 | fungal resistance | cotton | A*, C* |
| T4-7 | fungal resistance | cucumber | B*, C* |
| T4-8 | fungal resistance | grape | C* |
| T4-9 | fungal resistance | oat | A*, C* |
| T4-10 | fungal resistance | pepper | B*,C* |
| T4-11 | fungal resistance | potato | A*, B*, C* |
| T4-12 | fungal resistance | rape | B*,C* |
| T4-13 | fungal resistance | rice | A*, B*, C* |
| T4-14 | fungal resistance | rye | A*, B*, C* |
| T4-15 | fungal resistance | sorghum | B*,C* |
| T4-16 | fungal resistance | soybean | A*, B*, C* |
| T4-17 | fungal resistance | sugarcane | B*, C* |
| T4-18 | fungal resistance | tobacco | A*, B*, C* |
| T4-19 | fungal resistance | tomato | A*, B*, C* |
| T4-20 | fungal resistance | wheat | A*, B*, C* |
| T4-21 | bacterial resistance | apple | D* |
| T4-22 | bacterial resistance | barley | D* |
| T4-23 | bacterial resistance | banana | D* |
| T4-24 | bacterial resistance | bean | D* |
| T4-25 | bacterial resistance | maize | |
| T4-26 | bacterial resistance | cotton | D* |
| T4-27 | bacterial resistance | cucumber | D* |
| T4-28 | bacterial resistance | grape | D*, US6172280 |
| T4-29 | bacterial resistance | oat | D* |
| T4-30 | bacterial resistance | pepper | D* |
| T4-31 | bacterial resistance | potato | D* |
| T4-32 | bacterial resistance | rape | D* |
| T4-33 | bacterial resistance | rice | D* |
| T4-34 | bacterial resistance | rye | D* |
| T4-35 | bacterial resistance | sorghum | D* |
| T4-36 | bacterial resistance | soybean | D* |
| T4-37 | bacterial resistance | sugarcane | D* |
| T4-38 | bacterial resistance | tobacco | D* |
| T4-39 | bacterial resistance | tomato | D* |
| T4-40 | bacterial resistance | wheat | D* |
| T4-41 | viral resistance | apple | C* |
| T4-42 | viral resistance | barley | C* |
| T4-43 | viral resistance | banana | C* |
| T4-44 | viral resistance | bean | C* |
| T4-45 | viral resistance | maize | C* |
| T4-1 | viral resistance | cotton | C* |
| T4-2 | viral resistance | cucumber | C* |
| T4-3 | viral resistance | oat | C* |
| T4-4 | viral resistance | pepper | C* |
| T4-5 | viral resistance | potato | C* |
| T4-6 | viral resistance | rape | C* |
| T4-7 | viral resistance | rice | C* |
| T4-8 | viral resistance | rye | C* |
| T4-9 | viral resistance | sorghum | C* |
| T4-10 | viral resistance | soybean | C* |
| T4-11 | viral resistance | sugarcane | C* |
| T4-12 | viral resistance | tobacco | C* |
| T4-13 | viral resistance | tomato | C* |
| T4-14 | viral resistance | wheat | C* |

| | | | |
|---|---|---|---|
| A* refers to US5689046 and US6020129. B* refers to US6706952 and EP1018553. C* refers to US6630618. D* refers to WO/1995/005731 and US5648599. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which is listed in table T5.

In still a further embodiment, the present invention relates to a method of controlling harmful fungi and/or increasing the health of cultivated plants by treating plant propagation materials, preferably seeds with a triazole fungicide as defined above, wherein the plant corresponds to a row of table T5.

In still a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T5.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T5 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T5 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T5 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T5 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T5 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T5 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T5 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T5 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T5 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T5 and the triazole is I-5.

In a further specific embodiment, the present invention relates to a method of controlling harmful fungi and/or increasing the health of plants by treating cultivated plants, parts of such plants or at their locus of growth with a triazole fungicide, wherein the plant is selected from T5-2, T5-5, T5-6, T5-9, T5-10, T5-11 and T5-13 and the triazole is I-1.

In still a further specific embodiment, the present invention relates to a method of controlling harmful fungi and/or increasing the health of plants by treating cultivated plants, parts of such plants or at their locus of growth with a triazole fungicide, wherein the plant is selected from T5-2, T5-5, T5-6, T5-9, T5-10, T5-11 and T5-13 and the triazole is I-2.

In still a further specific embodiment, the present invention relates to a method of controlling harmful fungi and/or increasing the health of plants by treating cultivated plants, parts of such plants or at their locus of growth with a triazole fungicide, wherein the plant is selected from T5-2, T5-5, T5-6, T5-9, T5-10, T5-11 and T5-13 and the triazole is I-3.

In still a further specific embodiment, the present invention relates to a method of controlling harmful fungi and/or increasing the health of plants by treating cultivated plants, parts of such plants or at their locus of growth with a triazole fungicide, wherein the plant is selected from T5-2, T5-5, T5-6, T5-9, T5-10, T5-11 and T5-13 and the triazole is I-4.

In still a further specific embodiment, the present invention relates to a method of controlling harmful fungi and/or increasing the health of plants by treating cultivated plants, parts of such plants or at their locus of growth with a triazole fungicide, wherein the plant is selected from T5-2, T5-5, T5-6, T5-9, T5-10, T5-11 and T5-13 and the triazole is I-5.

In a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T5-2, T5-5, T5-6, T5-9, T5-10, T5-11 and T5-13 and the triazole is I-1.

In still a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T5-2, T5-5, T5-6, T5-9, T5-10, T5-11 and T5-13 and the triazole is I-2.

In still a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T5-2, T5-5, T5-6, T5-9, T5-10, T5-11 and T5-13 and the triazole is I-3.

In still a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T5-2, T5-5, T5-6, T5-9, T5-10, T5-11 and T5-13 and the triazole is I-4.

In still a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T5-2, T5-5, T5-6, T5-9, T5-10, T5-11 and T5-13 and the triazole is I-5.

**table T5**

| No | detailed description | plant | Literature / commercial plants |
|---|---|---|---|
| T5-1 | broad fungicide resistance | maize | A*, B*, C* |
| T5-2 | broad fungicide resistance | soybean | A*, B*, C* |
| T5-3 | asian soybean rust resistance | soybean | WO 2008017706 |
| T5-4 | resistance against anthracnose leaf bligh, anthracnose stalk rot (colletotrichum graminicola), diplodia ear rot, fusarium verticilioides, gibberella zeae, top dieback | maize | US2006/225152 |
| T5-5 | resistance against anthracnose leaf bligh, anthracnose stalk rot (colletotrichum graminicola), diplodia ear rot, fusarium verticilioides, gibberella zeae, top dieback | maize | US2006/225152 |
| T5-6 | fusarium resistance | wheat | US6646184, EP1477557 |
| T5-7 | apple scab resistance | apple | WO1999064600 |
| T5-8 | plum pox virus resistance | plum | US PP15154Ps |
| T5-9 | potato virus X resistance | potato | US5968828, EP0707069 |
| T5-10 | potato virus Y resistance | potato | EP0707069; "NewLeaf Y" (Mon1x) |
| T5-11 | potato leafroll virus resistance | potato | EP0707069, US5576202; "NewLeaf Plus" (Mon1x) |
| T5-12 | papaya ring spot virus resistance | papaya | US5877403, US6046384 |
| T5-13 | bacterial blight resistance | rice | D* |

| | | | |
|---|---|---|---|
| A* refers to US5689046 and US6020129. B* refers to US6706952 and EP1018553. C* refers to US6630618. D* refers to WO2006/42145, US5952485, US5977434, WO1999/09151 and WO1996/22375. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which is tolerant to abiotic stress, preferably drought, high salinity, high light intensities, high UV irradiation, chemical pollution (such as high heavy metal concentration), low or high temperatures, limitied supply of nutrients and population stress, most preferably drought, high salinity, low temperatures and limitied supply of nitrogen.

In still a further embodiment, the present invention relates to a method of controlling harmful fungi and/or increasing the health of cultivated plants by treating plant propagation materials, preferably seeds with a triazole fungicide as defined above, wherein the plant corresponds to a row of table T6.

In still a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T6.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T6 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T6 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T6 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T6 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T6 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T6 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T6 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T6 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T6 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T6 and the triazole is I-5.

**Table T6**

| No | detailed description | plant | Literature |
|---|---|---|---|
| T6-1 | drought tolerance | alfalfa | A*, B*, F* |
| T6-2 | drought tolerance | barley | A*, B*, C* |
| T6-3 | drought tolerance | canola | A*, B*, F* |
| T6-4 | drought tolerance | maize (maize) | A*, B*, C*, F* |
| T6-5 | drought tolerance | cotton | A*, B*, C*, F* |
| T6-6 | drought tolerance | pomefruit | A*, B* |
| T6-7 | drought tolerance | potato | A*, B*, C* |
| T6-8 | drought tolerance | rapeseed | A*, B*, C* |
| T6-9 | drought tolerance | rice | A*, B*, C*, F* |
| T6-10 | drought tolerance | soybean | A*, B*, F* |
| T6-11 | drought tolerance | sugarbeet | A*, B* |
| T6-12 | drought tolerance | sugarcane | A*, B*, F* |
| T6-13 | drought tolerance | sunflower | A*, B* |
| T6-14 | drought tolerance | tomato | A*, B*, C* |
| T6-15 | drought tolerance | wheat | A*, B*, C*, F* |
| T6-16 | tolerance to high salinity | alfalfa | A*, B* |
| T6-17 | tolerance to high salinity | barley | A*, B* |
| T6-18 | tolerance to high salinity | canola | A*, B* |
| T6-19 | tolerance to high salinity | maize | A*, D* |
| T6-20 | tolerance to high salinity | cotton | A*, D* |
| T6-21 | tolerance to high salinity | pomefruit | A*, D* |
| T6-22 | tolerance to high salinity | potato | A*, D* |
| T6-23 | tolerance to high salinity | rapeseed | A*, D* |
| T6-24 | tolerance to high salinity | rice | A*, D*, US7034139, WO 2001/30990 |
| T6-25 | tolerance to high salinity | soybean | A*, D* |
| T6-26 | tolerance to high salinity | sugarbeet | A*, D* |
| T6-27 | tolerance to high salinity | sugarcane | A*, D* |
| T6-28 | tolerance to high salinity | sunflower | A*, D* |
| T6-29 | tolerance to high salinity | tomato | A*, D* |
| T6-30 | tolerance to high salinity | wheat | A*, D* |
| T6-31 | low temperature tolerance | alfalfa | A*, E* |
| T6-32 | low temperature tolerance | barley | A* |
| T6-33 | low temperature tolerance | canola | A* |
| T6-34 | low temperature tolerance | maize | A*, E* |
| T6-35 | low temperature tolerance | cotton | A*, E* |
| T6-36 | low temperature tolerance | pomefruit | A* |
| T6-37 | low temperature tolerance | potato | A* |
| T6-38 | low temperature tolerance | rapeseed | A*, E* |
| T6-39 | low temperature tolerance | rice | A*, E* |
| T6-40 | low temperature tolerance | soybean | A*, E* |
| T6-41 | low temperature tolerance | sugarbeet | A* |
| T6-42 | low temperature tolerance | sugarcane | A* |
| T6-43 | low temperature tolerance | sunflower | A* |
| T6-44 | low temperature tolerance | tomato | A* |
| T6-45 | low temperature tolerance | wheat | A*, E* |
| T6-46 | low nitrogen supply tolerance | alfalfa | A* |
| T6-47 | low nitrogen supply tolerance | barley | A* |
| T6-48 | low nitrogen supply tolerance | canola | A* |
| T6-49 | low nitrogen supply tolerance | maize | A* |
| T6-50 | low nitrogen supply tolerance | cotton | A* |
| T6-51 | low nitrogen supply tolerance | pomefruit | A* |
| T6-52 | low nitrogen supply tolerance | potato | A* |
| T6-53 | low nitrogen supply tolerance | rapeseed | A* |
| T6-54 | low nitrogen supply tolerance | rice | A* |
| T6-55 | low nitrogen supply tolerance | soybean | A* |
| T6-56 | low nitrogen supply tolerance | sugarbeet | A* |
| T6-57 | low nitrogen supply tolerance | sugarcane | A* |
| T6-58 | low nitrogen supply tolerance | sunflower | A* |
| T6-59 | low nitrogen supply tolerance | tomato | A* |
| T6-60 | low nitrogen supply tolerance | wheat | A* |

| | | | |
|---|---|---|---|
| A* referes to WO 2000/04173, WO 2007/131699 and US 20080229448. B* referes to WO 2005/48693. C* referes to WO 2007/20001. D* referes to US7256326. E* referes to US4731499. F* refers to WO08002480. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which is listed in table T7.

In still a further embodiment, the present invention relates to a method of controlling harmful fungi and/or increasing the health of cultivated plants by treating plant propagation materials, preferably seeds with a triazole fungicide as defined above, wherein the plant corresponds to a row of table T7.

In another embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T7.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T7 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T7 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T7 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T7 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T7 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T7 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T7 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T7 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T7 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T7 and the triazole is I-5.

In a further specific embodiment, the present invention relates to a method of controlling harmful fungi and/or increasing the health of plants by treating cultivated plants, parts of such plants or at their locus of growth with a triazole fungicide, wherein the plant is selected from T7-5, T7-6, T7-7, T7-8 and T7-9 and the triazole is I-1.

In still a further specific embodiment, the present invention relates to a method of controlling harmful fungi and/or increasing the health of plants by treating cultivated plants, parts of such plants or at their locus of growth with a triazole fungicide, wherein the plant is selected from T7-5, T7-6, T7-7, T7-8 and T7-9 and the triazole is I-2.

In still a further specific embodiment, the present invention relates to a method of controlling harmful fungi and/or increasing the health of plants by treating cultivated plants, parts of such plants or at their locus of growth with a triazole fungicide, wherein the plant is selected from T7-5, T7-6, T7-7, T7-8 and T7-9 and the triazole is I-3.

In still a further specific embodiment, the present invention relates to a method of controlling harmful fungi and/or increasing the health of plants by treating cultivated plants, parts of such plants or at their locus of growth with a triazole fungicide, wherein the plant is selected from T7-5, T7-6, T7-7, T7-8 and T7-9 and the triazole is I-4.

In still a further specific embodiment, the present invention relates to a method of controlling harmful fungi and/or increasing the health of plants by treating cultivated plants, parts of such plants or at their locus of growth with a triazole fungicide, wherein the plant is selected from T7-5, T7-6, T7-7, T7-8 and T7-9 and the triazole is I-5.

In a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T7-5, T7-6, T7-7, T7-8 and T7-9 and the triazole is I-1.

In still a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T7-5, T7-6, T7-7, T7-8 and T7-9 and the triazole is I-2.

In still a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T7-5, T7-6, T7-7, T7-8 and T7-9 and the triazole is I-3.

In still a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T7-5, T7-6, T7-7, T7-8 and T7-9 and the triazole is I-4.

In still a further specfic embodiment, the present invention relates to a method of controlling harmful fungi and/or increasing the health of plants by treating plant propagation materials, preferably seeds of cultivated plants of cultivated crops with a triazole fungicide, wherein the plant is selected from T7-5, T7-6, T7-7, T7-8 and T7-9 and the triazole is I-5.

**Table T7**

| No | detailed description | plant | Literature |
|---|---|---|---|
| T7-1 | drought tolerance | maize | A*, B*, C* |
| T7-2 | drought tolerance | canola | A*, B*, C* |
| T7-3 | drought tolerance | cotton | A*, B*, C* |
| T7-4 | drought tolerance | rapeseed | A*, B*, C* |
| T7-5 | drought tolerance | rice | A*, B*, C* |
| T7-6 | drought tolerance | soybean | A*, B* |
| T7-7 | drought tolerance | wheat | A*, B*, C* |
| T7-8 | tolerance to high salinity | rice | A*, D*, US7034139, WO 2001/30990 |
| T7-9 | tolerance to high salinity | tomato | A*, D* |
| T7-10 | low nitrogen supply tolerance | canola | A* |
| T7-11 | low nitrogen supply tolerance | maize | A* |

| | | | |
|---|---|---|---|
| A* referes to WO 2000/04173, WO 2007/131699 and US 20080229448. B* referes to WO 2005/48693. C* referes to WO 2007/20001. D* referes to US7256326. E* referes to US4731499. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which shows improved maturation, preferably fruit ripening, early maturity and delayed softening.

In further embodiment, the present invention relates to a method of controlling harmful fungi and/or increasing the health of cultivated plants by treating cultivated plants, parts of such plants, plant propagation materials, or at their locus of growth a the triazole fungicide as defined above, wherein the plant is a plant, which corresponds to a row of table T8.

In a further embodiment, the present invention relates to a method of controlling harmful fungi and/or increasing the health of cultivated plants by treating plant propagation materials, preferably seeds with a triazole fungicide as defined above, wherein the plant corresponds to a row of table T8.

In still a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T8.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T8 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T8 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T8 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T8 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T8 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T8 and the triazole is I-1.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T8 and the triazole is I-2.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T8 and the triazole is I-3.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T8 and the triazole is I-4.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T8 and the triazole is I-5.

In still a further specific embodiment, the present invention relates to a method of controlling harmful fungi and/or increasing the health of plants by treating cultivated plants, parts of such plants or at their locus of growth with a triazole fungicide, wherein the plant is T8-1 and the triazole is I-1.

In still a further specific embodiment, the present invention relates to a method of controlling harmful fungi and/or increasing the health of plants by treating cultivated plants, parts of such plants or at their locus of growth with a triazole fungicide, wherein the plant is T8-1 and the triazole is I-2.

In still a further specific embodiment, the present invention relates to a method of controlling harmful fungi and/or increasing the health of plants by treating cultivated plants, parts of such plants or at their locus of growth with a triazole fungicide, wherein the plant is T8-1 and the triazole is I-3.

In still a further specific embodiment, the present invention relates to a method of controlling harmful fungi and/or increasing the health of plants by treating cultivated plants, parts of such plants or at their locus of growth with a triazole fungicide, wherein the plant is T8-1 and the triazole is I-4.

In still a further specific embodiment, the present invention relates to a method of controlling harmful fungi and/or increasing the health of plants by treating cultivated plants, parts of such plants or at their locus of growth with a triazole fungicide, wherein the plant is T8-1 and the triazole is I-5.

In still a further embodiment, the present invention relates to a method of controlling harmful fungi and/or increasing the health of plants by treating plant propagation materials, preferably seeds of cultivated plants of cultivated crops with a triazole fungicide, wherein the plant is T8-1 and the triazole is I-1.

In still a further embodiment, the present invention relates to a method of controlling harmful fungi and/or increasing the health of plants by treating plant propagation materials, preferably seeds of cultivated plants of cultivated crops with a triazole fungicide, wherein the plant is T8-1 and the triazole is I-2.

In still a further embodiment, the present invention relates to a method of controlling harmful fungi and/or increasing the health of plants by treating plant propagation materials, preferably seeds of cultivated plants of cultivated crops with a triazole fungicide, wherein the plant is T8-1 and the triazole is I-3.

In still a further embodiment, the present invention relates to a method of controlling harmful fungi and/or increasing the health of plants by treating plant propagation materials, preferably seeds of cultivated plants of cultivated crops with a triazole fungicide, wherein the plant is T8-1 and the triazole is I-4.

In still a further embodiment, the present invention relates to a method of controlling harmful fungi and/or increasing the health of plants by treating plant propagation materials, preferably seeds of cultivated plants of cultivated crops with a triazole fungicide, wherein the plant is T8-1 and the triazole is I-5.

**Table T8**

| No | detailed description | plant | Literature |
|---|---|---|---|
| T8-1 | fruit ripening | tomato | US5952546, US 5512466, WO1997/001952, WO1995035387 WO1992/008798, Plant Cell. 1989; 1(1): 53-63. |
| T8-2 | fruit ripening | papaya | US5767376, US7084321 |
| T8-3 | fruit ripening | pepper | Plant Molecular Biology, Volume 50, 2002, Number 3 |
| T8-4 | fruit ripening | melon | WO1995035387 |
| T8-5 | fruit ripening | strawberry | WO1995035387 |
| T8-6 | fruit ripening | raspberry | WO1995035387 |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a transgenic plant, which has modified content in comparison to wildtype plants, preferably increased vitamin content, altered oil content, nicotine reduction, increased or reduced amino acid content, protein alteration, modified starch content, enzyme alteration, altered flavonoid content and reduced allergens (hypoallergenic plants), most preferably increased vitamin content, altered oil content, nicotine reduction, increased lysine content, amylase alteration, amylopectin alteration.

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which corresponds to a row of table T9.

In still a further embodiment, the present invention relates to a method of controlling harmful fungi and/or increasing the health of cultivated plants by treating plant propagation materials, preferably seeds with the triazole fungicide as defined above, wherein the plant corresponds to a row of table T9.

In still a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T9.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T9 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T9 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T9 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T9 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T9 and the triazole is I-5.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of Table T9 and the triazole is I-1.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of Table T9 and the triazole is I-2.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of Table T9 and the triazole is I-3.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of Table T9 and the triazole is I-4.

In still a further embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of Table T9 and the triazole is I-5.

**Table T9**

| No | detailed description | plant | Literature / commercial plants |
|---|---|---|---|
| T9-1 | increased Vitamin A content | tomato | US6797498 |
| T9-2 | increased Vitamin A content | rice | "Golden rice". Science 287, 303-305. |
| T9-3 | increased Vitamin E content | canola | US7348167, US11/170,711 (application) |
| T9-4 | increased Vitamin E content | barley | US11/170,711 (application) |
| T9-5 | increased Vitamin E content | maize | US11/170,711 (application) |
| T9-6 | increased Vitamin E content | rice | US11/170,711 (application) |
| T9-7 | increased Vitamin E content | rye | US11/170,711 (application) |
| T9-8 | increased Vitamin E content | potato | US7348167 |
| T9-9 | increased Vitamin E content | soybean | US7348167 |
| T9-10 | increased Vitamin E content | sunflower | US7348167 |
| T9-11 | increased Vitamin E content | wheat | US11/170,711 (application) |
| T9-12 | decreased nicotine content | tobacco | US20060185684, WO2005000352, WO2007064636 |
| T9-13 | amylase alteration | maize | "AmylaseTM" |
| T9-14 | amylopectin alteration | potato | US6784338, WO1997044471 |
| T9-15 | amylopectin alteration | maize | US20070261136 |
| T9-16 | modified oil content | balsam pear | A* |
| T9-17 | modified oil content | canola | US5850026, us6441278, US5723761 |
| T9-18 | modified oil content | catalpa | A* |
| T9-19 | modified oil content | cattail | A* |
| T9-20 | modified oil content | maize | A*, US 20060075515, US7294759 |
| T9-21 | modified oil content | cotton | US 6974898, WO2001079499 |
| T9-22 | modified oil content | grape | A* |
| T9-23 | modified oil content | rapeseed | US5723761 |
| T9-24 | modified oil content | rice | A* |
| T9-25 | modified oil content | soybean | A*, US6380462, US6365802, "Vistive II", "Vistsive III" |
| T9-26 | modified oil content | safflower | US6084164 |
| T9-27 | modified oil content | sunflower | A*, US6084164 |
| T9-28 | modified oil content | wheat | A* |
| T9-29 | modified oil content | vernonia | A* |
| T9-30 | hypoallergenic modification | soybean | US 6864362 |
| T9-31 | increased lysine content | canola | Bio/Technology 13, 577 - 582 (1995) |
| T9-32 | increased lysine content | maize | "Mavera high value corn" |
| T9-33 | increased lysine content | soybean | Bio/Technology 13, 577 - 582 (1995) |
| T9-34 | altered starch content | maize | US7317146, EP1105511 |
| T9-35 | altered starch content | rice | US7317146, EP1105511 |
| T9-36 | altered starch content | wheat | EP1105511 |
| T9-37 | altered starch content | barley | EP1105511 |
| T9-38 | altered starch content | rye | EP1105511 |
| T9-39 | altered starch content | oat | EP1105511 |
| T9-40 | altered fllavonoid content | alfalfa | WO 0004175 |
| T9-41 | altered fllavonoid content | apple | WO 0004175 |
| T9-42 | altered fllavonoid content | bean | WO 0004175 |
| T9-43 | altered fllavonoid content | maize | WO 0004175 |
| T9-44 | altered fllavonoid content | grape | WO 0004175 |
| T9-45 | altered fllavonoid content | pea | WO 0004175 |
| T9-46 | altered fllavonoid content | tomato | WO 0004175 |
| T9-47 | increased protein content | soybean | "Mavera high value soybeans" |

| | | | |
|---|---|---|---|
| A* refers to US7294759 and US7,157,621. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which corresponds to a row of table T10.

In a further embodiment, the present invention relates to a method of controlling harmful fungi and/or increasing the health of cultivated plants by treating plant propagation materials, preferably seeds with a triazole fungicide as defined above, wherein the plant corresponds to a row of table T10.

In a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T10.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T10 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T10 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T10 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T10 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T10 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T10 and the triazole is I-1.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T10 and the triazole is I-2.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T10 and the triazole is I-3.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T10 and the triazole is I-4.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T10 and the triazole is I-5.

In still a further specific embodiment, the present invention relates to a method of controlling harmful fungi and/or increasing the health of plants by treating cultivated plants, parts of such plants or at their locus of growth with a triazole fungicide, wherein the plant is selected from T10-1, T10-2, T10-6 and T10-10 and the triazole is I-1.

In still a further specific embodiment, the present invention relates to a method of controlling harmful fungi and/or increasing the health of plants by treating cultivated plants, parts of such plants or at their locus of growth with a triazole fungicide, wherein the plant is selected from T10-1, T10-2, T10-6 and T10-10 and the triazole is I-2.

In still a further specific embodiment, the present invention relates to a method of controlling harmful fungi and/or increasing the health of plants by treating cultivated plants, parts of such plants or at their locus of growth with a triazole fungicide, wherein the plant is selected from T10-1, T10-2, T10-6 and T10-10 and the triazole is I-3.

In still a further specific embodiment, the present invention relates to a method of controlling harmful fungi and/or increasing the health of plants by treating cultivated plants, parts of such plants or at their locus of growth with a triazole fungicide, wherein the plant is selected from T10-1, T10-2, T10-6 and T10-10 and the triazole is I-4.

In still a further specific embodiment, the present invention relates to a method of controlling harmful fungi and/or increasing the health of plants by treating cultivated plants, parts of such plants or at their locus of growth with a triazole fungicide, wherein the plant is selected from T10-1, T10-2, T10-6 and T10-10 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T10-1, T10-2, T10-6 and T10-10 and the triazole is I-1.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T10-1, T10-2, T10-6 and T10-10 and the triazole is I-2.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T10-1, T10-2, T10-6 and T10-10 and the triazole is I-3.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T10-1, T10-2, T10-6 and T10-10 and the triazole is I-4.

In a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T10-1, T10-2, T10-6 and T10-10 and the triazole is I-5.

**Table T10**

| No | detailed description | plant | Literature / commercial plants |
|---|---|---|---|
| T10-1 | increased Vitamin A content | tomato | US6797498 |
| T10-2 | increased Vitamin A content | rice | "Golden rice". Science 287, 303-305. |
| T10-3 | increased Vitamin E content | canola | US7348167, US11/170,711 |
| T10-4 | decreased nicotine content | tobacco | US20060185684, WO2005000352, WO2007064636 |
| T10-5 | amylase alteration | maize | "AmylaseTM" |
| T10-6 | amylopectin alteration | potato | US6784338, WO1997044471 |
| T10-7 | modified oil content | canola | US5850026, US6441278, US5723761 |
| T10-8 | modified oil content | rapeseed | US5723761 |
| T10-9 | modified oil content | safflower | US6084164 |
| T10-10 | modified oil content | soybean | A*, US6380462, US6365802; "Vistive II", "Vistsive III" |
| T10-11 | increased protein content | soybean | "Mavera high value soybeans" |
| T10-12 | increased lysine content | maize | "Mavera high value corn" |

| | | | |
|---|---|---|---|
| A* refers to US7294759 and US7,157,621. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which shows improved nutrient utilization, preferably the uptake, assimilation and metabolism of nitrogen and phosphorous.

In still a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which corresponds to a row of table T11.

In still a further embodiment, the present invention relates to a method of controlling harmful fungi and/or increasing the health of cultivated plants by treating plant propagation materials, preferably seeds with a triazole fungicide as defined above, wherein the plant corresponds to a row of table T11.

In still a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T11.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T11 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T11 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T11 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T11 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T11 and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T11 and the triazole is I-1.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T11 and the triazole is I-2.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T11 and the triazole is I-3.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T11 and the triazole is I-4.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T11 and the triazole is I-5.

In still a further specific embodiment, the present invention relates to a method of controlling harmful fungi and/or increasing the health of plants by treating cultivated plants, parts of such plants or at their locus of growth with a triazole fungicide, wherein the plant is selected from T11-2, T11-3, T11-4 and T11-15 and the triazole is I-1.

In still a further specific embodiment, the present invention relates to a method of controlling harmful fungi and/or increasing the health of plants by treating cultivated plants, parts of such plants or at their locus of growth with a triazole fungicide, wherein the plant is selected from T11-2, T11-3, T11-4 and T11-15 and the triazole is I-2.

In still a further specific embodiment, the present invention relates to a method of controlling harmful fungi and/or increasing the health of plants by treating cultivated plants, parts of such plants or at their locus of growth with a triazole fungicide, wherein the plant is selected from T11-2, T11-3, T11-4 and T11-15 and the triazole is I-3.

In still a further specific embodiment, the present invention relates to a method of controlling harmful fungi and/or increasing the health of plants by treating cultivated plants, parts of such plants or at their locus of growth with a triazole fungicide, wherein the plant is selected from T11-2, T11-3, T11-4 and T11-15 and the triazole is I-4.

In still a further specific embodiment, the present invention relates to a method of controlling harmful fungi and/or increasing the health of plants by treating cultivated plants, parts of such plants or at their locus of growth with a triazole fungicide, wherein the plant is selected from T11-2, T11-3, T11-4 and T11-15 and the triazole is I-5.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T11-2, T11-3, T11-4 and T11-15 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T11-2, T11-3, T11-4 and T11-15 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T11-2, T11-3, T11-4 and T11-15 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T11-2, T11-3, T11-4 and T11-15 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T11-2, T11-3, T11-4 and T11-15 and the triazole is I-5.

**Table T11**

| No | detailed description | plant | Literature |
|---|---|---|---|
| T11-1 | nitrogen utilization (D*) | alfalfa | A*, B*, F* |
| T11-2 | nitrogen utilization (D*) | barley | A*, B* |
| T11-3 | nitrogen utilization (D*) | canola | A*, B*, F* |
| T11-4 | nitrogen utilization (D*) | maize | A*, B*, F* |
| T11-5 | nitrogen utilization (D*) | cotton | B*, F* |
| T11-6 | nitrogen utilization (D*) | potato | B*, E*, F* |
| T11-7 | nitrogen utilization (D*) | rapeseed | B* |
| T11-8 | nitrogen utilization (D*) | rice | A*, B*, F* |
| T11-9 | nitrogen utilization (D*) | soybean | A*, B*, F* |
| T11-10 | nitrogen utilization (D*) | sugarbeet | B*, E* |
| T11-11 | nitrogen utilization (D*) | sugarcane | B*, E* |
| T11-12 | nitrogen utilization (D*) | sunflower | B* |
| T11-13 | nitrogen utilization (D*) | tobacco | E*, F* |
| T11-14 | nitrogen utilization (D*) | tomato | B*, F* |
| T11-15 | nitrogen utilization (D*) | wheat | A*, B*, F* |
| T11-16 | phosphorous utilization (D*) | alfalfa | C* |
| T11-17 | phosphorous utilization (D*) | barley | C* |
| T11-18 | phosphorous utilization (D*) | canola | C* |
| T11-19 | phosphorous utilization (D*) | maize | C* |
| T11-20 | phosphorous utilization (D*) | cotton | C* |
| T11-21 | phosphorous utilization (D*) | potato | US7417181, C* |
| T11-22 | phosphorous utilization (D*) | rapeseed | C* |
| T11-23 | phosphorous utilization (D*) | rice | C* |
| T11-24 | phosphorous utilization (D*) | soybean | C* |
| T11-25 | phosphorous utilization (D*) | sugarbeet | C* |
| T11-26 | phosphorous utilization (D*) | sugarcane | C* |
| T11-27 | phosphorous utilization (D*) | sunflower | C* |
| T11-28 | phosphorous utilization (D*) | tomato | US7417181, C* |
| T11-29 | phosphorous utilization (D*) | wheat | C* |

| | | | |
|---|---|---|---|
| A* refers to US6084153. B* referes to US5955651 and US6864405. C* refers to US10/898,322 (application). D* the term "utilization" refers to the improved nutrient uptake, assimilation or metabolism. E* refers to WO1995009911. F* refers to WO1997030163. | | | |

In a further embodiment, the present invention relates to a method of controlling harmful fungi and/or increasing the health of cotton plants by treating cultivated plants parts of such plants, plant propagation materials, or at their locus of growth with a triazole fungicide as defined above, wherein the cotton plant is a plant, which produces higher quality fiber, preferably improved micronaire of the fiber, increased strength, improved staple length, improved length unifomity and color of the fibers.

In still a further embodiment, the present invention relates to a method of controlling harmful fungi and/or increasing the health of cotton plants by treating cultivated plants parts of such plants, plant propagation materials, or at their locus of growth with a triazole fungicide as defined above.

In still a further embodiment, the present invention relates to a method of controlling harmful fungi and/or increasing the health of cotton plants by treating plant propagation materials, preferably seeds with a triazole fungicide as defined above.

In still another embodiment, the present invention relates to a method of controlling harmful fungi and/or increasing the health of cotton plants by treating cultivated plants parts of such plants or at their locus of growth with a triazole fungicide as defined above.

In still a further embodiment, the present invention relates to a method of controlling harmful fungi and/or increasing the health of cultivated plants by treating cultivated plants, parts of such plants, plant propagation materials, or at their locus of growth with a triazole fungicide as defined above.

In still a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a plant, which is listed in table T12.

In a further embodiment, the present invention relates to a method of controlling harmful fungi and/or increasing the health of cultivated plants by treating plant propagation materials, preferably seeds with a triazole fungicide as defined above, wherein the plant corresponds to a row of table T12.

In still a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T12.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T12 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T12 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T12 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T12 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T12 and the triazole is I-5.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T12 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T12 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T12 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T12 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T12 and the triazole is I-5.

**Table T12**

| No | detailed description | plant | Literature |
|---|---|---|---|
| T12-1 | male sterility | canola | US6720481 |
| T12-2 | male sterility | maize | A*, B*, C* |
| T12-3 | male sterility | rice | B*, EP1135982 |
| T12-4 | male sterility | soybean | B*, C*, WO1996040949 |
| T12-5 | male sterility | sunflower | C* |
| T12-6 | male sterility | tomato | US7345222 |
| T12-7 | male sterility | wheat | B* |

| | | | |
|---|---|---|---|
| A* refers to US6281348, US6399856, US7230168, US6072102. B* refers to WO2001062889. C* refers to WO1996040949. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is resistant to antibitotics, more referably resistant to kanamycin, neomycin and ampicillin, most preferably resistant to kanamycin.

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant corresponds to a row of table T13.

In still a further embodiment, the present invention relates to a method of controlling harmful fungi and/or increasing the health of cultivated plants by treating plant propagation materials, preferably seeds with a triazole fungicide as defined above, wherein the plant corresponds to a row of table T13.

In still a further embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T13.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T13 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T13 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T13 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T13 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of table T13 and the triazole is I-5.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T13 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T13 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T13 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T13 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T13 and the triazole is I-5.

In a further specific embodiment, the present invention relates to a method of controlling harmful fungi and/or increasing the health of plants by treating cultivated plants, parts of such plants or at their locus of growth with a triazole fungicide, wherein the plant is T13-6 and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant is T13-6 and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant is T13-6 and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant is T13-6 and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant is T13-6 and the triazole is I-5.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is T13-6 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is T13-6 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is T13-6 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is T13-6 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is T13-6 and the triazole is I-5.

**Table T13**

| No | detailed description | plant | Literature / commercial plants |
|---|---|---|---|
| T13-1 | kanamycin resistance | canola | A* |
| T13-2 | kanamycin resistance | cotton | A* |
| T13-3 | kanamycin resistance | flax | A* |
| T13-4 | kanamycin resistance | maize | A* |
| T13-5 | kanamycin resistance | oilseed rape | A* |
| T13-6 | kanamycin resistance | potato | A* |
| T13-7 | kanamycin resistance | rape seed | A* |
| T13-8 | kanamycin resistance | sugar beet | A* |
| T13-9 | kanamycin resistance | tomato | A*, B* |

| | | | |
|---|---|---|---|
| A* refers to Plant Cell Reports, 20, 2001, 610-615. Trends in Plant Science, 11, 2006, 317-319. Plant Molecular Biology, 37, 1998, 287-296. Mol Gen Genet., 257, 1998, 606-13. B* refers to Plant Cell Reports, 6, 1987, 333-336. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant is a transgenic plant, which has two traits stacked, more preferably two or more traits selected from the group consisting of herbicide tolerance, insecticide resistance, fungicidal resistance, viral resistance, bacterial resistance, stress tolerance, maturation alteration, content modification and modified nutrient uptake, most preferably the combination of herbicide tolerance and insecticide resistance, two herbicide tolerances, herbicide tolerance and stress tolerance, herbicide tolerance and modified content, two herbicide tolerances and insecticide resistance, herbicide tolerance, insecticide resistance and stress tolerance, herbicide tolerance, insecticide resistance and modified content.

In still a further embodiment, the present invention relates to a method of controlling harmful fungi and/or increasing the health of cultivated plants by treating plant propagation materials, preferably seeds with a triazole fungicide as defined above, wherein the plant corresponds to a row of table T14.

In another embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of table T14.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T14 and the triazole is I-1.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T14 and the triazole is I-2.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T14 and the triazole is I-3.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T14 and the triazole is I-4.

In a specific embodiment, the present invention relates to a method of controlling harmful fungi and/or increasing the health of plants by treating cultivated plants, parts of such plants or at their locus of growth with a triazole fungicide, wherein the plant corresponds to a row of table T14 and the triazole is I-5.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T14 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T14 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T14 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T14 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of table T14 and the triazole is I-5.

In still a further specific embodiment, the present invention relates to a method of controlling harmful fungi and/or increasing the health of plants by treating cultivated plants, parts of such plants or at their locus of growth with a triazole fungicide, wherein the plant is selected from T14-1, T14-8, T14-13, T14-18, T14-19, T14-20, T14-21, T14-35, T14-36 and T14-37 and the triazole is I-1.

In still a further specific embodiment, the present invention relates to a method of controlling harmful fungi and/or increasing the health of plants by treating cultivated plants, parts of such plants or at their locus of growth with a triazole fungicide, wherein the plant is selected from T14-1, T14-8, T14-13, T14-18, T14-19, T14-20, T14-21, T14-35, T14-36 and T14-37 and the triazole is I-2.

In still a further specific embodiment, the present invention relates to a method of controlling harmful fungi and/or increasing the health of plants by treating cultivated plants, parts of such plants or at their locus of growth with a triazole fungicide, wherein the plant is selected from T14-1, T14-8, T14-13, T14-18, T14-19, T14-20, T14-21, T14-35, T14-36 and T14-37 and the triazole is I-3.

In still a further specific embodiment, the present invention relates to a method of controlling harmful fungi and/or increasing the health of plants by treating cultivated plants, parts of such plants or at their locus of growth with a triazole fungicide, wherein the plant is selected from T14-1, T14-8, T14-13, T14-18, T14-19, T14-20, T14-21, T14-35, T14-36 and T14-37 and the triazole is I-4.

In still a further specific embodiment, the present invention relates to a method of controlling harmful fungi and/or increasing the health of plants by treating cultivated plants, parts of such plants or at their locus of growth with a triazole fungicide, wherein the plant is selected from T14-1, T14-8, T14-13, T14-18, T14-19, T14-20, T14-21, T14-35, T14-36 and T14-37 and the triazole is I-5.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T14-1, T14-8, T14-13, T14-18, T14-19, T14-20, T14-21, T14-35, T14-36 and T14-37 and the triazole is I-1.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T14-1, T14-8, T14-13, T14-18, T14-19, T14-20, T14-21, T14-35, T14-36 and T14-37 and the triazole is I-2.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T14-1, T14-8, T14-13, T14-18, T14-19, T14-20, T14-21, T14-35, T14-36 and T14-37 and the triazole is I-3.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T14-1, T14-8, T14-13, T14-18, T14-19, T14-20, T14-21, T14-35, T14-36 and T14-37 and the triazole is I-4.

In still a further specific embodiment, the present invention relates to a method of controlling harmful fungi and/or increasing the health of plants by treating plant propagation materials, preferably seeds of cultivated plants of cultivated crops with a triazole fungicide, wherein the plant is selected from T14-1, T14-8, T14-13, T14-18, T14-19, T14-20, T14-21, T14-35, T14-36 and T14-37 and the triazole is I-5.

**Table T14**

| No | detailed description | plant | Literature / commercial plants |
|---|---|---|---|
| T14-1 | corn borer resistance + glyphosate tolerance | maize | "YieldGard Roundup Ready", YieldGard Roundup Ready 2" (Mon1x) |
| T14-2 | corn borer resistance + glufosinate tolerance | maize | "Agrisure CB/LL" (Syntenta) |
| T14-3 | glyphosate tolerance + corn rootworm resistance | maize | "Yield Gard VT Root-worm/RR2" |
| T14-4 | glyphosate tolerance + corn rootworm/corn borer resistance | maize | "Yield Gard VT Triple" |
| T14-5 | glufosinate tolerance + lepidopteran resistance (Cry1 F; western bean cutworm, corn borer, black cutworm, fall armyworm resistance) | maize | "Herculex I" |
| T14-6 | glyphosate tolerance + corn rootworm resistance | maize | "YieldGard Corn Rootworm/Roundup Ready 2" (Mon1x) |
| T14-7 | glyphosate tolerance + gluphosinate tolerance + lepidopteran resistance (Cry1 F; western bean cutworm, corn borer, black cutworm, fall armyworm resistance) | maize | "Herculex I / Roundup Ready 2"; |
| T14-8 | glyphosate tolerance + corn rootworm resistance + corn borer resistance | maize | "YieldGard Plus / Roundup Ready 2" (Mon1x) |
| T14-9 | gluphosinate tolerance + lepidopteran resistance (Cry3A; western corn rootworm, northern corn rootworm, Mexican corn rootworm resistance) | maize | "Agrisure GT/RW" (Syngenta) |
| T14-10 | glyphosate tolerance + gluphosinate tolerance + corn borer resistance | maize | "Agrisure GT/CB/LL" (Syngenta) |
| T14-11 | glufosinate tolerance + lepidopteran resistance (Cry34/35Ab1; western corn rootworm, northern corn rootworm, Mexican corn rootworm resistance) | maize | "Herculex RW" (Dow, Pioneer) |
| T14-12 | glufosinate tolerance + lepidopteran resistance (Cry1 F + Cry34/35Ab1; western corn rootworm, northern corn rootworm, Mecxican corn rootworm, western bean cutworm, corn borer, black cutworm, fall armyworm resistance) | maize | "Herculex Xtra" (Dow, Pioneer) |
| T14-13 | glyphosate tolerance + glufosinate tolerance + corn borer resistance + corn rootworm resistance | maize | "Hercules Quad-Stack" |
| T14-14 | glyphosate tolerance + corn rootworm resistance | maize | "Yield Gard VT Root-worm/RR2" |
| T14-15 | glufosinate tolerance + corn borer resistance (Cry1Ab) + lepidopteran resistance (Cry3A; western corn rootworm, northern corn rootworm, Mexican corn rootworm resistance) | maize | "Agrisure CB/LL/RW" (Syngenta) |
| T14-16 | glyphosate tolerance + corn borer resistance (Cry1Ab) + lepidopteran resistance (Cry3A; western corn rootworm, northern corn rootworm, Mexican corn rootworm resistance) | maize | "Agrisure 3000GT" (Syngenta) |
| T14-17 | glyphosate tolerance + resistance to corn borer and corn rootworm + high lysine content | maize | "Mavera high-value corn" (Mon1x) |
| T14-18 | glyphosate tolerance + ALS herbicide tolerance (F*) | soybean | "Optimum GAT" (DuPont, Pioneer) |
| T14-19 | glyphosate tolerance + lepidoptera resistance (Bt) | soybean | A*, US7432421 |
| T14-20 | glyphosate tolerance + Dicamba tolerance | soybean | A*, US7105724 |
| T14-21 | glyphosate tolerance + modified oil content | soybean | A*, G* |
| T14-22 | glufosinate tolerance + modified oil content | soybean | G*, I* |
| T14-23 | glyphosate tolerance + dicamba tolerance | cotton | A*, US7105724, WO2008051633 |
| T14-24 | glufosinate tolerance + lepidopteran resistance | cotton | D*, US5646024, US5561236 |
| T14-25 | glyphosate tolerance + lepidopteran resistance | cotton | A*, D* |
| T14-26 | glufosinate tolerance + dicamba tolerance | cotton | US5646024, US5561236, US7105724, WO2008051633 |
| T14-27 | glyphosate tolerance + improved fiber quality | cotton | A*, E* |
| T14-28 | glufosinate tolerance + improved fiber quality | cotton | E*, US5646024, US5561236 |
| T14-29 | glyphosate tolerance + drought tolerance | cotton | A*, C* |
| T14-30 | glyphosate tolerance + dicamba tolerance + drought tolerance | cotton | A*, C*, US7105724, WO2008051633 |
| T14-31 | glufosinate tolerance + insect resistance (tobacco budworm, cotton bollworm, fall armyworm, beet armyworm, cabbage looper, soybean lopper, pink bollworm resistance) | cotton | D*, US5646024, US5561236 |
| T14-32 | glyphosate tolerance + modified oil content | canola | A*, US5850026, US6441278, US5723761, WO2005033319 |
| T14-33 | glufosinate tolerance + modified oil content | canola | US5646024, US5561236, US5850026, US6441278, US5723761, WO2005033319 |
| T14-34 | glyphosate tolerance + insect resistance | canola | D*, A* |
| T14-35 | glufosinate tolerance + insect resistance | canola | D*, US5646024, US5561236 |
| T14-36 | IMI tolerance + Coleoptera resistance | rice | B*, WO2001021821 |
| T14-37 | IMI tolerance + Lepidoptera resistance | rice | B*, WO2001021821 |
| T14-38 | IMI tolerance + modified oil content | sunflower | Tan et. al, Pest Manag. Sci 61, 246-257 (2005). |
| T14-39 | Coleoptera resistance, + Kanamycin resistance | potato | H* |
| T14-40 | Coleoptera resistance, + Kanamycin resistance + potato leaf roll virus resistance | potato | H* |
| T14-41 | Coleoptera resistance, + Kanamycin resistance +potato leaf roll virus resistance | potato | H* |

| | | | |
|---|---|---|---|
| A* refers to US5188642, US4940835, US5633435, US5804425 and US5627061. B* refers to imidazolinone-herbicide resistant rice plants with specific mutation of the acetohydroxyacid synthase gene: S653N ( see e.g. US 2003/0217381 ), S654K ( see e.g. US 2003/0217381), A122T (see e.g. WO 04/106529) S653(At)N, S654(At)K, A122(At)T and other resistant rice plants as described in WO0027182, WO 05/20673 and WO0185970 or US patents US 5545822, US 5736629, US 5773703, US 5773704, US- 5952553, US 6274796, wherein plants with mutation S653A and A122T are most preferred. C* referes to WO 2000/04173, WO 2007/131699, US 20080229448 and WO 2005/48693. D* refers to WO199307278 and WO199534656. E* refers to WO 1996/26639, US7329802, US6472588 and WO 2001/17333. F* refers to sulfonylurea and imidazolinone herbicides, such as imazamox, imazethapyr, imazaquin, chlorimuron, flumetsulam, cloransulam, diclosulam and thifensulfuron. G* refers to US6380462, US6365802, US7294759 and US7,157,621. H* refers to Plant Cell Reports, 20, 2001, 610-615. Trends in Plant Science, 11, 2006, 317-319. Plant Molecular Biology, 37, 1998, 287-296. Mol Gen Genet., 257, 1998, 606-13. Federal Register (USA), Vol.60, No.113, 1995, page 31139. Federal Register (USA), Vol.67, No.226, 2002, page 70392. Federal Register (USA), Vol.63, No.88, 1998, page 25194. Federal Register (USA), Vol.60, No.141, 1995, page 37870. Canadian Food Inspection Agency, FD/OFB-095-264-A, October 1999, FD/OFB-099-127-A, October 1999. I* refers to Federal Register (USA), Vol. 61, No. 160, 1996, page 42581. Federal Register (USA), Vol. 63, No.204, 1998, page 56603. | | | |

In a further embodiment, the present invention relates to a method of controlling harmful fungi and/or increasing the health of cultivated plants by treating cultivated plants, parts of such plants, plant propagation materials, or at their locus of growth with a triazole fungicide as defined above, wherein the plant corresponds to a row of rows A1 to A400 of table A.

In a further embodiment, the present invention relates to a method of controlling harmful fungi and/or increasing the health of cultivated plants by treating plant propagation materials, preferably seeds with a triazole fungicide as defined above, wherein the plant corresponds to a row of rows A1 to A400 of table A.

In another embodiment, the present invention relates to a method of controlling harmful fungi and/or increasing the health of cultivated plants by treating cultivated plants, parts of such plants or at their locus of growth with a triazole fungicide as defined above, wherein the plant corresponds to a row of rows A1 to A400 of table A.

In a specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-1.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-2.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-3.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-4.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-5.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-6.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-7.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-8.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-9.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-10.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-11.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-12.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-13.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-14.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-15.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-16.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-17.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-18.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-19.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-20.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-21.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-22.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-23.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-24.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-25.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-26.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-27.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-28.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-29.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-30.

In a further specific embodiment, the present invention relates to a method of controlling harmful fungi and/or increasing the health of plants by treating cultivated plants, parts of such plants or at their locus of growth with a triazole fungicide, wherein the plant corresponds to a row of rows A1 to A400 of table A and the triazole is I-31.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-1.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-2.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-3.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-4.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-5.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-6.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-7.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-8.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-9.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-10.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-11.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-12.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-13.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-14.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-15.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-16.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-17.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-18.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-19.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-20.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-21.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-22.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-23.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-24.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-25.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-26.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-27.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-28.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-29.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-30.

In a further specific embodiment, the present invention relates to a method of controlling harmful fungi and/or increasing the health of plants by treating plant propagation materials, preferably seeds of cultivated plants of cultivated crops with a triazole fungicide, wherein the plant corresponds to a row of rows A1 to A400 of table A and the triazole is I-31.

**Table A:**

| **row No.** | **Crop Crop, latin name** | **Event Name** | **Event Code** | **Tradename** | **All Trait Genes - Details & Genes** | **Company** |
|---|---|---|---|---|---|---|
| A1 | Alfalfa Medicago sativa | J101 | MON-ØØ1Ø1-8 | Roundup Ready™ Alfalfa | HT (Gly) / cp4 epsps (aroA:CP4) | Monsanto |
| A2 | Alfalfa Medicago sativa | J101 x J163 | MON-ØØ1Ø1-8 x MON-00163-7 | Roundup Ready™ Alfalfa | HT (Gly) / cp4 epsps (aroA:CP4) HT (Gly) / cp4 epsps (aroA:CP4) | Monsanto |
| A3 | Alfalfa Medicago sativa | J163 | MON-ØØ163-7 | Roundup Ready™ Alfalfa | HT (Gly) / cp4 epsps (aroA:CP4) | Monsanto |
| A4 | Alfalfa Medicago sativa | KK179 | MON-ØØ179-5 | Not available | ST (Lignin) / ccomt (inverted repeat) | Monsanto |
| A5 | Argentine Canola Brassica napus | 23-18-17 (Event 18) | CGN-89111-8 | Laurical™ Canola | ST (Oil) / te (thioesterase) | Monsanto |
| A6 | Argentine Canola Brassica napus | 23-198 (Event 23) | CGN-89465-2 | Laurical™ Canola | ST (Oil) / te (thioesterase) | Monsanto |
| A7 | Argentine Canola Brassica napus | 61061 | DP-Ø61061-7 | not available | HT (Gly) / gat4621 | Dupont |
| A8 | Argentine Canola Brassica napus | 73496 | DP-Ø73496-4 | Optimum® Gly canola | HT (Gly) / gat4621 | Dupont |
| A9 | Argentine Canola Brassica napus | GT200 (RT200) | MON-89249-2 | Roundup Ready™ Canola | HT (Gly) / EPSPS HT (Gly) / goxv247 | Monsanto |
| A10 | Argentine Canola Brassica napus | GT73 (RT73) | MON-ØØØ73-7 | Roundup Ready™ Canola | HT (Gly) / EPSPS HT (Gly) / goxv247 | Monsanto |
| A11 | Argentine Canola Brassica napus | HCN10 (Topas 19/2) | not available | Liberty Link™ Independence™ | HT (Glu) / bar | Bayer Crop Science |
| A12 | Argentine Canola Brassica napus | HCN28 (T45) | ACS-BNØØ8-2 | InVigor™ Canola | HT (Glu) / pat (syn) | Bayer Crop Science |
| A13 | Argentine Canola Brassica napus | HCN92 (Topas 19/2) | ACS-BNØØ7-1 | Liberty Link™ Innovator™ | HT (Glu) / bar | Bayer Crop Science |
| A14 | Argentine Canola Brassica napus | MON88302 | MON-883Ø2-9 | TruFlex™ Roundup Ready™ Canola | HT (Gly) / cp4 epsps (aroA:CP4) | Monsanto |
| A15 | Argentine Canola Brassica napus | MON88302 x MS8 x RF3 | MON-883Ø2-9 x ACS-BNØØ5-8 x ACS-BNØØ3-6 | not available | HT (Gly) / cp4 epsps (aroA:CP4) HT (Glu) / bar PC (MS) / barnase PC (FR) / barstar | Monsanto |
| A16 | Argentine Canola Brassica napus | MON88302 x RF3 | MON-883Ø2-9 x ACS-BNØØ3-6 | not available | HT (Gly) / cp4 epsps (aroA:CP4) HT (Glu) / bar PC (FR) / barstar | Monsanto |
| A17 | Argentine Canola Brassica napus | MPS961 | not available | Phytaseed ™ Canola | ST (P) / phyA | BASF |
| A18 | Argentine Canola Brassica napus | MPS962 | not available | Phytaseed ™ Canola | ST (P) / phyA | BASF |
| A19 | Argentine Canola Brassica napus | MPS963 | not available | Phytaseed ™ Canola | ST (P) / phyA | BASF |
| A20 | Argentine Canola Brassica napus | MPS964 | not available | Phytaseed ™ Canola | ST (P) / phyA | BASF |
| A21 | Argentine Canola Brassica napus | MPS965 | not available | Phytaseed ™ Canola | ST (P) / phyA | BASF |
| A22 | Argentine Canola Brassica napus | MS1 (B91-4) | ACS-BNØØ4-7 | InVigor™ Canola | HT (Glu) / bar PC (MS) / barnase | Bayer Crop Science |
| A23 | Argentine Canola Brassica napus | MS1 x RF1 (PGS1) | ACS-BNØØ4-7 x ACS-BNØØ1-4 | InVigor™ Canola | HT (Glu) / bar PC (MS) / barnase PC (FR) / barstar | Bayer Crop Science |
| A24 | Argentine Canola Brassica napus | MS1 x RF2 (PGS2) | ACS-BNØØ4-7 x ACS-BNØØ2-5 | InVigor™ Canola | HT (Glu) / bar PC (MS) / barnase PC (FR) / barstar | Bayer Crop Science |
| A25 | Argentine Canola Brassica napus | MS1 x RF3 | ACS-BNØØ4-7 x ACS-BNØØ3-6 | Invigor™ Canola | HT (Glu) / bar PC (MS) / barnase PC (FR) / barstar | Bayer Crop Science |
| A26 | Argentine Canola Brassica napus | MS8 | ACS-BNØØ5-8 | InVigor™ Canola | HT (Glu) / bar PC (MS) / barnase | Bayer Crop Science |
| A27 | Argentine Canola Brassica napus | MS8 x RF3 | ACS-BNØØ5-8 x ACS-BNØØ3-6 | InVigor™ Canola | HT (Glu) / bar PC (MS) / barnase PC (FR) / barstar | Bayer Crop Science |
| A28 | Argentine Canola Brassica napus | MS8 x RF3 x GT73 (RT73) | ACS-BNØØ5-8 x ACS-BNØØ3-6 x MON-ØØØ73-7 | not available | HT (Glu) / bar PC (MS) / barnase PC (FR) / barstar HT (Gly) / EPSPS HT (Gly) / goxv247 | Bayer Crop Science |
| A29 | Argentine Canola Brassica napus | OXY-235 | ACS-BNØ11-5 | Navigator™ Canola | HT (Ox) / bxn | Bayer Crop Science |
| A30 | Argentine Canola Brassica napus | PHY14 | not available | not available | HT (Glu) / bar PC (MS) / barnase PC (FR) / barstar | Bayer Crop Science |
| A31 | Argentine Canola Brassica napus | PHY23 | not available | not available | HT (Glu) / bar PC (MS) / barnase PC (FR) / barstar | Bayer Crop Science |
| A32 | Argentine Canola Brassica napus | PHY35 | not available | not available | HT (Glu) / bar PC (MS) / barnase PC (FR) / barstar | Bayer Crop Science |
| A33 | Argentine Canola Brassica napus | PHY36 | not available | not available | HT (Glu) / bar PC (MS) / barnase PC (FR) / barstar | Bayer Crop Science |
| A34 | Argentine Canola Brassica napus | RF1 (B93-101) | ACS-BNØØ1-4 | InVigor™ Canola | HT (Glu) / bar PC (FR) / barstar | Bayer Crop Science |
| A35 | Argentine Canola Brassica napus | RF2 (B94-2) | ACS-BNØØ2-5 | InVigor™ Canola | HT (Glu) / bar PC (FR) / barstar | Bayer Crop Science |
| A36 | Argentine Canola Brassica napus | RF3 | ACS-BNØØ3-6 | InVigor™ Canola | HT (Glu) / bar PC (FR) / barstar | Bayer Crop Science |
| A37 | Argentine Canola Brassica napus | 45A37, 46A40 | 45A37, 46A40 | not available | ST (Oil) / fad2 (mutant) | Pioneer |
| A38 | Argentine Canola Brassica napus | 46A12, 46A16 | 46A12, 46A16 | not available | ST (Oil) / fad2 (mutant) | Pioneer |
| A39 | Argentine Canola Brassica napus | NS738, NS1471, NS1473 | NS738, NS1471, NS1473 | Clearfield Canola | HT (Imi) / als (mutant) | Pioneer |
| A40 | Bean Phaseolus vulgaris | EMB6X 5.1 | EMB-PVØ51-1 | not available | VR (BGMV) / ac1 (sense and antisense) | Embrapa |
| A41 | Carnation Dianthus caryophyllus | 11 (7442) | FLO-Ø7442-4 | Moondust™ | ST (Color) / dfr ST (Color) / hfl (f3'5'h) | Florigene Pty. Ltd. |
| A42 | Carnation Dianthus caryophyllus | 11363 (1363A) | FLO-11363-1 | Moonshadow™ | ST (Color) / dfr ST (Color) / bp40 (f3'5'h) | Florigene Pty. Ltd. |
| A43 | Carnation Dianthus caryophyllus | 1226A (11226) | FLO-11226-8 | Moonshade™ | ST (Color) / dfr ST (Color) / bp40 (f3'5'h) | Florigene Pty. Ltd. |
| A44 | Carnation Dianthus caryophyllus | 123.2.2 (40619) | FLO-4Ø619-7 | Moonshade™ | ST (Color) / dfr ST (Color) / hfl (f3'5'h) | Florigene Pty. Ltd. |
| A45 | Carnation Dianthus caryophyllus | 123.2.38 (40644) | FLO-4Ø644-4 | Moonlite™ | ST (Color) / dfr ST (Color) / hfl (f3'5'h) | Florigene Pty. Ltd. |
| A46 | Carnation Dianthus caryophyllus | 123.8.12 | FLO-4Ø689-6 | Moonaqua™ | ST (Color) / dfr ST (Color) / bp40 (f3'5'h) | Florigene Pty. Ltd. |
| A47 | Carnation Dianthus caryophyllus | 123.8.8 (40685) | FLO-4Ø685-1 | Moonvista™ | ST (Color) / dfr ST (Color) / bp40 (f3'5'h) | Florigene Pty. Ltd. |
| A48 | Carnation Dianthus caryophyllus | 1351A (11351) | FLO-11351-7 | Moonshade™ | ST (Color) / dfr ST (Color) / bp40 (f3'5'h) | Florigene Pty. Ltd. |
| A49 | Carnation Dianthus caryophyllus | 1400A (11400) | FLO-114ØØ-2 | Moonshade™ | ST (Color) / dfr ST (Color) / bp40 (f3'5'h) | Florigene Pty. Ltd. |
| A50 | Carnation Dianthus caryophyllus | 15 | FLO-ØØØ15-2 | Moondust™ | ST (Color) / dfr ST (Color) / hfl (f3'5'h) | Florigene Pty. Ltd. |
| A51 | Carnation Dianthus caryophyllus | 16 | FLO-ØØØ16-3 | Moondust™ | ST (Color) / dfr ST (Color) / hfl (f3'5'h) | Florigene Pty. Ltd. |
| A52 | Carnation Dianthus caryophyllus | 19907 | IFD-199ØØ7-9 | Moonique™ | ST (Color) / dfr ST (Color) / bp40 (f3'5'h) ST (Color) / sfl (f3'5'h) HT (SU) / surB | Suntory Ltd. |
| A53 | Carnation Dianthus caryophyllus | 25947 | IFD-25947-1 | Moonpearl™ | ST (Color) / bp40 (f3'5'h) ST (Color) / dfr ST (Color) / dfr-diaca HT (SU) / surB | Suntory Ltd. |
| A54 | Carnation Dianthus caryophyllus | 25958 | IFD-25958-3 | Moonberry™ | ST (Color) / bp40 (f3'5'h) ST (Color) / dfr ST (Color) / dfr-diaca HT (SU) / surB | Suntory Ltd. |
| A55 | Carnation Dianthus caryophyllus | 26407 | IFD-264Ø7-2 | Moonvelvet™ | ST (Color) / hfl (f3'5'h) ST (Color) / cytb5 HT (SU) / surB | Suntory Ltd. |
| A56 | Carnation Dianthus caryophyllus | 4 | FLO-ØØØØ4-9 | Moondust™ | ST (Color) / dfr ST (Color) / hfl (f3'5'h) | Florigene Pty. Ltd. |
| A57 | Carnation Dianthus caryophyllus | 66 | FLO-ØØØ66-8 | not available | ST (Ripe) / acc (truncated) | Florigene Pty. Ltd. |
| A58 | Carnation Dianthus caryophyllus | 959A (11959) | FLO-11959-3 | Moonshade™ | ST (Color) / dfr ST (Color) / bp40 (f3'5'h) | Florigene Pty. Ltd. |
| A59 | Carnation Dianthus caryophyllus | 988A (11988) | FLO-11988-7 | Moonshade™ | ST (Color) / dfr ST (Color) / bp40 (f3'5'h) | Florigene Pty. Ltd. |
| A60 | Chicory Cichorium intybus | RM3-3 | not available | Seed Link™ | HT (Glu) / bar PC (MS) / barnase | Bejo Zaden BV |
| A61 | Chicory Cichorium intybus | RM3-4 | not available | Seed Link™ | HT (Glu) / bar PC (MS) / barnase | Bejo Zaden BV |
| A62 | Chicory Cichorium intybus | RM3-6 | not available | Seed Link™ | HT (Glu) / bar PC (MS) / barnase | Bejo Zaden BV |
| A63 | Cotton Gossypium hirsutum | 19-51 a | DD-Ø1951A-7 | not available | HT (SU) / S4-hrA | Dupont |
| A64 | Cotton Gossypium hirsutum | 281-24-236 | DAS-24236-5 | not available | IR (BL) / cry1F | Dow |
| A65 | Cotton Gossypium hirsutum | 281-24-236 x 3006-210-23 (MXB-13) | DAS-24236-5 x DAS-21023-5 | WideStrike™ Cotton | IR (BL) / cry1F IR (BL) / cry1Ac | Dow |
| A66 | Cotton Gossypium hirsutum | 3006-210-23 | DAS-21Ø23-5 | not available | IR (BL) / Cry1Ac | Dow |
| A67 | Cotton Gossypium hirsutum | 3006-210-23 x 281-24-236 x MON1445 | DAS-21Ø23-5 x DAS-24236-5 x MON-Ø1445-2 | WideStrike™ Roundup Ready™ Cotton | HT (Gly) / cp4 epsps (aroA:CP4) IR (BL) / cry1 F IR (BL) / cry1Ac HT (Glu) / bar | Monsanto |
| A68 | Cotton Gossypium hirsutum | 3006-210-23 x 281-24-236 x MON88913 | DAS-21Ø23-5 x DAS-24236-5 x MON-88913-8 | Widestrike™ Roundup Ready Flex™ Cotton | HT (Gly) / cp4 epsps (aroA:CP4) IR (BL) / cry1F IR (BL) / cry1Ac HT (Glu) / bar | Dow & Monsanto |
| A69 | Cotton Gossypium hirsutum | 3006-210-23 x 281-24-236 x MON88913 x COT102 | DAS-21Ø23-5 x DAS-24236-5 x MON-88913-8 x SYN-IR1Ø2-7 | Widestrike™ x Roundup Ready Flex™ x VIP-COT™ Cotton | IR (BL) / cry1Ac IR (BL) / vip3A(a) IR (BL) / cry1F HT (Gly) / cp4 epsps (aroA:CP4) HT (Glu) / pat | Dow |
| A70 | Cotton Gossypium hirsutum | 31707 | not available | BXN™ Plus Bollgard™ Cotton | HT (Ox) / bxn IR (BL) / cry1Ac | Monsanto |
| A71 | Cotton Gossypium hirsutum | 31803 | not available | BXN™ Plus Bollgard™ Cotton | HT (Ox) / bxn IR (BL) / cry1Ac | Monsanto |
| A72 | Cotton Gossypium hirsutum | 31807 x 31808 | not available | not available | 2HT (Ox) / bxn 21R (BL) / cry1Ac / / | Monsanto |
| A73 | Cotton Gossypium hirsutum | 31807 | not available | BXN™ Plus Bollgard™ Cotton | HT (Ox) / bxn IR (BL) / cry1Ac | Monsanto |
| A74 | Cotton Gossypium hirsutum | 31808 | not available | BXN™ Plus Bollgard™ Cotton | HT (Ox) / bxn IR (BL) / cry1Ac | Monsanto |
| A75 | Cotton Gossypium hirsutum | 42317 | not available | BXN™ Plus Bollgard™ Cotton | HT (Ox) / bxn IR (BL) / cry1Ac | Monsanto |
| A76 | Cotton Gossypium hirsutum | BNLA-601 | not available | not available | IR (BL) / cry1Ac | Central Institute for Cotton Research and University of Agricultural Sciences Dharwad (India) |
| A77 | Cotton Gossypium hirsutum | BXN10211 (10211) | BXN-1Ø211-9 | BXN™ Cotton | HT (Ox) / bxn | Monsanto |
| A78 | Cotton Gossypium hirsutum | BXN10215 (10215) | BXN-1Ø215-4 | BXN™ Cotton | HT (Ox) / bxn | Monsanto |
| A79 | Cotton Gossypium hirsutum | BXN10222 (10222) | BXN-1Ø222-2 | BXN™ Cotton | HT (Ox) / bxn | Monsanto |
| A80 | Cotton Gossypium hirsutum | BXN10224 (10224) | BXN-1Ø224-4 | BXN™ Cotton | HT (Ox) / bxn | Monsanto |
| A81 | Cotton Gossypium hirsutum | COT102 (IR102) | SYN-IR1Ø2-7 | VIPCOT™ Cotton | IR (BL) / vip3A(a) | Syngenta |
| A82 | Cotton Gossypium hirsutum | COT102 x COT67B | SYN-IR1Ø2-7 x SYN-IR67B-1 | VIPCOT™ Cotton | IR (BL) / vip3A(a) IR (BL) / cry1Ab | Syngenta |
| A83 | Cotton Gossypium hirsutum | COT102 x COT67B x MON88913 | SYN-IR1Ø2-7 x SYN-IR67B-1 x MON-88913-8 | VIPCOT™ Roundup Ready Flex™ Cotton | IR (BL) / vip3A(a) IR (BL) / cry1Ab | Syngenta |
| A84 | Cotton Gossypium hirsutum | COT102 x MON 15985 | SYN-IR1Ø2-7 x MON-15985-7 | Bollgard® III | IR (BL) / vip3A(a) IR (BL) / cry1Ac IR (BL) / cry2Ab2 | Monsanto |
| A85 | Cotton Gossypium hirsutum | COT102 x MON15985 x MON88913 | SYN-IR1Ø2-7 x MON-15985-7 x MON-88913-8 | Bollgard® III x Roundup Ready™ Flex™ | IR (BL) / vip3A(a) IR (BL) / cry1Ac IR (BL) / cry2Ab2 HT (Gly) / cp4 epsps (aroA:CP4) | Monsanto |
| A86 | Cotton Gossypium hirsutum | COT67B (IR67B) | SYN-IR67B-1 | not available | IR (BL) / cry1Ab | Syngenta |
| A87 | Cotton Gossypium hirsutum | Event1 | not available | JK 1 | IR (BL) / cry1Ac | JK Agri Genetics Ltd. (India) |
| A88 | Cotton Gossypium hirsutum | GFM Cry1A | GTL-GFM311-7 | not available | IR (BL) / cry1Ab-Ac | Nath Seeds/Globa I Transgenes Ltd (India) |
| A89 | Cotton Gossypium hirsutum | GHB119 | BCS-GHØØ5-8 | not available | HT (Glu) / bar IR (BL) / cry2Ae | Bayer Crop Science |
| A90 | Cotton Gossypium hirsutum | GHB614 | BCS-GHØ2-5 | GlyTo™ | HT (Gly) / 2mepsps | Bayer Crop Science |
| A91 | Cotton Gossypium hirsutum | GHB614 x LLCotton25 | BCS-GHØØ2-5 x ACS-GHØØ1-3 | GlyTol™ Liberty Link™ | HT (Gly) / 2mepsps HT (Glu) / bar | Bayer Crop Science |
| A92 | Cotton Gossypium hirsutum | GHB614 x LLCotton25 x MON 15985 | BCS-GHØØ2-5 x ACS-GHØØ1-3 x MON-15985-7 | not available | HT (Gly) / 2mepsps HT (Glu) / bar IR (BL) / cry1Ac IR (BL) / cry2Ab2 | Bayer Crop Science |
| A93 | Cotton Gossypium hirsutum | GHB614 x MON 15985 | BCS-GHØØ2-5 × MON-15985-7 | not available | HT (Gly) / 2mepsps IR (BL) / cry1Ac IR (BL) / cry2Ab2 | Bayer Crop Science |
| A94 | Cotton Gossypium hirsutum | GHB614 x T304-40 x GHB119 | BCS-GHØØ2-5 x BCS-GHØØ4-7 x BCS-GHØØ5-8 | Glytol™ x Twin-link™ | HT (Gly) / 2mepsps HT (Glu) / bar IR (BL) / cry1Ab IR (BL) / cry2Ae | Bayer Crop Science |
| A95 | Cotton Gossypium hirsutum | GK12 | not available | not available | IR (BL) / cry1Ab-Ac | Chinese Academy of Agricultural Sciences |
| A96 | Cotton Gossypium hirsutum | LLCotton25 | ACS-GHØØ1-3 | Fibermax™ Liberty Link™ | HT (Glu) / bar | Bayer Crop Science |
| A97 | Cotton Gossypium hirsutum | LLCotton25 x MON 15985 | ACS-GHØØ1-3 x MON-15985-7 | Fibermax™ Liberty Link™ Bollgard II™ | HT (Glu) / bar IR (BL) / cry1Ac IR (BL) / cry2Ab2 | |
| A98 | Cotton Gossypium hirsutum | MLS 9124 | not available | not available | IR (BL) / cry1C | Metahelix Life Sciences Pvt. Ltd (India) |
| A99 | Cotton Gossypium hirsutum | MON 88701-3 | MON88701 | not available | HT (Dic) / dmo HT (Glu) / bar | Monsanto |
| A100 | Cotton Gossypium hirsutum | MON1076 | MON-89924-2 | Bollgard™ Cotton | IR (BL) / cry1Ac | Monsanto |
| A101 | Cotton Gossypium hirsutum | MON1445 | MON-Ø1445-2 | Roundup Ready™ Cotton | HT (Gly) / cp4 epsps (aroA:CP4) | Monsanto |
| A102 | Cotton Gossypium hirsutum | MON15985 | MON-15985-7 | Bollgard **II**™ Cotton | IR (BL) / cry1Ac IR (BL) / cry2Ab2 | Monsanto |
| A103 | Cotton Gossypium hirsutum | MON15985 x MON1445 | MON-15985-7 x MON-01445-2 | Roundup Ready™ Bollgard **II**™ Cotton | HT (Gly) / cp4 epsps (aroA:CP4) IR (BL) / cry1Ac IR (BL) / cry2Ab2 | Monsanto |
| A104 | Cotton Gossypium hirsutum | MON1698 | MON-89383-1 | Roundup Ready™ Cotton | HT (Gly) / cp4 epsps (aroA:CP4) | Monsanto |
| A105 | Cotton Gossypium hirsutum | MON531 | MON-ØØ531-6 | Bollgard™ Cotton, Ingard™ | IR (BL) / cry1Ac | Monsanto |
| A106 | Cotton Gossypium hirsutum | MON531 x MON1445 | MON-Ø531-6 x MON-01445-2 | Roundup Ready™ Boll-gard™ Cotton | HT (Gly) / cp4 epsps (aroA:CP4) IR (BL) / cry1Ac | Monsanto |
| A107 | Cotton Gossypium hirsutum | MON757 | MON-ØØ757-7 | Bollgard™ Cotton | IR (BL) / cry1Ac | Monsanto |
| A108 | Cotton Gossypium hirsutum | MON88913 | MON-88913-8 | Roundup Ready™ Flex™ Cotton | HT (Gly) / cp4 epsps (aroA:CP4) | Monsanto |
| A109 | Cotton Gossypium hirsutum | MON88913 x MON 15985 | MON-88913-8 x MON-15985-7 | Roundup Ready™ Flex™ Bollgard **II**™ Cotton | HT (Gly) / cp4 epsps (aroA:CP4) IR (BL) / cry1Ac IR (BL) / cry2Ab2 | Monsanto |
| A110 | Cotton Gossypium hirsutum | Ngwe Chi 6 Bt | not available | Ngwe Chi 6 Bt | | Cotton and Sericulture Department (Myanmar) |
| A111 | Cotton Gossypium hirsutum | SGK321 | not available | not available | IR (BL) / cry1A IR (BRun) / CpTI | Chinese Academy of Agricultural Sciences |
| A112 | Cotton Gossypium hirsutum | T303-3 | BCS-GHØØ3-6 | not available | IR (BL) / cry1Ab HT (Glu) / bar | Bayer Crop Science |
| A113 | Cotton Gossypium hirsutum | T304-40 | BCS-GHØØ4-7 | not available | IR (BL) / cry1Ab HT (Glu) / bar | Bayer Crop Science |
| A114 | Cotton Gossypium hirsutum | T304-40 x GHB119 | BCS-GHØØ4-7 x BCS-GHØØ5-8 | TwinLink™ Cotton | IR (BL) / cry1Ab HT (Glu) / bar | Bayer Crop Science |
| A115 | Cotton Gossypium hirsutum | 81910 | DAS-81910-7 | not available | HT (2,4-D) / aad-12 HT (Glu) / pat | Dow |
| A116 | Creeping Bentgrass Agrostis stolonifera | ASR368 | SMG-368ØØ-2 | Roundup Ready™ Creeping Bentgrass | HT (Gly) / cp4 epsps (aroA:CP4) | Monsanto |
| A117 | Eggplant Solanum melongena | Bt Brinjal Event EE1 | Bt Brinjal Event EE1 | BARI Bt Begun1, -2, -3 and -4 | IR (BL) / cry1Ac | Maharashtra Hybrid Seed Company (MAHYCO) |
| A118 | Flax Linum usitatissimum | FP967 (CDC Triffid) | CDC-FLØØ1-2 | CDC Triffid Flax | HT (SU) / als | University of Saskatchewan |
| A119 | Lentil Lens culinaris | RH44 | RH44 | not available | HT (Imi) / als (mutant) | BASF |
| A120 | Maize Zea mays | 32138 | DP-32138-1 | 32138 SPT maintainer | PC (FR) / ms45 PC (MS) / zm-aa1 | Dupont |
| A121 | Maize Zea mays | 3272 | SYN-E3272-5 | Enogen™ | ST (CA) / amy797E | Syngenta |
| A122 | Maize Zea mays | 3272 x Bt11 | SYN-E3272-5 x SYN-BTØ11-1 | not available | ST (CA) / amy797E IR (BL) / cry1Ab HT (Glu) / pat | Syngenta |
| A123 | Maize Zea mays | 3272 x Bt11 x GA21 | SYN-E3272-5 x SYN-BTØ11-1 x MON-ØØØ21-9 | not available | ST (CA) / amy797E IR (BL) / cry1Ab HT (Glu) / pat HT (Gly) / mepsps | Syngenta |
| A124 | Maize Zea mays | 3272 x Bt11 x MIR604 | SYN-E3272-5 x SYN-BTØ11-1 x SYN-IR6Ø4-5 | not available | ST (CA) / amy797E IR (BL) / cry1Ab HT (Glu) / pat IR (Col) / mcry3A | Syngenta |
| A125 | Maize Zea mays | 3272 x BT11 x MIR604 x GA21 | SYN-E3272-5 x SYN-BTØ11-1 x SYN-IR6Ø4-5 xMON-ØØØ21-9 | not available | ST (CA) / amy797E IR (BL) / cry1Ab HT (Glu) / pat IR (Col) / mcry3A HT (Gly) / mepsps | Syngenta |
| A126 | Maize Zea mays | 3272 x GA21 | SYN-E3272-5 x MON-00021-9 | not available | ST (CA) / amy797E HT (Gly) / mepsps | Syngenta |
| A127 | Maize Zea mays | 3272 x MIR604 | SYN-E3272-5 x SYN-IR6Ø4-5 | not available | ST (CA) / amy797E IR (Col) / mcry3A | Syngenta |
| A128 | Maize Zea mays | 3272 x MIR604 x GA21 | SYN-E3272-5 x SYN-IR6Ø4-5 x MON-ØØØ21-9 | not available | ST (CA) / amy797E IR (Col) / mcry3A HT (Gly) / mepsps | Syngenta |
| A129 | Maize Zea mays | 33121 | DP-Ø33121-3 | not available | IR (BL) / cry2Ae IR (BL) / cry1A IR (BL) / vip3Aa20 HT (Glu) / pat | Dupont |
| A130 | Maize Zea mays | 4114 | DP-ØØ4114-3 | not available | IR (BL) / cry1F IR (Col) / cry34Ab1 IR (Col) / cry35Ab1 HT (Glu) / pat | Dupont |
| A131 | Maize Zea mays | 5307 | SYN-Ø53Ø7-1 | Agrisure® Duracade™ | IR (Col) / ecry3.1Ab | Syngenta |
| A132 | Maize Zea mays | 5307 x MIR604 x Bt11 x TC1507 x GA21 | SYN-Ø53Ø7-1 x SYN-IR6Ø4-5 x SYN-BTØ11-1 x DAS-Ø15Ø7-1 x MON-00021-9 | Agrisure® Duracade™ 5122 | IR (Col) / ecry3.1Ab IR (Col) / mcry3A IR (BL) / cry1Ab HT (Glu) / pat IR (BL) / cry1Fa2 HT (Gly) / mepsps | Syngenta |
| A133 | Maize Zea mays | 5307 x MIR604 x Bt11 x TC1507 x GA21 x MIR162 | SYN-Ø53Ø7-1 x SYN-IR6Ø4-5 x SYN-BTØ11-1 x DAS-Ø15Ø7-1 x MON-00021-9 x SYN-IR162-4 | Agrisure® Duracade™ 5222 | IR (Col) / ecry3.1Ab IR (Col) / mcry3A IR (BL) / cry1Ab HT (Glu) / pat IR (BL) / cry1Fa2 HT (Gly) / mepsps IR (BL) / vip3Aa20 | Syngenta |
| A134 | Maize Zea mays | 59122 | DAS-59122-7 | Herculex™ RW | HT (Glu) / pat IR (Col) / cry34Ab1 IR (Col) / cry35Ab1 | Dow |
| A135 | Maize Zea mays | 59122 x GA21 | DAS-59122-7 x MON-00021-9 | not available | HT (Glu) / pat IR (Col) / cry34Ab1 IR (Col) / cry35Ab1 HT (Gly) / mepsps | Syngenta |
| A136 | Maize Zea mays | 59122 x MIR604 | DAS-59122-7 x SYN-IR6Ø4-5 | not available | HT (Glu) / pat IR (Col) / cry34Ab1 IR (Col) / cry35Ab1 IR (Col) / mcry3A | Syngenta |
| A137 | Maize Zea mays | 59122 x MIR604 x GA21 | DAS-59122-7 x SYN-IR6Ø4-5 x MON-ØØØ21-9 | not available | HT (Glu) / pat IR (Col) / cry34Ab1 IR (Col) / cry35Ab1 IR (Col) / mcry3A HT (Gly) / mepsps | Syngenta |
| A138 | Maize Zea mays | 59122 x MIR604 x TC1507 | DAS-59122-7 x SYN-IR6Ø4-5 x DAS-Ø15Ø7-1 | not available | HT (Glu) / pat IR (Col) / cry34Ab1 IR (Col) / cry35Ab1 IR (Col) / mcry3A IR (BL) / cry1Fa2 | Syngenta |
| A139 | Maize Zea mays | 59122 x MIR604 x TC1507 x GA21 | DAS-59122-7 x SYN-IR6Ø4-5 x DAS-Ø15Ø7-1 xMON-ØØØ21-9 | not available | HT (Glu) / pat IR (Col) / cry34Ab1 IR (Col) / cry35Ab1 IR (Col) / mcry3A IR (BL) / cry1Fa2 HT (Gly) / mepsps | Syngenta |
| A140 | Maize Zea mays | 59122 x MON810 | DAS-59122-7 x MON-00810-6 | not available | HT (Glu) / pat IR (Col) / cry34Ab1 IR (Col) / cry35Ab1 IR (BL) / cry1Ab | Dupont |
| A141 | Maize Zea mays | 59122 x MON810 x NK603 | DAS-59122-7 x MON-00810-6 x MON-ØØ6Ø3-6 | not available | HT (Glu) / pat IR (Col) / cry34Ab1 IR (Col) / cry35Ab1 IR (BL) / cry1Ab HT (Gly) / cp4 epsps (aroA:CP4) | Dupont |
| A142 | Maize Zea mays | 59122 x MON88017 | DAS-59122-7 x MON-88017-3 | not available | HT (Glu) / pat IR (Col) / cry34Ab1 IR (Col) / cry35Ab1 IR (Col) / cry3Bb1 HT (Gly) / cp4 epsps (aroA:CP4) | Monsanto & Dow |
| A143 | Maize Zea mays | 59122 x NK603 | DAS-59122-7 x MON-00603-6 | Herculex™ RW Roundup Ready™ 2 | HT (Glu) / pat IR (Col) / cry34Ab1 IR (Col) / cry35Ab1 HT (Gly) / cp4 epsps (aroA:CP4) | Dupont |
| A144 | Maize Zea mays | 59122 x TC1507 x GA21 | DAS-59122-7 x DAS-01507-1 xMON-ØØØ21-9 | not available | HT (Glu) / pat IR (Col) / cry34Ab1 IR (Col) / cry35Ab1 IR (BL) / cry1Fa2 HT (Gly) / mepsps | Syngenta |
| A145 | Maize Zea mays | 676 | PH-ØØØ676-7 | not available | HT (Glu) / pat PC (MS) / dam | Dupont |
| A146 | Maize Zea mays | 678 | PH-ØØØ678-9 | not available | HT (Glu) / pat PC (MS) / dam | Dupont |
| A147 | Maize Zea mays | 680 | PH-ØØØ68Ø-2 | not available | HT (Glu) / pat PC (MS) / dam | Dupont |
| A148 | Maize Zea mays | 98140 | DP-Ø9814Ø-6 | Optimum™ GAT™ | HT (SU) / zm-hra HT (Gly) / gat4621 | Dupont |
| A149 | Maize Zea mays | 98140 x 59122 | DP-Ø9814Ø-6 x DAS-59122-7 | not available | HT (Glu) / pat IR (Col) / cry34Ab1 IR (Col) / cry35Ab1 HT (SU) / zm-hra HT (Gly) / gat4621 | Dow & Dupont |
| A150 | Maize Zea mays | 98140 x TC1507 | DP-Ø9814Ø-6 x DAS-01507-1 | not available | HT (SU) / zm-hra HT (Gly) / gat4621 IR (BL) / cry1Fa2 HT (Glu) / pat | Dow & Dupont |
| A151 | Maize Zea mays | 98140 x TC1507 x 59122 | DP-Ø9814Ø-6 x DAS-01507-1 x DAS-59122-7 | not available | HT (Glu) / pat IR (Col) / cry34Ab1 IR (Col) / cry35Ab1 HT (SU) / zm-hra HT (Gly) / gat4621 IR (BL) / cry1Fa2 | Dow & Dupont |
| A152 | Maize Zea mays | Bt10 | not available | Bt10 | IR (BL) / cry1Ab HT (Glu) / pat | Syngenta |
| A153 | Maize Zea mays | Bt11 (X4334CBR, X4734CBR) | SYN-BTØ11-1 | Agrisure™ CB/LL | IR (BL) / cry1Ab HT (Glu) / pat | Syngenta |
| A154 | Maize Zea mays | Bt11 x 59122 | SYN-BTØ11-1 x DAS-59122-7 | not available | HT (Glu) / pat IR (Col) / cry34Ab1 IR (Col) / cry35Ab1 IR (BL) / cry1Ab | Syngenta |
| A155 | Maize Zea mays | Bt11 x 59122 x GA21 | SYN-BTØ11-1 x DAS-59122-7 x MON-ØØØ21-9 | not available | HT (Glu) / pat IR (Col) / cry34Ab1 IR (Col) / cry35Ab1 IR (BL) / cry1Ab HT (Gly) / mepsps | Syngenta |
| A156 | Maize Zea mays | Bt11 x 59122 x MIR604 | SYN-BTØ11-1 x DAS-59122-7 x SYN-IR6Ø4-5 | not available | HT (Glu) / pat IR (Col) / cry34Ab1 IR (Col) / cry35Ab1 IR (BL) / cry1Ab IR (Col) / mcry3a | Syngenta |
| A157 | Maize Zea mays | Bt11 x 59122 x MIR604 x GA21 | SYN-BTØ11-1 x DAS-59122-7 x SYN-IR6Ø4-5 x MON-ØØØ21-9 | not available | HT (Glu) / pat IR (Col) / cry34Ab1 IR (Col) / cry35Ab1 IR (BL) / cry1Ab IR (Col) / mcry3a HT (Gly) / mepsps | Syngenta |
| A158 | Maize Zea mays | Bt11 x 59122 x MIR604 x TC1507 | SYN-BTØ11-1 x DAS-59122-7 x SYN-IR6Ø4-5 x DAS-Ø15Ø7-1 | not available | HT (Glu) / pat IR (Col) / cry34Ab1 IR (Col) / cry35Ab1 IR (BL) / cry1Ab IR (BL) / cry1Fa2 IR (Col) / mcry3a | Syngenta |
| A159 | Maize Zea mays | BT11 x 59122 x MIR604 x TC1507 x GA21 | SYN-BTØ11-1 x DAS-59122-7 x SYN-IR6Ø4-5 x DAS-Ø15Ø7-1 x MON-00021-9 | Agrisure® 3122 | HT (Glu) / pat IR (Col) / cry34Ab1 IR (Col) / cry35Ab1 IR (BL) / cry1Ab IR (BL) / cry1Fa2 I R (Col) / mcry3a HT (Gly) / mepsps | Syngenta |
| A160 | Maize Zea mays | Bt11 x 59122 x TC1507 | SYN-BTØ11-1 x DAS-59122-7 x DAS-Ø15Ø7-1 | not available | HT (Glu) / pat IR (Col) / cry34Ab1 IR (Col) / cry35Ab1 IR (BL) / cry1Ab IR (BL) / cry1Fa2 | Syngenta |
| A161 | Maize Zea mays | Bt11 x 59122 x TC1507 x GA21 | SYN-BTØ11-1 x DAS-59122-7 x DAS-Ø15Ø7-1 x MON-ØØØ21-9 | not available | HT (Glu) / pat IR (Col) / cry34Ab1 IR (Col) / cry35Ab1 IR (BL) / cry1Ab IR (BL) / cry1Fa2 HT (Gly) / mepsps | Syngenta |
| A162 | Maize Zea mays | Bt11 x GA21 | SYN-BTØ11-1 x MON-00021-9 | Agrisure™ GT/CB/LL | HT (Gly) / mepsps IR (BL) / cry1Ab HT (Glu) / pat | Syngenta |
| A163 | Maize Zea mays | Bt11 x MIR162 | SYN-BTØ11-1 x SYN-IR162-4 | Agrisure® Viptera™ 2100 | IR (BL) / cry1Ab (truncated) HT (Glu) / pat IR (BL) / vip3Aa20 | Syngenta |
| A164 | Maize Zea mays | Bt11 x MIR162 x GA21 | SYN-BTØ11-1 x SYN-IR162-4 x MON-ØØØ21-9 | Agrisure® Viptera™ 3110 | IR (BL) / cry1Ab HT (Glu) / pat IR (BL) / vip3Aa20 HT (Gly) / mepsps | Syngenta |
| A165 | Maize Zea mays | BT11 x MIR162 x MIR604 | SYN-BTØ11-1 x SYN-IR162-4 x SYN-IR6Ø4-5 | Agrisure® Viptera™ 3100 | IR (BL) / cry1Ab HT (Glu) / pat IR (BL) / vip3Aa20 IR (Col) / mcry3a | Syngenta |
| A166 | Maize Zea mays | Bt11 x MIR162 x MIR604 x GA21 | SYN-BTØ11-1 x SYN-IR162-4 x SYN-IR6Ø4-5 x MON-ØØØ21-9 | Agrisure® Viptera™ 3111, Agrisure® Viptera™ 4 | IR (BL) / cry1Ab HT (Glu) / pat IR (BL) / vip3Aa20 IR (Col) / mcry3a HT (Gly) / mepsps | Syngenta |
| A167 | Maize Zea mays | Bt11 x MIR162 x TC1507 | SYN-BTØ11-1 x SYN-IR162-4 x DAS-Ø15Ø7-1 | not available | IR (BL) / cry1Ab HT (Glu) / pat IR (BL) / vip3Aa20 IR (BL) / cry1 Fa2 | Syngenta |
| A168 | Maize Zea mays | Bt11 x MIR162 x TC1507 x GA21 | SYN-BTØ11-1 x SYN-IR162-4 x DAS-Ø15Ø7-1 x MON-ØØØ21-9 | Agrisure™ Viptera 3220 | IR (BL) / cry1Ab HT (Glu) / pat IR (BL) / vip3Aa20 IR (BL) / cry1Fa2 HT (Gly) / mepsps | Syngenta |
| A169 | Maize Zea mays | Bt11 x MIR604 | SYN-BTØ11-1 x SYN-IR6Ø4-5 | Agrisure™ CB/LL/RW | IR (BL) / cry1Ab HT (Glu) / pat IR (Col) / mcry3a | Syngenta |
| A170 | Maize Zea mays | BT11 x MIR604 x GA21 | SYN-BTØ11-1 x SYN-IR6Ø4-5 x MON-ØØØ21-9 | Agrisure™ 3000GT | IR (BL) / cry1Ab HT (Glu) / pat IR (Col) / mcry3a HT (Gly) / mepsps | Syngenta |
| A171 | Maize Zea mays | Bt11 x MIR604 x TC1507 | SYN-BTØ11-1 x SYN-IR6Ø4-5 x DAS-Ø15Ø7-1 | not available | IR (BL) / cry1Ab HT (Glu) / pat IR (Col) / mcry3a IR (BL) / cry1Fa2 | Syngenta |
| A172 | Maize Zea mays | Bt11 x TC1507 | SYN-BTØ11-1 x DAS-01507-1 | not available | IR (BL) / cry1Ab HT (Glu) / pat IR (BL) / cry1Fa2 | Syngenta |
| A173 | Maize Zea mays | Bt11 x TC1507 x GA21 | SYN-BTØ11-1 x DAS-01507-1 x MON-ØØØ21-9 | not available | IR (BL) / cry1Ab HT (Glu) / pat IR (BL) / cry1Fa2 HT (Gly) / mepsps | Syngenta |
| A174 | Maize Zea mays | Bt176 (176) | SYN-EV176-9 | NaturGard KnockOut™, Maximizer™ | IR (BL) / cry1Ab HT (Glu) / bar | Syngenta |
| A175 | Maize Zea mays | BVLA43010 1 | not available | not available | ST (P) / phyA2 | Origin Agritech (China) |
| A176 | Maize Zea mays | CBH-351 | ACS-ZMØØ4-3 | Starlink™ Maize | IR (BL) / cry9c HT (Glu) / bar | Bayer Crop Sciences |
| A177 | Maize Zea mays | DAS40278 | DAS-4Ø278-9 | Enlist™ Maize | HT (2,4-D) / aad1 | Dow |
| A178 | Maize Zea mays | DAS40278 x NK603 | DAS-4Ø278-9 x MON-00603-6 | not available | HT (2,4-D) / aad1 HT (Gly) / cp4 epsps (aroA:CP4) | Dow |
| A179 | Maize Zea mays | DBT418 | DKB-89614-9 | Bt Xtra™ Maize | IR (BL) / Cry1Ac IR (BL) / pinll HT (Glu) / bar | Monsanto |
| A180 | Maize Zea mays | DLL25 (B16) | DKB-8979Ø-5 | not available | HT (Glu) / bar | Monsanto |
| A181 | Maize Zea mays | GA21 | MON-ØØØ21-9 | Roundup Ready™ Maize, Agrisure™GT | HT (Gly) / mepsps | Monsanto |
| A182 | Maize Zea mays | GA21 x MON810 | MON-ØØØ21-9 x MON-00810-6 | Roundup Ready™ Yield-Gard™ maize | IR (BL) / cry1Ab HT (Gly) / mepsps | Monsanto |
| A183 | Maize Zea mays | GA21 x T25 | MON-ØØØ21-9 x ACS-ZMØØ3-2 | not available | HT (Gly) / mepsps HT (Glu) / pat (syn) | Syngenta |
| A184 | Maize Zea mays | HCEM485 | HCEM485 | not available | HT (Gly) / 2mepsps | Stine Seed Farm, Inc (USA) |
| A185 | Maize Zea mays | LY038 | REN-ØØØ38-3 | Mavera™ Maize | ST (AA) / cordapA | Renessen LLC (Netherlands) |
| A186 | Maize Zea mays | LY038 x MON810 | REN-ØØØ38-3 x MON-00810-6 | Mavera™ Yield-Gard™ Maize | ST (AA) / cordapA IR (BL) / cry1Ab | Renessen LLC (Netherlands) & Monsanto |
| A187 | Maize Zea mays | MIR162 | SYN-IR162-4 | Agrisure™ Viptera | IR (BL) / vip3Aa20 | Syngenta |
| A188 | Maize Zea mays | MIR162 x GA21 | SYN-IR162-4 x MON-00021-9 | not available | IR (BL) / vip3Aa20 HT (Gly) / mepsps | Syngenta |
| A189 | Maize Zea mays | MIR162 x MIR604 | SYN-IR162-4 x SYN-IR6Ø4-5 | not available | IR (BL) / vip3Aa20 IR (Col) / mcry3a | Syngenta |
| A190 | Maize Zea mays | MIR162 x MIR604 x GA21 | SYN-IR162-4 x SYN-IR6Ø4-5 x MON-ØØØ21-9 | not available | IR (BL) / vip3Aa20 IR (Col) / mcry3a HT (Gly) / mepsps | Syngenta |
| A191 | Maize Zea mays | MIR162 x TC1507 | SYN-IR162-4 x DAS-01507-1 | not available | IR (BL) / vip3Aa20 IR (BL) / cry1Fa2 HT (Glu) / pat | Syngenta |
| A192 | Maize Zea mays | MIR162 x TC1507 x GA21 | SYN-IR162-4 x DAS-01507-1 x MON-ØØØ21-9 | not available | IR (BL) / vip3Aa20 IR (BL) / cry1Fa2 HT (Glu) / pat HT (Gly) / mepsps | Syngenta |
| A193 | Maize Zea mays | MIR604 | SYN-IR6Ø4-5 | Agrisure™ RW | IR (Col) / mcry3a | Syngenta |
| A194 | Maize Zea mays | MIR604 x GA21 | SYN-IR6Ø4-5 x MON-00021-9 | Agrisure™ GT/RW | IR (Col) / mcry3a HT (Gly) / mepsps | Syngenta |
| A195 | Maize Zea mays | MIR604 x NK603 | SYN-IR6Ø4-5 x MON-00603-6 | not available | IR (Col) / mcry3a HT (Gly) / cp4 epsps (aroA:CP4) | Dupont |
| A196 | Maize Zea mays | MIR604 x TC1507 | SYN-IR6Ø4-5 x DAS-01507-1 | not available | IR (Col) / mcry3a IR (BL) / cry1Fa2 HT (Glu) / pat | Syngenta |
| A197 | Maize Zea mays | MON801 (MON80100) | MON801 | not available | IR (BL) / cry1Ab | Monsanto |
| A198 | Maize Zea mays | MON802 | MON-8Ø2ØØ-7 | not available | IR (BL) / cry1Ab | Monsanto |
| A199 | Maize Zea mays | MON809 | PH-MON-8Ø9-2 | not available | IR (BL) / cry1Ab | Monsanto & Dupont |
| A200 | Maize Zea mays | MON810 | MON-ØØ81Ø-6 | YieldGard™, MaizeGard™ | IR (BL) / cry1Ab | Monsanto |
| A201 | Maize Zea mays | MON810 x MON88017 | MON-ØØ81Ø-6 x MON-88017-3 | YieldGard™ VT Triple | IR (BL) / cry1Ab IR (Col) / cry3Bb1 HT (Gly) / cp4 epsps (aroA:CP4) | Monsanto |
| A202 | Maize Zea mays | MON832 | not available | Roundup Ready™ Maize | HT (Gly) / gov247 HT (Gly) / cp4 epsps (aroA:CP4) | Monsanto |
| A203 | Maize Zea mays | MON863 | MON-ØØ863-5 | YieldGard™ Rootworm RW, MaxGard™ | IR (Col) / cry3Bb1 | Monsanto |
| A204 | Maize Zea mays | MON863 x MON810 | MON-ØØ863-5 x MON-00810-6 | YieldGard™ Plus | IR (BL) / cry1Ab IR (Col) / cry3Bb1 | Monsanto |
| A205 | Maize Zea mays | MON863 x MON810 x NK603 | MON-ØØ6Ø3-6 x MON-00810-6 x MON-ØØ863-5 | YieldGard™ Plus with RR | IR (BL) / cry1Ab IR (Col) / cry3Bb1 HT (Gly) / cp4 epsps (aroA:CP4) | Monsanto |
| A206 | Maize Zea mays | MON863 x NK603 | MON-ØØ863-5 x MON-00603-6 | YieldGard™ RW + RR | IR (Col) / cry3Bb1 HT (Gly) / cp4 epsps (aroA:CP4) | Monsanto |
| A207 | Maize Zea mays | MON87411 | MON-87411-9 | Not available | IR (Col) / cry3Bb1 HT (Gly) / cp4 epsps (aroA:CP4) IR (Rw) / dvsnf7 | Monsanto |
| A208 | Maize Zea mays | MON87427 | MON-87427-7 | Roundup Ready™ Maize | HT (Gly) / cp4 epsps (aroA:CP4) | Monsanto |
| A209 | Maize Zea mays | MON87427 x MON89034 x MON88017 | MON-87427-7 x MON-89034-3 x MON-88Ø17-3 | not available | HT (Gly) / cp4 epsps (aroA:CP4) IR (BL) / cry2Ab2 IR (BL) / cry1A.105 IR (Col) / cry3Bb1 | Monsanto |
| A210 | Maize Zea mays | MON87427 x MON89034 x NK603 | MON-87427-7 x MON-89034-3 x MON-ØØ6Ø3-6 | not available | HT (Gly) / cp4 epsps (aroA:CP4) IR (BL) / cry2Ab2 IR (BL) / cry1A.105 | Monsanto |
| A211 | Maize Zea mays | MON87427 x MON89Ø34 x TC15Ø7 x MON88Ø17 x 59122 | MON-87427-7 x MON-89034-3 x DAS-Ø15Ø7-1 x MON-88Ø17-3 x DAS-59122-7 | not available | HT (Gly) / cp4 epsps (aroA:CP4) IR (Col) / cry34Ab1 IR (Col) / cry35Ab1 IR (BL) / cry1Fa2 HT (Glu) / pat IR (BL) / cry2Ab2 | Monsanto |
| A212 | Maize Zea mays | MON87460 | MON-8746Ø-4 | Genuity® DroughtGard™ | YS (DT) / cspB | Monsanto & BASF |
| A213 | Maize Zea mays | MON87460 x MON89034 x MON88017 | MON-8746Ø-4 x MON-89034-3 x MON-88Ø17-3 | not available | YS (DT) / cspB IR (BL) / cry1A.105 IR (BL) / cry2Ab2 IR (Col) / cry3Bb1 HT (Gly) / cp4 epsps (aroA:CP4) | Monsanto |
| A214 | Maize Zea mays | MON87460 x MON89034 x NK603 | MON-8746Ø-4 x MON-89034-3 x MON-ØØ6Ø3-6 | not available | YS (DT) / cspB IR (BL) / cry1A.105 IR (BL) / cry2Ab2 HT (Gly) / cp4 epsps (aroA:CP4) | Monsanto |
| A215 | Maize Zea mays | MON87460 x NK603 | MON-8746Ø-4 x MON-00603-6 | not available | YS (DT) / cspB HT (Gly) / cp4 epsps (aroA:CP4) | Monsanto |
| A216 | Maize Zea mays | MON88017 | MON-88Ø17-3 | YieldGard™ VT™ Rootworm™ RR2 | IR (Col) / cry3Bb1 HT (Gly) / cp4 epsps (aroA:CP4) | Monsanto |
| A217 | Maize Zea mays | MON89034 | MON-89Ø34-3 | YieldGard™ VT Pro™ | IR (BL) / cry1A.105 | Monsanto |
| A218 | Maize Zea mays | MON89034 x 59122 | MON-89Ø34-3 x DAS-59122-7 | not available | HT (Glu) / pat IR (Col) / cry34Ab1 IR (Col) / cry35Ab1 IR (BL) / cry1A.105 IR (BL) / cry2Ab2 | Monsanto |
| A219 | Maize Zea mays | MON89034 x 59122 x MON88017 | MON-89Ø34-3 x DAS-59122-7 x MON-88Ø17-3 | not available | HT (Glu) / pat IR (Col) / cry34Ab1 IR (Col) / cry35Ab1 IR (Col) / cry3Bb1 HT (Gly) / cp4 epsps (aroA:CP4) IR (BL) / cry1A.105 IR (BL) / cry2Ab2 | Monsanto |
| A220 | Maize Zea mays | MON89034 x MON88017 | MON-89Ø34-3 x MON-88017-3 | Genuity® VT Triple Pro™ | IR (BL) / cry1A.105 IR (BL) / cry2Ab2 IR (Col) / cry3Bb1 HT (Gly) / cp4 epsps (aroA:CP4) | Monsanto |
| A221 | Maize Zea mays | MON89034 x NK603 | MON-89Ø34-3 x MON-00603-6 | Genuity® VT Double Pro™ | IR (BL) / cry1A.105 IR (BL) / cry2Ab2 HT (Gly) / cp4 epsps (aroA:CP4) | Monsanto |
| A222 | Maize Zea mays | MON89034 x TC1507 | MON-89Ø34-3 x DAS-01507-1 | not available | IR (BL) / cry1A.105 IR (BL) / cry2Ab2 IR (BL) / cry1Fa2 HT (Glu) / pat | Monsanto |
| A223 | Maize Zea mays | MON89034 x TC1507 x 59122 | MON-89Ø34-3 x DAS-01507-1 x DAS-59122-7 | not available | HT (Glu) / pat IR (Col) / cry34Ab1 IR (Col) / cry35Ab1 IR (BL) / cry1A.105 IR (BL) / cry2Ab2 IR (BL) / cry1 Fa2 | Monsanto |
| A224 | Maize Zea mays | MON89034 x TC1507 x MON88017 | MON-89Ø34-3 x DAS-01507-1 x MON-88Ø17-3 | not available | IR (Col) / cry3Bb1 HT (Gly) / cp4 epsps (aroA:CP4) IR (BL) / cry1A.105 IR (BL) / cry2Ab2 IR (BL) / cry1Fa2 HT (Glu) / pat | Monsanto & Dow |
| A225 | Maize Zea mays | MON89034 x TC1507 x MON88017 x 59122 | MON-89Ø34-3 x DAS-01507-1 x MON-88Ø17-3 x DAS-59122-7 | Genuity® SmartStax™ | HT (Glu) / pat IR (Col) / cry34Ab1 IR (Col) / cry35Ab1 IR (Col) / cry3Bb1 HT (Gly) / cp4 epsps (aroA:CP4) IR (BL) / cry1A.105 IR (BL) / cry2Ab2 IR (BL) / cry1Fa2 | Monsanto & Dow |
| A226 | Maize Zea mays | MON89034 x TC1507 x MON88017 x 59122 x DAS40278 | MON-89Ø34-3 x DAS-01507-1 x MON-88Ø17-3 x DAS-59122-7 x DAS-40278-9 | not available | HT (Glu) / pat IR (Col) / cry34Ab1 IR (Col) / cry35Ab1 IR (Col) / cry3Bb1 HT (Gly) / cp4 epsps (aroA:CP4) IR (BL) / cry1A.105 IR (BL) / cry2Ab2 IR (BL) / cry1Fa2 HT (2,4-D) / aad1 | Dow |
| A227 | Maize Zea mays | MON89034 x TC1507 x MON88017 x DAS40278 | MON-89Ø34-3 x DAS-01507-1 x MON-88Ø17-3 x DAS-59122-7 x DAS-40278-9 | not available | IR (Col) / cry3Bb1 HT (Gly) / cp4 epsps (aroA:CP4) IR (BL) / cry1A.105 IR (BL) / cry2Ab2 IR (BL) / cry1Fa2 HT (Glu) / pat HT (2,4-D) / aad1 | Dow |
| A228 | Maize Zea mays | MON89034 x TC1507 x NK603 | MON-89Ø34-3 x DAS-01507-1 x MON-ØØ6Ø3-6 | Power Core™ | IR (BL) / cry1A.105 IR (BL) / cry2Ab2 IR (BL) / cry1Fa2 HT (Gly) / cp4 epsps (aroA:CP4) HT (Glu) / pat | Monsanto & Dow |
| A229 | Maize Zea mays | MON89034 x TC1507 x NK603 x DAS40278 | MON-89Ø34-3 x DAS-01507-1 x MON-ØØ6Ø3-6 x DAS-4Ø278-9 | not available | IR (BL) / cry1A.105 IR (BL) / cry2Ab2 IR (BL) / cry1 Fa2 HT (Gly) / cp4 epsps (aroA:CP4) HT (Glu) / pat HT (2,4-D) / aad1 | Dow |
| A230 | Maize Zea mays | MS3 | ACS-ZM001-9 | InVigor™ Maize | PC (MS) / barnase | Bayer Crop Science |
| A231 | Maize Zea mays | MS6 | ACS-ZMØØ5-4 | InVigor™ Maize | PC (MS) / barnase | Bayer Crop Science |
| A232 | Maize Zea mays | NK603 | MON-ØØ6Ø3-6 | Roundup Ready™ 2 Maize | HT (Gly) / cp4 epsps (aroA:CP4) | Monsanto |
| A233 | Maize Zea mays | NK603 x MON810 x 4114 x MIR 604 | MON-00603-6 x MON-00810-6 x DP004114-3 x SYN-IR604-4 | Not available | HT (Gly) / cp4 epsps (aroA:CP4) IR (BL) / cry1Ab IR (BL) / cry1 F IR (Col) / cry34Ab1 IR (Col) / cry35Ab1 HT (Glu) / pat | Syngenta & Monsanto |
| A234 | Maize Zea mays | NK603 x MON810 | MON-ØØ6Ø3-6 x MON-00810-6 | YieldGard™ CB + RR | IR (BL) / cry1Ab HT (Gly) / cp4 epsps (aroA:CP4) | Monsanto |
| A235 | Maize Zea mays | NK603 x T25 | MON-ØØ6Ø3-6 x ACS-ZMØØ3-2 | Roundup Ready™ Liberty Link™ Maize | HT (Gly) / cp4 epsps (aroA:CP4) HT (Glu) / pat (syn) | Monsanto |
| A236 | Maize Zea mays | T14 | ACS-ZMØØ2-1 | Liberty Link™ Maize | HT (Glu) / pat (syn) | Bayer Crop Science |
| A237 | Maize Zea mays | T25 | ACS-ZMØØ3-2 | Liberty Link™ Maize | HT (Glu) / pat (syn) | Bayer Crop Science |
| A238 | Maize Zea mays | T25 x MON810 | ACS-ZMØØ3-2 x MON-00810-6 | Liberty Link™ Yieldgard™ Maize | IR (BL) / cry1Ab HT (Glu) / pat (syn) | Bayer Crop Science & Monsanto |
| A239 | Maize Zea mays | TC1507 | DAS-Ø15Ø7-1 | Herculex™ I, Herculex™ CB | IR (BL) / cry1Fa2 HT (Glu) / pat | Dow & Dupont |
| A240 | Maize Zea mays | TC1507 × 59122 × MON810 × MIR604 x NK603 | DAS-Ø15Ø7-1 × DAS-59122-7 × MON-ØØ81Ø-6 × SYN-IR6Ø4-5 x MON-00603-6 | Optimum™ Intrasect Xtreme | IR (BL) / cry1 Fa2 HT (Glu) / pat IR (Col) / cry34Ab1 IR (Col) / cry35Ab1 | Dupont |
| A241 | Maize Zea mays | TC1507 × MON810 × MIR604 × NK603 | DAS-Ø15Ø7-1 x MON-00810-6 × SYN-IR6Ø4-5 x MON-ØØ6Ø3-6 | not available | IR (Col) / mcry3A IR (BL) / cry1Fa2 HT (Glu) / pat IR (BL) / cry1Ab HT (Gly) / cp4 epsps (aroA:CP4) | Dupont |
| A242 | Maize Zea mays | TC1507 x 59122 | DAS-Ø15Ø7-1 x DAS-59122-7 | Herculex XTRAT™ | IR (BL) / cry1Fa2 HT (Glu) / pat IR (Col) / cry34Ab1 IR (Col) / cry35Ab1 | Dow & Dupont |
| A243 | Maize Zea mays | TC1507 x 59122 x MON810 | DAS-Ø15Ø7-1 x DAS-59122-7 x MON-ØØ81Ø-6 | not available | IR (BL) / cry1Fa2 HT (Glu) / pat IR (Col) / cry34Ab1 IR (Col) / cry35Ab1 IR (BL) / cry1Ab | Dupont |
| A244 | Maize Zea mays | TC1507 x 59122 x MON810 x NK603 | DAS-Ø15Ø7-1 x DAS-59122-7 x MON-ØØ81Ø-6 x MON-ØØ6Ø3-6 | Optimum™ Intrasect XTRA | IR (BL) / cry1Fa2 HT (Glu) / pat IR (Col) / cry34Ab1 IR (Col) / cry35Ab1 HT (Gly) / cp4 epsps (aroA:CP4) IR (BL) / cry1Ab | Dupont |
| A245 | Maize Zea mays | TC1507 x 59122 x MON88017 | DAS-Ø15Ø7-1 x DAS-59122-7 x MON-88Ø17-3 | not available | IR (BL) / cry1 Fa2 HT (Glu) / pat IR (Col) / cry34Ab1 IR (Col) / cry35Ab1 IR (Col) / cry3Bb1 HT (Gly) / cp4 epsps (aroA:CP4) | Monsanto & Dow |
| A246 | Maize Zea mays | TC1507 x 59122 x NK603 | DAS-Ø15Ø7-1 x DAS-59122-7 x MON-ØØ6Ø3-6 | Herculex XTRA™ RR | IR (BL) / cry1Fa2 HT (Glu) / pat IR (Col) / cry34Ab1 IR (Col) / cry35Ab1 HT (Gly) / cp4 epsps (aroA:CP4) | Dow & Dupont |
| A247 | Maize Zea mays | TC1507 x GA21 | DAS-Ø15Ø7-1 x MON-00021-9 | not available | IR (BL) / cry1Fa2 HT (Glu) / pat HT (Gly) / mepsps | Dupont |
| A248 | Maize Zea mays | TC1507 x MIR604 x NK603 | DAS-Ø15Ø7-1 x SYN-IR6Ø4-5 x MON-ØØ6Ø3-6 | Optimum™ TRIsect | IR (BL) / cry1Fa2 HT (Glu) / pat HT (Gly) / cp4 epsps (aroA:CP4) IR (Col) / mcry3A | Dupont |
| A249 | Maize Zea mays | TC1507 x MON810 | DAS-Ø15Ø7-1 x MON-00810-6 | not available | IR (BL) / cry1Fa2 HT (Glu) / pat IR (BL) / cry1Ab | Dow & Dupont |
| A250 | Maize Zea mays | TC1507 x MON810 x MIR162 x NK603 | DAS-Ø15Ø7-1 x MON-00810-6 x SYN-IR162-4 x MON-ØØ6Ø3-6 | not available | IR (BL) / cry1Fa2 HT (Glu) / pat IR (BL) / cry1Ab HT (Gly) / cp4 epsps (aroA:CP4) IR (BL) / vip3Aa20 | Dupont |
| A251 | Maize Zea mays | TC1507 x MON810 x NK603 | DAS-Ø15Ø7-1 x MON-00810-6 x MON-ØØ6Ø3-6 | Optimum™ Intrasect | IR (BL) / cry1Fa2 HT (Glu) / pat IR (BL) / cry1Ab HT (Gly) / cp4 epsps (aroA:CP4) | Dupont |
| A252 | Maize Zea mays | TC1507 x MON88017 | DAS-Ø15Ø7-1 x MON-88017-3 | not available | IR (BL) / cry1Fa2 HT (Glu) / pat IR (Col) / cry3Bb1 HT (Gly) / cp4 epsps (aroA:CP4) | Monsanto |
| A253 | Maize Zea mays | TC1507 x NK603 | DAS-Ø15Ø7-1 x MON-00603-6 | Herculex™ I RR | IR (BL) / cry1Fa2 HT (Glu) / pat HT (Gly) / cp4 epsps (aroA:CP4) | Dow |
| A254 | Maize Zea mays | TC6275 | DAS-Ø6275-8 | not available | IR (BL) / mocry1F HT (Glu) / bar | Dow |
| A255 | Maize Zea mays | VCO-01981-5 | VCO-Ø1981-5 | not available | HT (Gly) / epsps grg23ace5 | Genective S.A. |
| A256 | Maize Zea mays | DK404SR | DK404SR | not available | HT (Cyc) / ACCase (mutant) | BASF |
| A257 | Maize Zea mays | EXP1910IT | EXP1910IT | not available | HT (Imi) / als (mutant) | Syngenta |
| A258 | Melon Cucumis melo | Melon A | not available | not available | ST (Ripe) / sam-k | Agritope Inc. (USA) |
| A259 | Melon Cucumis melo | Melon B | not available | not available | ST (Ripe) / sam-k | Agritope Inc. (USA) |
| A260 | Papaya Carica papaya | 55-1 | CUH-CP551-8 | Rainbow, SunUp | VR (PRSV) / prsv-cp | Cornell University and University of Hawaii |
| A261 | Papaya Carica papaya | 63-1 | CUH-CP631-7 | not available | VR (PRSV) / prsv-cp | Cornell University and University of Hawaii |
| A262 | Papaya Carica papaya | Huanong No. 1 | not available | Huanong No. 1 | VR (PRSV) / prsv-rep | South China Agricultural University |
| A263 | Papaya Carica papaya | X17-2 | UFL-X17CP-6 | not available | VR (PRSV) / prsv-cp | University of Florida |
| A264 | Petunia Petunia hybrida | Petunia-CHS | not available | not available | | Beijing University |
| A265 | Plum Prunus domestica | C-5 | ARS-PLMC5-6 | not available | VR (PPV) / ppv-cp | United States Department of Agriculture -Agricultural Research Service |
| A266 | Polish canola Brassica rapa | HCR-1 | not available | not available | HT (Glu) / pat | Bayer Crop Sciences |
| A267 | Polish canola Brassica rapa | ZSR500 | not available | Hysyn 101 RR Roundup-Ready™ | HT (Gly) / cp4 epsps (aroA:CP4) HT (Gly) / gov247 | University of Florida |
| A268 | Polish canola Brassica rapa | ZSR502 | not available | Hysyn 101 RR Roundup-Ready™ | HT (Gly) / cp4 epsps (aroA:CP4) HT (Gly) / gov247 | University of Florida |
| A269 | Polish canola Brassica rapa | ZSR503 | not available | Hysyn 101 RR Roundup-Ready™ | HT (Gly) / cp4 epsps (aroA:CP4) HT (Gly) / gov247 | University of Florida |
| A270 | Poplar Populus sp. | Bt poplar, poplar 12 (Populus nigra) | not available | not available | IR (BL) / cry1Ac | Research Institute of Forestry (China) |
| A271 | Poplar Populus sp. | Hybrid poplar clone 741 | not available | not available | IR (BL) / cry1Ac IR (BRun) / API | Research Institute of Forestry (China) |
| A272 | Potato Solanum tuberosum | 1210 amk | not available | Lugovskoi plus | IR (Col) / cry3A | Centre Bioengineering, Russian Academy of Sciences |
| A273 | Potato Solanum tuberosum | 2904/1 kgs | not available | Elizaveta plus | IR (Col) / cry3A | Centre Bioengineering, Russian Academy of Sciences |
| A274 | Potato Solanum tuberosum | ATBT04-27 | NMK-89367-8 | Atlantic New-Leaf™ potato | IR (Col) / cry3A | Monsanto |
| A275 | Potato Solanum tuberosum | ATBT04-30 | NMK-89613-2 | Atlantic New-Leaf™ potato | IR (Col) / cry3A | Monsanto |
| A276 | Potato Solanum tuberosum | ATBT04-31 | NMK-8917Ø-9 | Atlantic New-Leaf™ potato | IR (Col) / cry3A | Monsanto |
| A277 | Potato Solanum tuberosum | ATBT04-36 | NMK-89279-1 | Atlantic New-Leaf™ potato | IR (Col) / cry3A | Monsanto |
| A278 | Potato Solanum tuberosum | ATBT04-6 | NMK-89761-6 | Atlantic New-Leaf™ potato | IR (Col) / cry3A | Monsanto |
| A279 | Potato Solanum tuberosum | BT06 | NMK-89812-3 | New Leaf™ Russet Burbank potato | IR (Col) / cry3A | Monsanto |
| A280 | Potato Solanum tuberosum | BT10 | NMK-89175-5 | New Leaf™ Russet Burbank potato | IR (Col) / cry3A | Monsanto |
| A281 | Potato Solanum tuberosum | BT12 | NMK-896Ø1-8 | New Leaf™ Russet Burbank potato | IR (Col) / cry3A | Monsanto |
| A282 | Potato Solanum tuberosum | BT16 | NMK-89167-6 | New Leaf™ Russet Burbank potato | IR (Col) / cry3A | Monsanto |
| A283 | Potato Solanum tuberosum | BT17 | NMK-89593-9 | New Leaf™ Russet Burbank potato | IR (Col) / cry3A | Monsanto |
| A284 | Potato Solanum tuberosum | BT18 | NMK-899Ø6-7 | New Leaf™ Russet Burbank potato | IR (Col) / cry3A | Monsanto |
| A285 | Potato Solanum tuberosum | BT23 | NMK-89675-1 | New Leaf™ Russet Burbank potato | IR (Col) / cry3A | Monsanto |
| A286 | Potato Solanum tuberosum | EH92-527-1 | BPS-25271-9 | Amflora™ | ST (Starch) / gbss (antisense-fragment) | BASF |
| A287 | Potato Solanum tuberosum | HLMT15-15 | not available | Hi-Lite NewLeaf™ Y potato | IR (Col) / cry3A VR (PVY) / pvy-cp | Monsanto |
| A288 | Potato Solanum tuberosum | HLMT15-3 | not available | Hi-Lite NewLeaf™ Y potato | IR (Col) / cry3A VR (PVY) / pvy-cp | Monsanto |
| A289 | Potato Solanum tuberosum | HLMT15-46 | not available | Hi-Lite NewLeaf™ Y potato | IR (Col) / cry3A VR (PVY) / pvy-cp | Monsanto |
| A290 | Potato Solanum tuberosum | RBMT15-101 | NMK-89653-6 | New Leaf™ Y Russet Burbank potato | IR (Col) / cry3A VR (PVY) / pvy-cp | Monsanto |
| A291 | Potato Solanum tuberosum | RBMT21-129 | NMK-89684-1 | New Leaf™ Plus Russet Burbank potato | IR (Col) / cry3A VR (PLRV) / plrv-orf1 VR (PLRV) / plrv-orf2 | Monsanto |
| A292 | Potato Solanum tuberosum | RBMT21-152 | not available | New Leaf™ Plus Russet Burbank potato | IR (Col) / cry3A VR (PLRV) / plrv-orf1 VR (PLRV) / plrv-orf2 | Monsanto |
| A293 | Potato Solanum tuberosum | RBMT21-350 | NMK-89185-6 | New Leaf™ Plus Russet Burbank potato | IR (Col) / cry3A VR (PLRV) / plrv-orf1 VR (PLRV) / plrv-orf2 | Monsanto |
| A294 | Potato Solanum tuberosum | RBMT22-082 | NMK-89896-6 | New Leaf™ Plus Russet Burbank potato | IR (Col) / cry3A HT (Gly) / cp4 epsps (aroA:CP4) VR (PLRV) / plrv-orf1 VR (PLRV) / plrv-orf2 | Monsanto |
| A295 | Potato Solanum tuberosum | RBMT22-186 | not available | New Leaf™ Plus Russet Burbank potato | IR (Col) / cry3A HT (Gly) / cp4 epsps (aroA:CP4) VR (PLRV) / plrv-orf1 VR (PLRV) / plrv-orf2 | Monsanto |
| A296 | Potato Solanum tuberosum | RBMT22-238 | not available | New Leaf™ Plus Russet Burbank potato | IR (Col) / cry3A HT (Gly) / cp4 epsps (aroA:CP4) VR (PLRV) / plrv-orf1 VR (PLRV) / plrv-orf2 | Monsanto |
| A297 | Potato Solanum tuberosum | RBMT22-262 | not available | New Leaf™ Plus Russet Burbank potato | IR (Col) / cry3A HT (Gly) / cp4 epsps (aroA:CP4) VR (PLRV) / plrv-orf1 VR (PLRV) / plrv-orf2 | Monsanto |
| A298 | Potato Solanum tuberosum | SEMT15-02 | NMK-89935-9 | Shepody New-Leaf™ Y potato | IR (Col) / cry3A VR (PVY) / pvy-cp | Monsanto |
| A299 | Potato Solanum tuberosum | SEMT15-07 | not available | Shepody New-Leaf™ Y potato | IR (Col) / cry3A VR (PVY) / pvy-cp | Monsanto |
| A300 | Potato Solanum tuberosum | SEMT15-15 | NMK-8993Ø-4 | Shepody New-Leaf™ Y potato | IR (Col) / cry3A VR (PVY) / pvy-cp | Monsanto |
| A301 | Potato Solanum tuberosum | SPBT02-5 | NMK-89576-1 | Superior New-Leaf™ potato | IR (Col) / cry3A | Monsanto |
| A302 | Potato Solanum tuberosum | SPBT02-7 | NMK-89724-5 | Superior New-Leaf™ potato | IR (Col) / cry3A | Monsanto |
| A303 | Potato Solanum tuberosum | E12 | SPS-ØØE12-8 | Innate™ Russet Burbank Potato | ST (AA) / asn1 ST (Starch) / pPhL ST (BSB) / ppo5 ST (Starch) / pR1 | J.R. Simplot Co. |
| A304 | Potato Solanum tuberosum | E24 | SPS-ØØE24-2 | Innate™ Russet Burbank Potato | ST (AA) / asn1 ST (Starch) / pPhL ST (BSB) / ppo5 ST (Starch) / pR1 | J.R. Simplot Co. |
| A305 | Potato Solanum tuberosum | F10 | SPS-ØØF10-7 | Innate™ Ranger Russet Potato | ST (AA) / asn1 ST (Starch) / pPhL ST (BSB) / ppo5 ST (Starch) / pR1 | J.R. Simplot Co. |
| A306 | Potato Solanum tuberosum | F37 | SPS-ØØF37-7 | Innate™ Ranger Russet Potato | ST (AA) / asn1 ST (Starch) / pPhL ST (BSB) / ppo5 ST (Starch) / pR1 | J.R. Simplot Co. |
| A307 | Potato Solanum tuberosum | G11 | SPS-ØØG11-9 | Innate™ G Potato | ST (AA) / asn1 ST (BSB) / ppo5 | J.R. Simplot Co. |
| A308 | Potato Solanum tuberosum | H37 | SPS-ØØH37-9 | Innate™ H Potato | ST (AA) / asn1 ST (Starch) / pPhL ST (BSB) / ppo5 ST (Starch) / pR1 | J.R. Simplot Co. |
| A309 | Potato Solanum tuberosum | H50 | SPS-ØØH50-4 | Innate™ H Potato | ST (AA) / asn1 ST (Starch) / pPhL ST (BSB) / ppo5 ST (Starch) / pR1 | J.R. Simplot Co. |
| A310 | Potato Solanum tuberosum | J3 | SPS-ØØØJ3-4 | Innate™ Atlantic Potato | ST (AA) / asn1 ST (Starch) / pPhL ST (BSB) / ppo5 ST (Starch) / pR1 | J.R. Simplot Co. |
| A311 | Potato Solanum tuberosum | J55 | SPS-ØØJ55-2 | Innate™ Atlantic Potato | ST (AA) / asn1 ST (Starch) / pPhL ST (BSB) / ppo5 ST (Starch) / pR1 | J.R. Simplot Co. |
| A312 | Potato Solanum tuberosum | J78 | SPS-ØØJ78-7 | Innate™ Atlantic Potato | ST (AA) / asn1 ST (BSB) / ppo5 | J.R. Simplot Co. |
| A313 | Rice Oryza sativa | 7Crp#10 | not available | not available | ST (All) / 7crp | National Institute of Agrobiological Sciences (Japan) |
| A314 | Rice Oryza sativa | GM Shanyou 63 | not available | BT Shanyou 63 | IR (BL) / cry1Ab IR (BL) / cry1Ac | Huazhong Agricultural University (China) |
| A315 | Rice Oryza sativa | Huahui-1/TT51-1 | not available | Huahui-1 | IR (BL) / cry1Ab IR (BL) / cry1Ac | Huazhong Agricultural University (China) |
| A316 | Rice Oryza sativa | LLRICE06 | ACS-OSØØ1-4 | Liberty Link™ rice | HT (Glu) / bar | Bayer Crop Science |
| A317 | Rice Oryza sativa | LLRICE601 | BCS-OSØØ3-7 | Liberty Link™ rice | HT (Glu) / bar | Bayer Crop Science |
| A318 | Rice Oryza sativa | LLRICE62 | ACS-OSØØ2-5 | Liberty Link™ rice | HT (Glu) / bar | Bayer Crop Science |
| A319 | Rice Oryza sativa | Tarom molaii + cry1Ab | not available | not available | IR (BL) / cry1Ab (truncated) | Agricultural Biotech Research Institute (Iran) |
| A320 | Rice Oryza sativa | CL121, CL141, CFX51 | CL121, CL141, CFX51 | Clearfield Rice | HT (Imi) / als (mutant) | BASF |
| A321 | Rice Oryza sativa | IMINTA-1, IMINTA-4 | IMINTA-1, IMINTA-4 | Clearfield Rice | HT (Imi) / als (mutant) | BASF |
| A322 | Rice Oryza sativa | PWC16 | PWC16 | not available | HT (Imi) / als (mutant) | BASF |
| A323 | Rose Rosa hybrida | WKS82/130-4-1 | IFD-524Ø1-4 | not available | ST (Color) / 5AT ST (Color) / bp40 (f3'5'h) | Suntory Limited (Japan) |
| A324 | Rose Rosa hybrida | WKS92/130-9-1 | IFD-529Ø1-9 | not available | ST (Color) / 5AT ST (Color) / bp40 (f3'5'h) | Suntory Limited (Japan) |
| A325 | Soybean Glycine max | 260-05 (G94-1, G94-19, G168) | DD-Ø26ØØ5-3 | not available | ST (Oil) / gm-fad2-1 (silencing locus) | Dupont |
| A326 | Soybean Glycine max | A2704-12 | ACS-GMØØ5-3 | Liberty Link™ soybean | HT (Glu) / pat | Bayer Crop Science |
| A327 | Soybean Glycine max | A2704-21 | ACS-GMØØ4-2 | Liberty Link™ soybean | HT (Glu) / pat | Bayer Crop Science |
| A328 | Soybean Glycine max | A5547-127 | ACS-GMØØ6-4 | Liberty Link™ soybean | HT (Glu) / pat | Bayer Crop Science |
| A329 | Soybean Glycine max | A5547-35 | ACS-GMØØ8-6 | Liberty Link™ | HT (Glu) / pat | Bayer Crop Science |
| A330 | Soybean Glycine max | CV127 | BPS-CV127-9 | Cultivance | HT (Imi) / csr1-2 | BASF |
| A331 | Soybean Glycine max | DAS44406-6 | DAS-444Ø6-6 | not available | HT (2,4-D) / aad-12 HT (Gly) / 2mepsps HT (Glu) / pat | Dow |
| A332 | Soybean Glycine max | DAS68416-4 | DAS-68416-4 | Enlist™ Soybean | HT (2,4-D) / aad-12 HT (Glu) / pat | Dow |
| A333 | Soybean Glycine max | DAS68416-4 x MON89788 | DAS-68416-4 x MON-89788-1 | not available | HT (2,4-D) / aad-12 HT (Glu) / pat HT (Gly) / cp4 epsps (aroA:CP4) | Dow |
| A334 | Soybean Glycine max | DAS81419 | DAS-81419-2 | not available | IR (BL) / cry1Ac IR (BL) / cry1 F | Dow |
| A335 | Soybean Glycine max | DP305423 | DP-3Ø5423-1 | Treus™, Plenish™ | ST (Oil) / gm-fad2-1 (partial sequence) | Dupont |
| A336 | Soybean Glycine max | DP305423 x GTS 40-3-2 | DP-3Ø5423-1 x MON-04032-6 | not available | ST (Oil) / gm-fad2-1 (partial sequence) HT (Gly) / cp4 epsps (aroA:CP4) | Dupont |
| A337 | Soybean Glycine max | DP356043 | DP-356Ø43-5 | Optimum GAT™ | HT (Gly) / gat4601 HT (SU) / gm-hra | Dupont |
| A338 | Soybean Glycine max | FG72 (FGØ72-2, FGØ72-3) | MST-FGØ72-3 | not available | HT (Gly) / 2mepsps HT (HPPD) / hppdPF W336 | Bayer Crop-Science and MS Technologies LLC |
| A339 | Soybean Glycine max | GTS 40-3-2 (40-3-2) | MON-Ø4Ø32-6 | Roundup Ready™ soybean | HT (Gly) / cp4 epsps (aroA:CP4) | Monsanto |
| A340 | Soybean Glycine max | GU262 | ACS-GMØØ3-1 | Liberty Link™ soybean | HT (Glu) / pat | Bayer Crop Science |
| A341 | Soybean Glycine max | MON 87712 | MON-87712-4 | Not available | Y&S (Y) / bbx32 | Monsanto |
| A342 | Soybean Glycine max | MON87701 | MON-877Ø1-2 | not available | IR (BL) / cry1Ac | Monsanto |
| A343 | Soybean Glycine max | MON87701 x MON89788 | MON-877Ø1-2 x MON-89788-1 | Intacta™ Roundup Ready™ 2 Pro | IR (BL) / cry1Ac HT (Gly) / cp4 epsps (aroA:CP4) | Monsanto |
| A344 | Soybean Glycine max | MON87705 | MON-877Ø5-6 | Vistive Gold™ | ST (Oil) / fatb1-A (sense and antisense segments) ST (Oil) /fatb2-1-A (sense and antisense) HT (Gly) / cp4 epsps (aroA:CP4) | Monsanto |
| A345 | Soybean Glycine max | MON87705 x MON89788 | MON-877Ø5-6 x MON-89788-1 | not available | ST (Oil) / fatb1-A (sense and antisense segments) ST (Oil) /fatb2-1-A (sense and antisense) HT (Gly) / cp4 epsps (aroA:CP4) | Monsanto |
| A346 | Soybean Glycine max | MON87708 | MON-877Ø8-9 | Genuity® Roundup Ready™ 2 Xtend™ | HT (Dic) / dmo | Monsanto |
| A347 | Soybean Glycine max | MON87708 x MON89788 | MON-877Ø8-9 x MON-89788-1 | not available | HT (Dic) / dmo HT (Gly) / cp4 epsps (aroA:CP4) | Monsanto |
| A348 | Soybean Glycine max | MON87751 | MON-87751-7 | not available | IR (BL) / cry1A.105 IR (BL) / cry2Ab2 | Monsanto |
| A349 | Soybean Glycine max | MON87769 | MON87769-7 | not available | ST (Oil) / Pj.D6D ST (Oil) / Nc.fad3 | Monsanto |
| A350 | Soybean Glycine max | MON87769 x MON89788 | MON-87769-7 x MON-89788-1 | not available | ST (Oil) / Pj.D6D ST (Oil) / Nc.fad3 HT (Gly) / cp4 epsps (aroA:CP4) | Monsanto |
| A351 | Soybean Glycine max | MON89788 | MON-89788-1 | Genuity® Roundup Ready 2 Yield™ | HT (Gly) / cp4 epsps (aroA:CP4) | Monsanto |
| A352 | Soybean Glycine max | SYHTØH2 | SYN-ØØØH2-5 | Herbicide-tolerant Soybean line | HT (Glu) / pat HT (HPPD) / avhppd-03 | Bayer Crop Science & Syngenta |
| A353 | Soybean Glycine max | W62 | ACS-GMØØ2-9 | Liberty Link™ soybean | HT (Glu) / bar | Bayer Crop Science |
| A354 | Soybean Glycine max | W98 | ACS-GMØØ1-8 | Liberty Link™ soybean | HT (Glu) / bar | Bayer Crop Science |
| A355 | Soybean Glycine max | OT96-15 | OT96-15 | not available | ST (Oil) / fan1 (mutant) | Agriculture & Agri-Food Canada |
| A356 | Squash Cucurbita pepo | CZW3 | SEM-ØCZW3-2 | not available | VR (CMV) / cmv-cp VR (zymv) / zymv-cp VR (wmv) / wmv-cp | Seminis Vegetable Seeds (Canada) and Monsanto Company (Asgrow) |
| A357 | Squash Cucurbita pepo | ZW20 | SEM-ØZW2Ø-7 | not available | VR (CYMV) / zymv-cp VR (WMV) / wmv-cp | Seminis Vegetable Seeds (Canada) and Monsanto Company (Asgrow) |
| A358 | Sugar beet Beta vulgaris | GTSB77 (T9100152) | SY-GTSB77-8 | InVigor™ sugarbeet | HT (Gly) / cp4 epsps (aroA:CP4) HT (Gly) / gov247 | Novartis Seeds and Monsanto Company |
| A359 | Sugar beet Beta vulgaris | H7-1 | KM-ØØØH71-4 | Roundup Ready™ sugar beet | HT (Gly) / cp4 epsps (aroA:CP4) | Monsanto |
| A360 | Sugar beet Beta vulgaris | T120-7 | ACS-BVØØ1-3 | Liberty Link™ sugarbeet | HT (Glu) / pat | Bayer Crop Science |
| A361 | Sugarcane Saccharum sp. | NXI-1T | NXI-1T | not available | Y&S (DT) / EcBetA | PT Perkebunan Nusantara XI (Persero) |
| A362 | Sugarcane Saccharum sp. | NXI-4T | NXI-4T | not available | Y&S (DT) / RmBetA | PT Perkebunan Nusantara XI (Persero) |
| A363 | Sugarcane Saccharum sp. | NXI-6T | NXI-6T | not available | Y&S (DT) / RmBetA | PT Perkebunan Nusantara XI (Persero) |
| A364 | Sunflower Helianthus annuus | X81359 | X81359 | Clearfield Sunflower | HT (Imi) / als (mutant) | BASF |
| A365 | Sweet pepper Capsicum annuum | PK-SP01 | not available | not available | VR (CMV) / cmv-cp | Beijing University |
| A366 | Tobacco Nicotiana tabacum | C/F/93/08-02 | not available | not available | HT (Ox) / bxn | SEITA S.A. (France) |
| A367 | Tobacco Nicotiana tabacum | Vector 21-41 | not available | not available | ST (Nic) / NtQPT1 (antisense) | Vector Tobacco Inc. (USA) |
| A368 | Tomato Lycopersicon esculentum | 1345-4 | not available | not available | ST (Ripe) / acc (truncated) | DNA Plant Technology Corporation (USA) |
| A369 | Tomato Lycopersicon esculentum | 35-1-N | not available | not available | ST (Ripe) / sam-k | Agritope Inc. (USA) |
| A370 | Tomato Lycopersicon esculentum | 5345 | not available | not available | IR (BL) / cry1Ac | Monsanto |
| A371 | Tomato Lycopersicon esculentum | 8338 | CGN-89322-3 | not available | ST (Ripe) / accd | Monsanto |
| A372 | Tomato Lycopersicon esculentum | B | SYN-ØØØØB-6 | not available | ST (Ripe) / pg (sense or antisense) | Zeneca Plant Science and Petoseed Company |
| A373 | Tomato Lycopersicon esculentum | Da | SYN-ØØØDA-9 | not available | ST (Ripe) / pg (sense or antisense) | Zeneca Plant Science and Petoseed Company |
| A374 | Tomato Lycopersicon esculentum | Da Dong No 9 | not available | not available | | Institute of Microbiology, CAS (China) |
| A375 | Tomato Lycopersicon esculentum | F (1401F, h38F, 11013F, 7913F) | SYN-ØØØØF-1 | not available | ST (Ripe) / pg (sense or antisense) | Zeneca Plant Science and Petoseed Company |
| A376 | Tomato Lycopersicon esculentum | FLAVR SAVR™ | CGN-89564-2 | FLAVR SAVR | ST (Ripe) / pg (sense or antisense) | Monsanto |
| A377 | Tomato Lycopersicon esculentum | Huafan No 1 | not available | not available | ST (Ripe) / anti-efe | Huazhong Agricultural University (China) |
| A378 | Tomato Lycopersicon esculentum | PK-TM8805R (8805R) | not available | not available | VR (CMV) / cmv-cp | Beijing University |
| A379 | Wheat Triticum aestivum | MON71800 | MON-718ØØ-3 | Roundup Ready™ wheat | HT (Gly) / cp4 epsps (aroA:CP4) | Monsanto |
| A380 | Wheat Triticum aestivum | AP205CL | AP205CL | Clearfield Wheat | HT (Imi) / als (mutant) | BASF |
| A381 | Wheat Triticum aestivum | AP602CL | AP602CL | Clearfield Wheat | HT (Imi) / als (mutant) | BASF |
| A382 | Wheat Triticum aestivum | BW255-2, BW238-3 | BW255-2, BW238-3 | Clearfield Wheat | HT (Imi) / als (mutant) | BASF |
| A383 | Wheat Triticum aestivum | BW7 | BW7 | Clearfield Wheat | HT (Imi) / als (mutant) | BASF |
| A384 | Wheat Triticum aestivum | Teal 11A | Teal 11A | Clearfield Wheat | HT (Imi) / als (mutant) | BASF |
| A385 | Wheat Triticum aestivum | SWP965001 | SWP965001 | not available | HT (Imi) / als (mutant) | American Cyanamid |
| A386 | Alfalfa | KK179 x J101 | MON-ØØ179-5 x MON-00101-8 | not available | | |
| A387 | Apple | GD743 | OKA-NBØØ1-8 | Arctic™ "Golden Delicious" Apple | | |
| A388 | Apple | GD784 | OKA-NBØØ2-9 | Arctic™ "Granny Smith" Apple | | |
| A389 | Cotton | GHB614 x T304-40 x GHB119 x COT102 | BCS-GHØØ2-5 x BCS-GHØØ4-7 x BCS-GHØØ5-8 x SYN-IR1Ø2-7 | Glytol™ x Twin-link™ x VIP-COT™ Cotton | | |
| A390 | Cotton | MON88701 | MON 88701-3 | not available | | |
| A391 | Cotton | MON88701 x MON88913 | MON 887Ø1-3 x MON-88913-8 | not available | | |
| A392 | Cotton | MON88701 x MON88913 x MON 15985 | MON 887Ø1-3 x MON-88913-8 x MON-15985-7 | not available | | |
| A393 | Eucalyptus | GM Eucalyptus | H421 | not available | | |
| A394 | Maize | 3272 x Bt11 x MIR604 x TC1507 x 5307 x GA21 | SYN-E3272-5 x SYN-BTØ11-1 x SYN-IR6Ø4-5 x DAS-Ø15Ø7-1 x SYN-05307-1 x MON-ØØØ21-9 | not available | | |
| A395 | Maize | MIR162 x NK603 | SYN-IR162-4 x MON-00603-6 | not available | | |
| A396 | Maize | MON810 x MIR162 | MON-ØØ81Ø-6 x SYN-IR162-4 | not available | | |
| A397 | Maize | TC1507 x MIR162 x NK603 | DAS-Ø15Ø7-1 x SYN-IR162-4 x MON-ØØ6Ø3-6 | not available | | |
| A398 | Maize | TC1507 x MON810 x MIR162 | DAS-Ø15Ø7-1 x MON-00810-6 x SYN-IR162-4 | not available | | |
| A399 | Potato | AM04-1020 | BPS-A1Ø2Ø-5 | Starch Potato | | |
| A400 | Soybean | MON87712 | MON-87712-4 | not available | | |

**Explanations:**

| **TRAIT TYPE** | **TRAIT TYPE - full name** | **TRAIT TYPE DETAIL** | **TRAIT TYPE DETAIL - full name** |
|---|---|---|---|
| HT | Herbicide Tolerance | HT (Gly) | glyphosate tolerance |
| | | HT (Glu) | glufosinate tolerance |
| | | HT (SU) | sulfonylurea tolerance |
| | | HT (Imi) | imidazolinone tolerance |
| | | HT (2,4-D) | resistance against 2,4-D Choline |
| | | HT (Dic) | dicamba tolerance |
| | | HT (Gly + Dicamba) | glyphosate & dicamba tolerance |
| | | HT (HPPD) | HPPD inhibitor resistance |
| | | HT (Ox) | oxynil herbicide tolerance (e.g. bromoxynil) |
| | | HT (Cyc) | cyclohexanone herbicide tolerance (e.g. sethoxydim) |
| | | 2HT | two genes for same HT-trait |
| | | | |
| IR | Insect resistance (including Nematodes ) | IR (BL) | broad spectrum resistance against lepidopterans (above ground worms) |
| | | IR (Col) | resistance against Coleopterans (beetles) |
| | | IR (SCN) | soybean Cyst Nematode resistance |
| | | IR (CB) | corn borer resistance |
| | | IR (BRun) | broad range resistance, not further specified |
| | | IR (Rw) | resistance against root worm |
| | | | |
| PC | Pollination control and male sterility systems | PC (FR) | fertility restoration |
| | | PC (MS) | male sterility |
| FR | Fungal resistance | FR (SR) | stalk rot resistance |
| | | | |
| VR | Viral resistance | VR (BGMV) | resistance to Bean Golden Mosaic Virus |
| | | VR (PRSV) | resistance to papaya ringspot virus |
| | | VR (PPV) | resistance to plum pox virus |
| | | VR (PVY) | resistance to potato virus Y |
| | | VR (PLRV) | resistance to potato leafroll virus |
| | | VR (CMV) | resistance to cucumber mosaic cucumovirus |
| | | VR (ZYMV) | resistance to zucchini yellow mosaic potyvirus |
| | | VR (WMV) | resistance to watermelon mosaic potyvirus 2 |
| | | | |
| Y&S | Yield and Stress | Y&S (DT) | drought tolerance |
| | | Y&S (Y) | yield increase |
| | | Y&S (NUE) | nitrogen use efficiency |
| | | | |
| ST | Specialty Trait (includes Feed, Food, Quality) | ST (Lignin) | altered lignin production |
| | | ST (OIL) | altered oil content |
| | | ST (starch) | altered starch content |
| | | ST (CA) | corn amylase |
| | | ST (P) | phytase production |
| | | ST (Color) | modified color |
| | | ST (Ripe) | delayed/altered ripening |
| | | ST (AA) | altered amino-acid content |
| | | ST (All) | anti-allergy |
| | | ST (Nic) | altered nicotin content |
| | | ST (BSB) | reduced black spot bruise formation |
| | | | |
| SM | Selectable marker | | |

All embodiments of the triazole fungicide as defined above are also referred to herein after as the triazole fungicide or triazole compound I according to the present invention. They can also be converted into agrochemical compositions comprising a solvent or solid carrier and at least one of the triazole fungicides according to the present invention.

An agrochemical composition comprises a fungicidally effective amount of a triazole compound I. The term "effective amount" denotes an amount of the composition or of the triazole compound I, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific triazole compound I used.

The triazole compounds I, their N-oxides and salts can be converted into customary types of agrochemical compositions, e. g. solutions, emulsions, suspensions, dusts, powders, pastes, granules, pressings, capsules, and mixtures thereof. Examples for composition types are suspensions (e. g. SC, OD, FS), emulsifiable concentrates (e. g. EC), emulsions (e. g. EW, EO, ES, ME), capsules (e. g. CS, ZC), pastes, pastilles, wettable powders or dusts (e. g. WP, SP, WS, DP, DS), pressings (e. g. BR, TB, DT), granules (e. g. WG, SG, GR, FG, GG, MG), insecticidal articles (e. g. LN), as well as gel formulations for the treatment of plant propagation materials such as seeds (e. g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e. g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e. g. ethanol, propanol, butanol, benzyl alcohol, cyclohexanol; glycols; DMSO; ketones, e. g. cyclohexanone; esters, e. g. lactates, carbonates, fatty acid esters, gamma-butyrolactone; fatty acids; phosphonates; amines; amides, e. g. N-methyl pyrrolidone, fatty acid dimethyl amides; and mixtures thereof.

Suitable solid carriers or fillers are mineral earths, e. g. silicates, silica gels, talc, kaolins, limestone, lime, chalk, clays, dolomite, diatomaceous earth, bentonite, calcium sulfate, magnesium sulfate, magnesium oxide; polysaccharides, e. g. cellulose, starch; fertilizers, e. g. ammonium sulfate, ammonium phosphate, ammonium nitrate, ureas; products of vegetable origin, e. g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylaryl sulfonates, diphenyl sulfonates, alpha-olefin sulfonates, lignin sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkyl naphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinyl pyrrolidone, vinyl alcohols, or vinyl acetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinyl amines or polyethylene amines.

Suitable adjuvants are compounds, which have a negligible or even no pesticidal activity themselves, and which improve the biological performance of the triazole compound I on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable thickeners are polysaccharides (e. g. xanthan gum, carboxymethyl cellulose), inorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e. g. in red, blue, or green) are pigments of low water solubility and water-soluble dyes. Examples are inorganic colorants (e. g. iron oxide, titan oxide, iron hexacyanoferrate) and organic colorants (e. g. alizarin-, azo- and phthalocyanine colorants).

Suitable tackifiers or binders are polyvinyl pyrrolidones, polyvinyl acetates, polyvinyl alcohols, polyacrylates, biological or synthetic waxes, and cellulose ethers.

Examples for composition types and their preparation are:
i) Water-soluble concentrates (SL, LS)
   10-60 wt% of a triazole compound I and 5-15 wt% wetting agent (e. g. alcohol alkoxylates) are dissolved in water and/or in a water-soluble solvent (e. g. alcohols) ad 100 wt%. The active substance dissolves upon dilution with water.
ii) Dispersible concentrates (DC)
   5-25 wt% of a triazole compound I and 1-10 wt% dispersant (e. g. polyvinyl pyrrolidone) are dissolved in organic solvent (e. g. cyclohexanone) ad 100 wt%. Dilution with water gives a dispersion.
iii) Emulsifiable concentrates (EC)
   15-70 wt% of a triazole compound I and 5-10 wt% emulsifiers (e. g. calcium dodecylbenzenesulfonate and castor oil ethoxylate) are dissolved in water-insoluble organic solvent (e. g. aromatic hydrocarbon) ad 100 wt%. Dilution with water gives an emulsion.
iv) Emulsions (EW, EO, ES)
   5-40 wt% of a triazole compound I and 1-10 wt% emulsifiers (e. g. calcium dodecylbenzenesulfonate and castor oil ethoxylate) are dissolved in 20-40 wt% water-insoluble organic solvent (e. g. aromatic hydrocarbon). This mixture is introduced into water ad 100 wt% by means of an emulsifying machine and made into a homogeneous emulsion. Dilution with water gives an emulsion.
v) Suspensions (SC, OD, FS)
   In an agitated ball mill, 20-60 wt% of a triazole compound I are comminuted with addition of 2-10 wt% dispersants and wetting agents (e. g. sodium lignosulfonate and alcohol ethoxylate), 0.1-2 wt% thickener (e. g. xanthan gum) and water ad 100 wt% to give a fine active substance suspension. Dilution with water gives a stable suspension of the active substance. For FS type composition up to 40 wt% binder (e. g. polyvinyl alcohol) is added.
vi) Water-dispersible granules and water-soluble granules (WG, SG)
   50-80 wt% of a triazole compound I are ground finely with addition of dispersants and wetting agents (e. g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.
vii) Water-dispersible powders and water-soluble powders (WP, SP, WS)
   50-80 wt% of a triazole compound I are ground in a rotor-stator mill with addition of 1-5 wt% dispersants (e. g. sodium lignosulfonate), 1-3 wt% wetting agents (e. g. alcohol ethoxylate) and solid carrier (e. g. silica gel) ad 100 wt%. Dilution with water gives a stable dispersion or solution of the active substance.
viii) Gel (GW, GF)
   In an agitated ball mill, 5-25 wt% of a triazole compound I are comminuted with addition of 3-10 wt% dispersants (e. g. sodium lignosulfonate), 1-5 wt% thickener (e. g. carboxymethyl cellulose) and water ad 100 wt% to give a fine suspension of the active substance. Dilution with water gives a stable suspension of the active substance.
ix) Microemulsion (ME)
   5-20 wt% of a triazole compound I are added to 5-30 wt% organic solvent blend (e. g. fatty acid dimethyl amide and cyclohexanone), 10-25 wt% surfactant blend (e. g. alcohol ethoxylate and arylphenol ethoxylate), and water ad 100 %. This mixture is stirred for 1 h to produce spontaneously a thermodynamically stable microemulsion.
x) Microcapsules (CS)
   An oil phase comprising 5-50 wt% of a triazole compound I, 0-40 wt% water insoluble organic solvent (e. g. aromatic hydrocarbon), 2-15 wt% acrylic monomers (e. g. methylmethacrylate, methacrylic acid and a di- or triacrylate) are dispersed into an aqueous solution of a protective colloid (e. g. polyvinyl alcohol). Radical polymerization results in the formation of poly(meth)acrylate microcapsules. Alternatively, an oil phase comprising 5-50 wt% of a compound I according to the invention, 0-40 wt% water insoluble organic solvent (e. g. aromatic hydrocarbon), and an isocyanate monomer (e. g. diphenylmethene-4,4'-diisocyanatae) are dispersed into an aqueous solution of a protective colloid (e. g. polyvinyl alcohol). The addition of a polyamine (e. g. hexamethylenediamine) results in the formation of polyurea microcapsules. The monomers amount to 1-10 wt%. The wt% relate to the total CS composition.
xi) Dustable powders (DP, DS)
   1-10 wt% of a triazole compound I are ground finely and mixed intimately with solid carrier (e. g. finely divided kaolin) ad 100 wt%.
xii) Granules (GR, FG)
   0.5-30 wt% of a triazole compound I is ground finely and associated with solid carrier (e. g. silicate) ad 100 wt%. Granulation is achieved by extrusion, spray-drying or fluidized bed.
xiii) Ultra-low volume liquids (UL)
   1-50 wt% of a triazole compound I are dissolved in organic solvent (e. g. aromatic hydrocarbon) ad 100 wt%.

The compositions types i) to xiii) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

For the purposes of treatment of plant propagation materials, particularly seeds, solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC), and gels (GF) are usually employed. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying compound I and compositions thereof, respectively, onto plant propagation material, especially seeds, include dressing, coating, pelleting, dusting, and soaking as well as in-furrow application methods. Preferably, compound I or the compositions thereof, respectively, are applied on to the plant propagation material by a method such that germination is not induced, e. g. by seed dressing, pelleting, coating and dusting.

In a further embodiment, a suspension-type (FS) composition is used for seed treatment. Typcially, a FS composition may comprise 1-800 g/l of active substance, 1-200 g/l Surfactant, 0 to 200 g/l antifreezing agent, 0 to 400 g/l of binder, 0 to 200 g/l of a pigment and up to 1 liter of a solvent, preferably water.

The the triazole fungicides according to the present invention can be used as such or in the form of their compositions, e. g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the active substances according to the invention.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of active substance.

The active substances may also be used successfully in the ultra-low-volume process (ULV), it being possible to apply compositions comprising over 95% by weight of active substance, or even to apply the active substance without additives.

The amounts of active substances applied are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required.

Various types of oils, wetters, adjuvants, herbicides, bactericides, other fungicides and/or pesticides may be added to the active substances or the compositions comprising them, if appropriate not until immediately prior to use (tank mix). These agents can be admixed with the compositions according to the invention in a weight ratio of 1:100 to 100:1, preferably 1:10 to 10:1.

Adjuvants which can be used are in particular organic modified polysiloxanes such as Break Thru S 240®; alcohol alkoxylates such as Atplus 245®, Atplus MBA 1303®, Plurafac LF 300® and Lutensol ON 30®; EO/PO block polymers, e. g. Pluronic RPE 2035® and Genapol B®; alcohol ethoxylates such as Lutensol XP 80®; and dioctyl sulfosuccinate sodium such as Leophen RA®.

The triazole compounds I-1 to I-31 used according to the invention can also be present together with other active substances, e. g. with herbicides, insecticides, growth regulators, fungicides, biopesticides or else with fertilizers, as pre-mix or, if appropriate, not until immediately prior to use (tank mix). Especially suitable compositions and mixtures that can be used according to the present invention and mixing partners or further active ingredients that may be preferably present together with any one of triazoles I-1 to I-31 as defined above, are detailled in patent application WO 2014/095994. In WO2014/095932 further mixtures are disclosed. Furthermore, suitable mixtures with biopesticides are disclosed in PCT/EP2014/063412.

Particular compositions that can be used according to the present invention are a compound selected from I-1 to I-31 as component I and a component II selected from the following groups A) to O):
A) Respiration inhibitors
   - Inhibitors of complex III at Qₒ site (e.g. strobilurins): azoxystrobin, coumethoxystrobin, coumoxystrobin, dimoxystrobin, enestroburin, fenaminstrobin, fenoxystrobin/flufenoxystrobin, fluoxastrobin, Isofetamid, kresoxim-methyl, metominostrobin, orysastrobin, picoxystrobin, pyraclostrobin, pyrametostrobin, pyraoxystrobin, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;
   - inhibitors of complex III at Qᵢ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate,
   - inhibitors of complex II (e. g. carboxamides): benodanil, benzovindiflupyr, bixafen, boscalid, carboxin, fenfuram, fluopyram, flutolanil, fluxapyroxad, furametpyr, isofetamid, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methylpyrazole-4-carboxamide;
   - other respiration inhibitors (e.g. complex I, uncouplers): diflumetorim, (5,8-difluoroquinazolin-4-yl)-{2-[2-fluoro-4-(4-trifluoromethylpyridin-2-yloxy)-phenyl]-ethyl}-amine; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam;
B) Sterol biosynthesis inhibitors (SBI fungicides)
   - C14 demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol; imidazoles: imazalil, pefurazoate, prochloraz, triflumizol; pyrimidines, pyridines and piperazines: fenarimol, nuarimol, pyrifenox, triforine; 3-(4-chloro-2-fluoro-phenyl)-5-(2,4-difluorophenyl)isoxazol-4-yl]-(3-pyridyl)methanol;
   - Delta 14-reductase inhibitors: aldimorph, dodemorph, dodemorph-acetate, fenpropimorph, tridemorph, fenpropidin, piperalin, spiroxamine;
   - Inhibitors of 3-keto reductase: fenhexamid;
C) Nucleic acid synthesis inhibitors
   - phenylamides or acyl amino acid fungicides: benalaxyl, benalaxyl-M, kiralaxyl, metalaxyl, metalaxyl-M (mefenoxam), ofurace, oxadixyl;
   - others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;
D) Inhibitors of cell division and cytoskeleton
   - tubulin inhibitors, such as benzimidazoles, thiophanates: benomyl, carbendazim, fuberidazole, thiabendazole, thiophanate-methyl; triazolopyrimidines: 5-chloro-7-(4-methylpiperidin-1-yl)-6-(2,4,6-trifluorophenyl)-[1,2,4]triazolo[1,5-a]pyrimidine
   - other cell division inhibitors: diethofencarb, ethaboxam, pencycuron, fluopicolide, zox-amide, metrafenone, pyriofenone;
E) Inhibitors of amino acid and protein synthesis
   - methionine synthesis inhibitors (anilino-pyrimidines): cyprodinil, mepanipyrim, pyrimethanil;
   - protein synthesis inhibitors: blasticidin-S, kasugamycin, kasugamycin hydrochloride-hydrate, mildiomycin, streptomycin, oxytetracyclin, polyoxine, validamycin A;
F) Signal transduction inhibitors
   - MAP / histidine kinase inhibitors: fluoroimid, iprodione, procymidone, vinclozolin, fenpiclonil, fludioxonil;
   - G protein inhibitors: quinoxyfen;
G) Lipid and membrane synthesis inhibitors
   - Phospholipid biosynthesis inhibitors: edifenphos, iprobenfos, pyrazophos, isoprothiolane;
   - lipid peroxidation: dicloran, quintozene, tecnazene, tolclofos-methyl, biphenyl, chloroneb, etridiazole;
   - phospholipid biosynthesis and cell wall deposition: dimethomorph, flumorph, mandipropamid, pyrimorph, benthiavalicarb, iprovalicarb, valifenalate and N-(1-(1-(4-cyano-phenyl)-ethanesulfonyl)-but-2-yl) carbamic acid-(4-fluorophenyl) ester;
   - compounds affecting cell membrane permeability and fatty acides: propamocarb, propamocarb-hydrochlorid
   - fatty acid amide hydrolase inhibitors: oxathiapiprolin, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1 H-pyrazol-1-yl]ethanone, 2-{3-[2-(1-{[3,5-bis(difluoromethyl-1H-pyrazol-1-yl]acetyl}piperidin-4-yl)-1,3-thiazol-4-yl]-4,5-dihydro-1,2-oxazol-5-yl}phenyl methanesulfonate, 2-{3-[2-(1-{[3,5-bis(difluoro-methyl)-1H-pyrazol-1-yl]acetyl}piperidin-4-yl) 1,3-thiazol-4-yl]-4,5-dihydro-1,2-oxazol-5-yl}-3-chlorophenyl methanesulfonate;
H) Inhibitors with Multi Site Action
   - inorganic active substances: Bordeaux mixture, copper acetate, copper hydroxide, copper oxychloride, basic copper sulfate, sulfur;
   - thio- and dithiocarbamates: ferbam, mancozeb, maneb, metam, metiram, propineb, thiram, zineb, ziram;
   - organochlorine compounds (e.g. phthalimides, sulfamides, chloronitriles): anilazine, chlorothalonil, captafol, captan, folpet, dichlofluanid, dichlorophen, flusulfamide, hexachlorobenzene, pentachlorphenole and its salts, phthalide, tolylfluanid, N-(4-chloro-2-nitro-phenyl)-N-ethyl-4-methyl-benzenesulfonamide;
   - guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone;
I) Cell wall synthesis inhibitors
   - inhibitors of glucan synthesis: validamycin, polyoxin B; melanin synthesis inhibitors: pyroquilon, tricyclazole, carpropamid, dicyclomet, fenoxanil;
J) Plant defence inducers
   - acibenzolar-S-methyl, probenazole, isotianil, tiadinil, prohexadione-calcium; phosphonates: fosetyl, fosetyl-aluminum, phosphorous acid and its salts;
K) Unknown mode of action
   - bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxin-copper, proquinazid, tebufloquin, tecloftalam, oxathiapiprolin, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, tolprocarb, triazoxide, 2-butoxy-6-iodo-3-propylchromen-4-one, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chlorophenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1 H-benzoimidazole, 2-(4-chloro-phenyl)-N-[4-(3,4-dimethoxy-phenyl)-isoxazol-5-yl]-2-prop-2-ynyloxy-acetamide; ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinolone; 9-fluoro-2,2-dimethyl-5-(3-quinolyl)-3H-1,4-benzoxazepine, ethyl (Z)-3-amino-2-cyano-3-phenyl-prop-2-enoate , picarbutrazox, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phen-yl]propan-2-ol, 3-(5-fluoro-3,3,4,4-tetramethyl-3,4-dihydroisoquinolin-1-yl)-quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;
L) Biopesticides
   L1) Microbial pesticides with fungicidal, bactericidal, viricidal and/or plant defense activator activity: Ampelomyces quisqualis, Aspergillus flavus, Aureobasidium pullulans, Bacillus amylo-liquefaciens, B. mojavensis, B. pumilus, B. simplex, B. solisalsi, B. subtilis, B. subtilis var. amyloliquefaciens, Candida oleophila, C. saitoana, Clavibacter michiganensis (bacteriophages), Coniothyrium minitans, Cryphonectria parasitica, Cryptococcus albidus, Dilophosphora alopecuri, Fusarium oxysporum, Clonostachys rosea f. catenulate (also named Gliocladium catenulatum), Gliocladium roseum, Lysobacter antibioticus, L. enzymogenes, Metschnikowia fructicola, Microdochium dimerum, Microsphaeropsis ochracea, Muscodor albus, Paenibacillus polymyxa, Pantoea vagans, Phlebiopsis gigantea, Pseudomonas sp., Pseudomonas chloraphis, Pseudozyma flocculosa, Pichia anomala, Pythium oligandrum, Sphaerodes mycoparasitica, Streptomyces griseoviridis, S. lydicus, S. violaceusniger, Talaromyces flavus, Trichoderma asperellum, T. atroviride, T. fertile, T. gamsii, T. harmatum, T. harzianum; mixture of T. harzianum and T. viride; mixture of T. polysporum and T. harzianum; T. stromaticum, T. virens (also named Gliocladium virens), T. viride, Typhula phacorrhiza, Ulocladium oudemansii, Verticillium dahlia, zucchini yellow mosaic virus (avirulent strain);
   L2) Biochemical pesticides with fungicidal, bactericidal, viricidal and/or plant defense activator activity: chitosan (hydrolysate), harpin protein, laminarin, Menhaden fish oil, natamycin, Plum pox virus coat protein, potassium or sodium bicarbonate, Reynoutria sachlinensis extract, salicylic acid, tea tree oil;
   L3) Microbial pesticides with insecticidal, acaricidal, molluscidal and/or nematicidal activity: Agrobacterium radiobacter, Bacillus cereus, B. firmus, B. thuringiensis, B. thuringiensis ssp. aizawai, B. t. ssp. israelensis, B. t. ssp. galleriae, B. t. ssp. kurstaki, B. t. ssp. tenebrionis, Beauveria bassiana, B. brongniartii , Burkholderia sp., Chromobacterium subtsugae, Cydia pomonella granulosis virus, Cryptophlebia leucotreta granulovirus (CrIeGV), Isaria fumosorosea, Heterorhabditis bacteriophora, Lecanicillium longisporum, L. muscarium (formerly Verticillium lecanii), Metarhizium anisopliae, M. anisopliae var. acridum, Nomuraea rileyi, Paecilomyces fumosoroseus, P. lilacinus, Paenibacillus popilliae, Pasteuria spp., P. nishizawae, P. penetrans, P. ramose, P. reneformis, P. thornea, P. usgae, Pseudomonas fluorescens, Steinernema carpocapsae, S. feltiae, S. kraussei;
   L4) Biochemical pesticides with insecticidal, acaricidal, molluscidal, pheromone and/or nematicidal activity: L-carvone, citral, (E,Z)-7,9-dodecadien-1-yl acetate, ethyl formate, (E,Z)-2,4-ethyl decadienoate (pear ester), (Z,Z,E)-7,11,13-hexadecatrienal, heptyl butyrate, isopropyl myristate, lavanulyl senecioate, cis-jasmone, 2-methyl 1-butanol, methyl eugenol, methyl jasmonate, (E,Z)-2,13-octadecadien-1-ol, (E,Z)-2,13-octadecadien-1-ol acetate, (E,Z)-3,13-octadecadien-1-ol, R-1-octen-3-ol, pentatermanone, potassium silicate, sorbitol actanoate, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, Acacia negra extract, extract of grapefruit seeds and pulp, extract of Chenopodium ambrosiodae, Catnip oil, Neem oil, Quillay extract, Tagetes oil;
   L5) Microbial pesticides with plant stress reducing, plant growth regulator, plant growth promoting and/or yield enhancing activity: Azospirillum amazonense, A. brasilense, A. lipoferum, A. irakense, A. halopraeferens, Bradyrhizobium sp., B. elkanii, B. japonicum, B. liaoningense, B. lupini, Delftia acidovorans, Glomus intraradices, Mesorhizobium sp., Paenibacillus alvei, Penicillium bilaiae, Rhizobium leguminosarum bv. phaseoli, R. I. trifolii, R. I. bv. viciae, R. tropici, Sinorhizobium meliloti;
   L6) Biochemical pesticides with plant stress reducing, plant growth regulator and/or plant yield enhancing activity: abscisic acid, aluminium silicate (kaolin), 3-decen-2-one, formononetin, genistein, hesperetin, homobrassinlide, humates, jasmonic acid or salts or derivatives thereof, lysophosphatidyl ethanolamine, naringenin, polymeric polyhydroxy acid, Ascophyllum nodosum (Norwegian kelp, Brown kelp) extract and Ecklonia maxima (kelp) extract;M) Growth regulators abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;
N) Herbicides
   - acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
   - amino acid derivatives: bilanafos, glyphosate, glufosinate, sulfosate;
   - aryloxyphenoxypropionates: clodinafop, cyhalofop-butyl, fenoxaprop, fluazifop, haloxyfop, metamifop, propaquizafop, quizalofop, quizalofop-P-tefuryl;
   - Bipyridyls: diquat, paraquat;
   - (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
   - cyclohexanediones: butroxydim, clethodim, cycloxydim, profoxydim, sethoxydim, tepraloxydim, tralkoxydim;
   - dinitroanilines: benfluralin, ethalfluralin, oryzalin, pendimethalin, prodiamine, trifluralin;
   - diphenyl ethers: acifluorfen, aclonifen, bifenox, diclofop, ethoxyfen, fomesafen, lactofen, oxyfluorfen;
   - hydroxybenzonitriles: bomoxynil, dichlobenil, ioxynil;
   - imidazolinones: imazamethabenz, imazamox, imazapic, imazapyr, imazaquin, imazethapyr;
   - phenoxy acetic acids: clomeprop, 2,4-dichlorophenoxyacetic acid (2,4-D), 2,4-DB, dichlorprop, MCPA, MCPA-thioethyl, MCPB, Mecoprop;
   - pyrazines: chloridazon, flufenpyr-ethyl, fluthiacet, norflurazon, pyridate;
   - pyridines: aminopyralid, clopyralid, diflufenican, dithiopyr, fluridone, fluroxypyr, picloram, picolinafen, thiazopyr;
   - sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxypyrimidin-2-yl)urea;
   - triazines: ametryn, atrazine, cyanazine, dimethametryn, ethiozin, hexazinone, metamitron, metribuzin, prometryn, simazine, terbuthylazine, terbutryn, triaziflam;
   - ureas: chlorotoluron, daimuron, diuron, fluometuron, isoproturon, linuron, methabenzthiazuron,tebuthiuron;
   - other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
   - others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chlorophenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.
O) Insecticides
   - organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
   - carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
   - pyrethroids: allethrin, bifenthrin, cyfluthrin, cyhalothrin, cyphenothrin, cypermethrin, alphacypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
   - insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
   - nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
   - GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
   - macrocyclic lactone insecticides: abamectin, emamectin, milbemectin, lepimectin, spinosad, spinetoram;
   - mitochondrial electron transport inhibitor (METI) I acaricides: fenazaquin, pyridaben, tebufenpyrad, tolfenpyrad, flufenerim;
   - METI II and III compounds: acequinocyl, fluacyprim, hydramethylnon;
   - Uncouplers: chlorfenapyr;
   - oxidative phosphorylation inhibitors: cyhexatin, diafenthiuron, fenbutatin oxide, propargite;
   - moulting disruptor compounds: cryomazine;
   - mixed function oxidase inhibitors: piperonyl butoxide;
   - sodium channel blockers: indoxacarb, metaflumizone;
   - ryanodine receptor inhibitors: chlorantraniliprole, cyantraniliprole (former cyazypyr), flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyllambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyllambda-4-sulfanylidene)carbamoyl]-phenyl]-2-(3-chloro-2-pyridyl)-5-(trifluoromethyl)pyrazole-3-carboxamide;
   - others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] cyclopropaneacetic acid ester.

According to one embodiment, in the case of the use together with one or more further active ingredients, the triazole compound is I-1.

According to a further embodiment, in the case of the use together with one or more further active ingredients, the triazole compound is I-2.

According to still a further embodiment, in the case of the use together with one or more further active ingredients, the triazole compound is I-3.

According to still a further embodiment, in the case of the use together with one or more further active ingredients, the triazole compound is I-4.

According to still a further embodiment, in the case of the use together with one or more further active ingredients, the triazole compound is I-5.

Components II that may be particularly suitable are selected from the following:

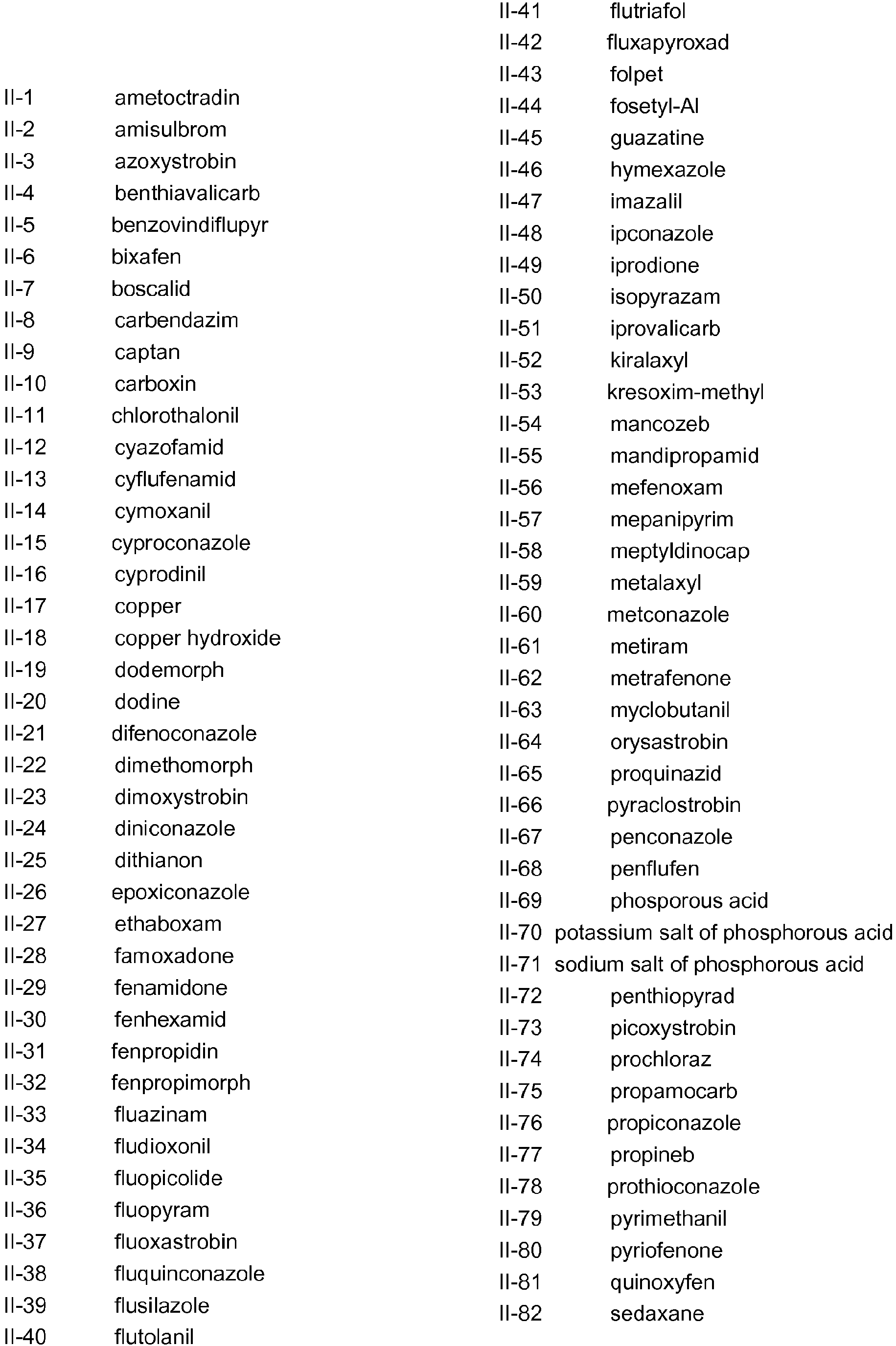

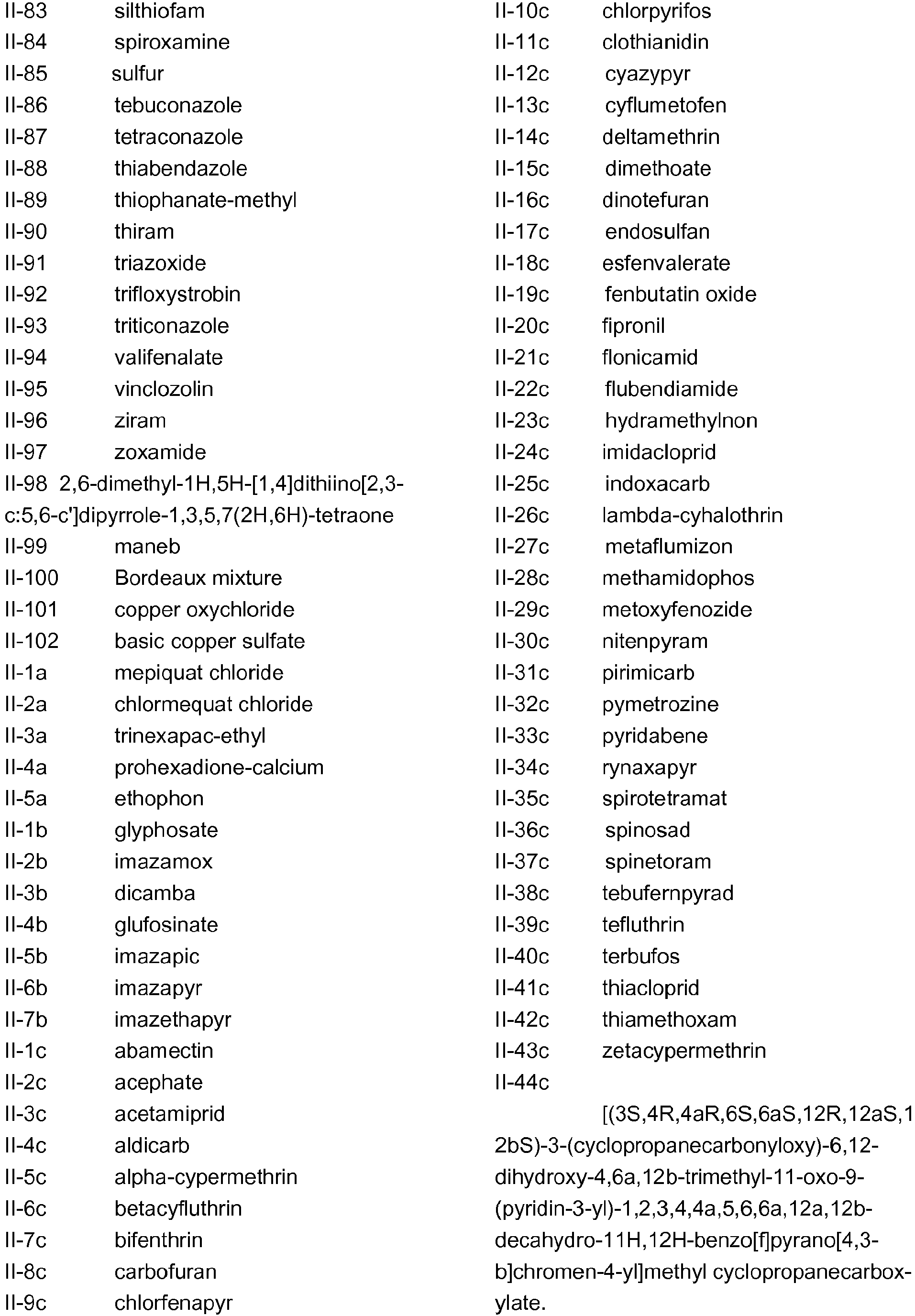

Components III that may be used together with a triazole compound I-1 to I-31 as component I and a component II as defined above according to the invention, are compounds selected from the group of the following:

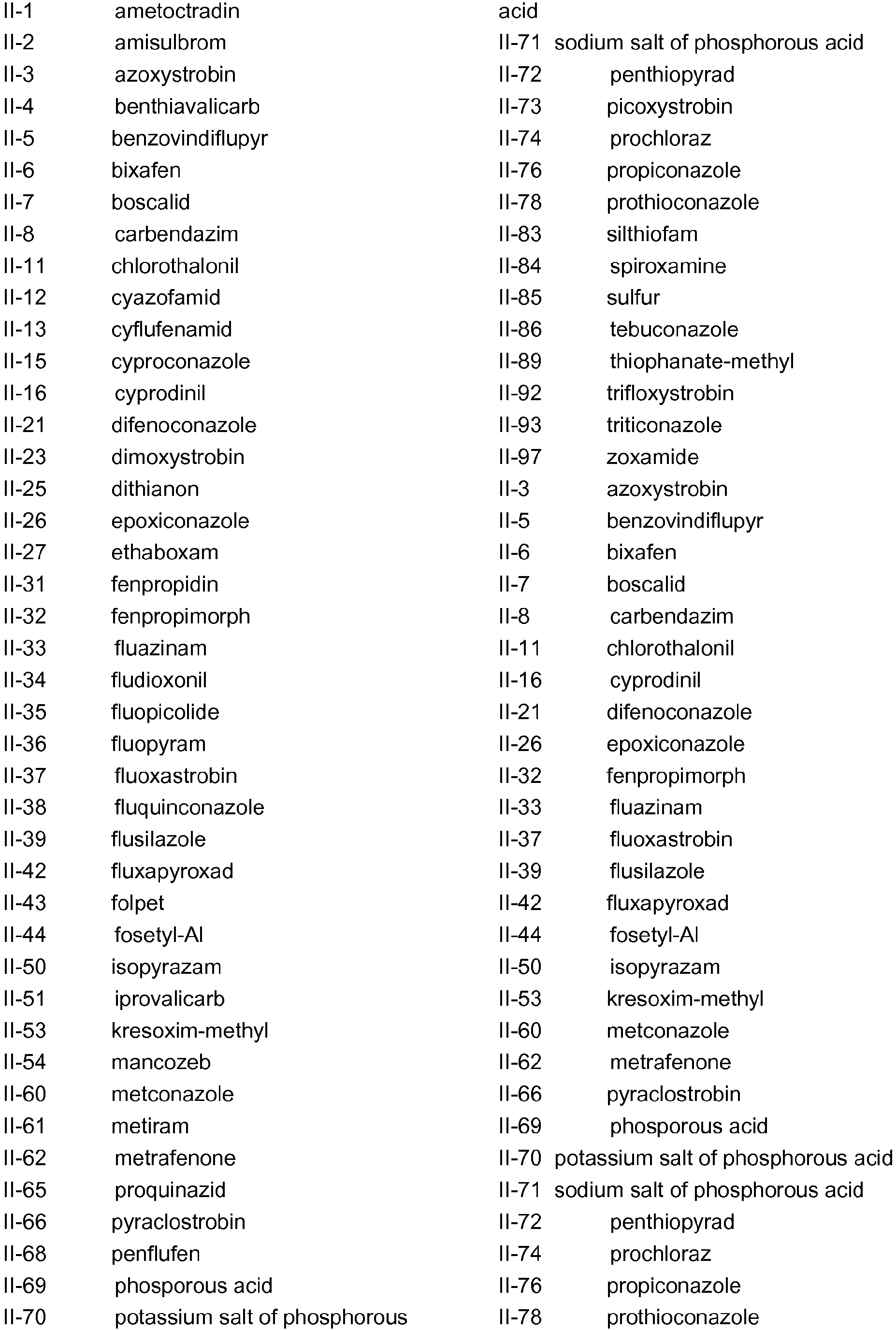

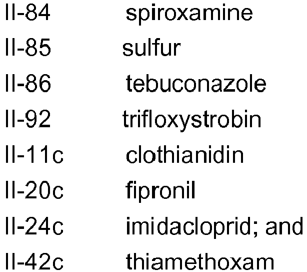

The active compounds of component II, component III and any further component, selected as detailled herein, their preparation and their action against harmful fungi are known (cf.: http://www.alanwood.net/pesticides/) and mainly commercially available. Commercially available active compounds can be found, for example, in The Pesticide Manual, 14th Edition, British Crop Protection Council (2006) and other publications. Fluxapyroxad (N-(3',4',5'-trifluorobiphenyl-2-yl)-3-difluoromethyl-1-methyl-1H-pyrazole-4-carboxamide) and its preparation and use is described in WO 2006/087343.

The pesticides described by IUPAC nomenclature, their preparation and their fungicidal activity are also known (cf. Can. J. Plant Sci. 48(6), 587-94, 1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 11/028657, WO2012/168188, WO 2007/006670, WO 2011/77514; WO13/047749, WO 10/069882, WO 13/047441, WO 03/16303, WO 09/90181, WO 13/127704, WO 13/024009and WO 13/024010).

The active compounds of group O) and their pesticidal action and processes for their preparation are known (see also http://www.hclrss.demon.co.uk/index.html). Commercially available active compounds can be found, for example, in The Pesticide Manual, 14th Edition, British Crop Protection Council (2006) and other publications.

In a preferred embodiment of the invention, the inventive mixtures are used for the protection of the plant propagation material, e.g. the seeds and the seedlings' roots and shoots, preferably the seeds.

Seed treatment can be made into the seedbox before planting into the field.

For seed treatment purposes, the weight ration in the binary, ternary and quaternary mixtures of the present invention generally depends from the properties of the triazole fungicides according to the present invention.

Compositions, which are especially useful for seed treatment are e.g.:

| | |
|---|---|
| A | Soluble concentrates (SL, LS) |
| D | Emulsions (EW, EO, ES) |
| E | Suspensions (SC, OD, FS) |
| F | Water-dispersible granules and water-soluble granules (WG, SG) |
| G | Water-dispersible powders and water-soluble powders (WP, SP, WS) |
| H | Gel-Formulations (GF) |
| I | Dustable powders (DP, DS) |

These compositions can be applied to plant propagation materials, particularly seeds, diluted or undiluted. These compositions can be applied to plant propagation materials, particularly seeds, diluted or undiluted. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e. g. by seed dressing, pelleting, coating and dusting.

In the treatment of plant propagation material (preferably seed), the application rates of the inventive mixture are generally for the formulated product (which usually comprises from 10 to 750 g/l of the active(s).

The invention also relates to the propagation products of plants, and especially the seed comprising, that is, coated with and/or containing, a mixture as defined above or a composition containing the mixture of two or more active ingredients or a mixture of two or more compositions each providing one of the active ingredients. The plant propagation material (preferably seed) comprises the inventive mixtures in an amount of from 0.1 g to 10 kg per 100 kg of plant propagation material (preferably seed).

## Claims

1. A method for controlling pests and/or increasing the plant health in cultivated plants comprising the application of a triazole fungicide to the plant with at least one modification, parts of such plants, plant propagation materials, or at their locus of growth, wherein the triazole fungicide is selected from the group consisting of the following I-1 to I-31:
compound I-1 2-[2-chloro-4-(4-chlorophenoxy)phenyl]-1-(1,2,4-triazol-1-yl)pent-3-yn-2-ol;
compound I-2 1-[2-chloro-4-(4-chlorophenoxy)phenyl]-1-cyclopropyl-2-(1,2,4-triazol-1-yl)ethanol;
compound I-3 2-[4-(4-chlorophenoxy)-2-(trifluoromethyl)phenyl]-1-(1,2,4-triazol-1-yl)propan-2-ol;
compound I-4 1-[4-(4-chlorophenoxy)-2-(trifluoromethyl)phenyl]-1-cyclopropyl-2-(1,2,4-triazol-1-yl)ethanol;
compound I-5 2-[4-(4-chlorophenoxy)-2-(trifluoromethyl)phenyl]-3-methyl-1-(1,2,4-triazol-1-yl)butan-2-ol;
compound I-6 1-[2-[2-chloro-4-(4-chlorophenoxy)phenyl]-2-methoxy-pent-3-ynyl]-1,2,4-triazole;
compound I-7 2-[4-(4-chlorophenoxy)-2-(trifluoromethyl)phenyl]-1-(1,2,4-triazol-1-yl)butan-2-ol;
compound I-8 1-[2-[2-chloro-4-(4-chlorophenoxy)phenyl]-2-cyclopropyl-2-methoxyethyl]-1,2,4-triazole;
compound I-9 1-[2-[4-(4-chlorophenoxy)-2-(trifluoromethyl)phenyl]-2-methoxy-propyl]-1,2,4-triazole;
compound I-10 2-[2-chloro-4-(4-chlorophenoxy)phenyl]-3,3-dimethyl-1-(1,2,4-triazol-1-yl)butan-2-ol,
compound I-11 1-[2-[4-(4-chlorophenoxy)-2-(trifluoromethyl)phenyl]-2-cyclopropyl-2-methoxy-ethyl]-1,2,4-triazole;
compound I-12 2-[2-trifluoromethyl-4-(4-chlorophenoxy)phenyl]-1-methoxy-3-(1,2,4-triazol-1-yl)propan-2-ol;
compound I-13 1-[2-[4-(4-chlorophenoxy)-2-(trifluoromethyl)phenyl]-2-methoxy-butyl]1,2,4-triazole;
compound I-14 2-[4-(4-chlorophenoxy)-2-(trifluoromethyl)phenyl]-1-(1,2,4-triazol-1-yl)pent-3-yn-2-ol;
compound I-15 1-[2-[4-(4-chlorophenoxy)-2-(trifluoromethyl)phenyl]-2-methoxy-pent-3-ynyl]-1,2,4-triazole;
compound I-16 2-[4-(4-chlorophenoxy)-2-(trifluoromethyl)phenyl]-1-(1,2,4-triazol-1-yl)but-3-yn-2-ol;
compound I-17 2-[2-chloro-4-(4-chlorophenoxy)phenyl]-1-(1,2,4-triazol-1-yl)propan-2-ol;
compound I-18 2-[2-chloro-4-(4-fluorophenoxy)phenyl]-1-(1,2,4-triazol-1-yl)propan-2-ol;
compound I-19 2-[2-chloro-4-(4-chlorophenoxy)phenyl]-3-methyl-1-(1,2,4-triazol-1-yl)butan-2-ol;
compound I-20 1-[2-[2-chloro-4-(4-chlorophenoxy)phenyl]-2-methoxy-propyl]-1,2,4-triazole;
compound I-21 1-[2-[2-chloro-4-(4-chlorophenoxy)phenyl]-2-methoxy-butyl]-1,2,4-triazole;
compound I-22 1-[2-[2-chloro-4-(4-chlorophenoxy)phenyl]-2-methoxy-pentyl]-1,2,4-triazole;
compound I-23 2-[2-chloro-4-(4-chlorophenoxy)phenyl]-1,1,1-trifluoro-3-(1,2,4-triazol-1-yl)propan-2-ol;
compound I-24 2-[2-chloro-4-(4-chlorophenoxy)phenyl]-3-fluoro-1-(1,2,4-triazol-1-yl)butan-2-ol hydrochloride;
compound I-25 2-[2-chloro-4-(4-chlorophenoxy)phenyl]-1-(1,2,4-triazol-1-yl)pent-4-yn-2-ol;
compound I-26 2-[2-chloro-4-(4-chlorophenoxy)phenyl]-1-methoxy-3-(1,2,4-triazol-1-yl)propan-2-ol;
compound I-27 2-[2-chloro-4-(4-fluorophenoxy)phenyl]-1-methoxy-3-(1,2,4-triazol-1-yl)propan-2-ol;
compound I-28 2-[4-(4-chlorophenoxy)-2-(trifluoromethyl)phenyl]-1-(1,2,4-triazol-1-yl)pentan-2-ol;
compound I-29 2-[4-(4-fluorophenoxy)-2-(trifluoromethyl)phenyl]-1-(1,2,4-triazol-1-yl)propan-2-ol;
compound I-30 2-[2-chloro-4-(4-chlorophenoxy)phenyl]-1-(1,2,4-triazol-1-yl)butan-2-ol; and
compound I-31 2-[2-chloro-4-(4-chlorophenoxy)phenyl]-1-(1,2,4-triazol-1-yl)pentan-2-ol.

2. The method according to claim 1, wherein the triazole is I-1.

3. The method of claim 1, wherein the triazole is I-2.

4. The method of claim 1, wherein the triazole is I-3.

5. The method of claim 1, wherein the triazole is I-4.

6. The method of claim 1, wherein the triazole is I-5.

7. The method of any one of claims 1 to 6, wherein, wherein the cultivated plant shows at least one of the properties: herbicide tolerance, insecticide resistance, fungicidal resistance or viral resistance or bacterial resistance, stress tolerance, yield increase, maturation alteration, content modification of chemicals present in the cultivated plant compared to the corresponding wild-type plant, modified nutrient uptake, antibiotic resistance and male sterility.

8. The method according to claims 1 to 6, wherein, wherein the cultivated plant shows at least one of the properties: yield increase, herbicide tolerance, insecticide resistance, fungicidal resistance or viral resistance or bacterial resistance, maturation alteration, content modification of chemicals present in the cultivated plant compared to the corresponding wild-type plant.

9. The method of any one of claims 1 to 6, wherein the plant is a plant, which is tolerant to the action of herbicides.

10. The method of any one of claims 1 to 6, wherein the plant is a plant, which is tolerant to the action of glyphosate.

11. The method of any one of claims 1 to 6, wherein the plant is a plant, which is tolerant to the action of glufosinate.

12. The method of any one of claims 1 to 6, wherein the plant is a plant, which is tolerant to the action of imidazolinone-herbidicides.

13. The method of any one of claims 1 to 6, wherein the plant is a plant, which is tolerant to the action of dicamba.

14. The method of any one of claims 1 to 6, wherein the plant is a plant, which is capable of synthesizing one or more selectively acting toxins from the genus of Bacillus.

15. The method of any one of claims 1 to 6, wherein the plant is a plant, which is capable of synthesizing one or more selectively acting toxins from Bacillus thuriginiensis.

16. The method of any one of claims 1 to 6, wherein the plant is a plant, which is capable of synthesizing one or more selectively acting delta.-endotoxins toxins from Bacillus thuriginiensis.

17. The method of any one of claims 1 to 6, wherein the pesticide is applied to the propagation material of the cultivated plant.

18. The method of any one of claims 1 to 6, wherein the treatment(s) are carried by the application of at least one pesticide to the plant with at least one modification or their habitat.

19. Seed of a cultivated plant according to any of claims 7 to 18 with at least one modification treated with a triazole fungicide as defined in any one of claims 1 to 6.
